(19) Europäisches Patentamt
European Patent Office
Office européen des brevets

(11) EP 3 825 948 A1

(12) EUROPEAN PATENT APPLICATION
published in accordance with Art. 153(4) EPC

(43) Date of publication:
26.05.2021 Bulletin 2021/21

(51) Int Cl.:
G06Q 40/08 (2012.01)     A01K 61/90 (2017.01)

(21) Application number: 19838840.7

(86) International application number:
PCT/JP2019/028040

(22) Date of filing: 17.07.2019

(87) International publication number:
WO 2020/017542 (23.01.2020 Gazette 2020/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 20.07.2018  JP 2018136299

(71) Applicant: Umitron Pte. Ltd.
20 Collyer Quay, 049319 (SG)

(72) Inventors:
• FUJIWARA, Ken
  Tokyo 107-0052 (JP)
• YAMADA, Masahiko
  Singapore 049319 (SG)

(74) Representative: Betten & Resch
Patent- und Rechtsanwälte PartGmbB
Maximiliansplatz 14
80333 München (DE)

(54) ASSET VALUE OUTPUT DEVICE, INSURANCE INFORMATION OUTPUT DEVICE, FINANCE-RELATED INFORMATION OUTPUT DEVICE, DAMAGE OUTPUT DEVICE, INFORMATION PROCESSING METHOD, AND PROGRAM

(57)     In order to solve a conventional problem that it is not easy to acquire an asset value of an aquatic organism group including at least two culture targets, an asset value output apparatus includes: an aquatic organism group information accepting unit that accepts aquatic organism group information containing one or at least two pieces of information out of food information regarding food given to an aquatic organism group including at least two culture targets, and size information regarding a size of the culture targets; an asset value acquiring unit that acquires an asset value of the aquatic organism group, using the aquatic organism group information; and an asset value output unit that outputs the asset value. Accordingly, it is easy to acquire an asset value of an aquatic organism group including at least two culture targets.

FIG.3

EP 3 825 948 A1

**Description**

Technical Field

The present invention relates to an asset value output apparatus and the like for calculating an asset value of an aquatic organism group including at least two culture targets.

Background Art

Conventionally, there asset based lending support systems for supporting information management and evaluation of personal properties such as livestock products changing from day to day (see Patent Document 1, for example).

Citation List

Patent Document

Patent Document 1: JP 2009-122884A

Summary of Invention

Technical Problem

However, such conventional techniques support personal estate evaluation of livestock products that are cultured on the ground, and thus whose number and situation are easy to see. That is to say, according to the conventional techniques, it is not easy to acquire an asset value of an aquatic organism group including at least two culture targets.
Furthermore, according to the conventional techniques, each personal estate is identified and managed, by attaching an information storage identifier such as an IC tag or barcode to the personal estate, and reading the information storage identifier with a terminal having the reading function.
However, according to the conventional techniques, food information regarding food given to aquatic organism groups and size information regarding the size of aquatic organisms cannot be acquired, and thus it is not easy to acquire an asset value of an aquatic organism group including at least two culture targets.

Solution to Problem

A first aspect of the present invention is directed to an asset value output apparatus including: an aquatic organism group information accepting unit that accepts aquatic organism group information containing one or at least two pieces of information out of food information regarding food given to an aquatic organism group including at least two culture targets, and size information regarding a size of the culture targets; an asset value acquiring unit that acquires an asset value of the aquatic organism group, using the aquatic organism group information; and an asset value output unit that outputs the asset value.
With this configuration, it is easy to acquire an asset value of an aquatic organism group including at least two culture targets.
Furthermore, a second aspect of the present invention is directed to the asset value output apparatus according to the first aspect, wherein the asset value acquiring unit acquires a larger asset value in accordance with an increase in the amount of food indicated by the food information, the food information being information regarding the amount of food, or acquires a larger asset value in accordance with an increase in the size indicated by the size information.
With this configuration, it is easy to acquire an asset value of an aquatic organism group including at least two culture targets.
Furthermore, a third aspect of the present invention is directed to the asset value output apparatus according to the first or second aspect, wherein the aquatic organism group information contains the size information, the asset value output apparatus further comprises an image analysis unit that analyzes an image acquired from an aquatic organism group, thereby acquiring size information regarding a size of culture targets, and the aquatic organism group information accepted by the aquatic organism group information accepting unit contains the size information acquired by the image analysis unit.
With this configuration, it is easy to acquire an asset value of an aquatic organism group including at least two culture targets, using size information of culture targets, obtained from an analysis result of an image captured by a camera.
Furthermore, a fourth aspect of the present invention is directed to the asset value output apparatus according to the third aspect, wherein the image analysis unit includes a size information acquiring part that detects at least two culture targets from one or at least two images obtained by capturing images of an aquatic organism group using a camera, acquires sizes of the at least two culture targets, and acquires size information that is a representative value of the at least two sizes.

With this configuration, it is easy to acquire an asset value of an aquatic organism group including at least two culture targets, using size information of culture targets, obtained from an analysis result of an image captured by a camera.

Furthermore, a fifth aspect of the present invention is directed to the asset value output apparatus according to the first or second aspect, further including: an image analysis unit that analyzes an image obtained by capturing an image of an aquatic organism group using a camera, thereby acquiring type information indicating the type of culture targets, wherein the aquatic organism group information accepted by the aquatic organism group information accepting unit contains the type information acquired by the image analysis unit.

With this configuration, it is easy to acquire an asset value of an aquatic organism group including at least two culture targets, using size information of culture targets, obtained from an analysis result of an image captured by a camera.

Furthermore, a sixth aspect of the present invention is directed to the asset value output apparatus according to any one of the first to fifth aspects, wherein the aquatic organism group information contains the food information and the size information, and the asset value acquiring unit includes: a cost approach part that acquires a larger first asset value in accordance with an increase in the amount of food indicated by the food information, the food information being information regarding the amount of food; and a market approach part that acquires a larger second asset value in accordance with an increase in the size indicated by the size information, and acquires at least two asset values, and the asset value output unit outputs at least two asset values including the first asset value and the second asset value, or a representative value of the at least two asset values.

With this configuration, it is easy to acquire an asset value of an aquatic organism group including at least two culture targets, using food information and size information.

Furthermore, a seventh aspect of the present invention is directed to the asset value output apparatus according to the sixth aspect, wherein the asset value output unit outputs a largest, smallest, or average asset value, of the at least two asset values.

With this configuration, it is possible to properly output an asset value of an aquatic organism group including at least two culture targets, using food information and size information.

Furthermore, an eighth aspect of the present invention is directed to the asset value output apparatus according to any one of the first to seventh aspects, wherein the aquatic organism group information accepting unit accepts aquatic organism group information of each of at least two enclosures, the asset value acquiring unit acquires an asset value of an aquatic organism group of each of at least two enclosures, and the asset value output unit outputs the asset value of each of at least two enclosures.

With this configuration, it is possible to properly output an asset value of each enclosure.

Furthermore, a ninth aspect of the present invention is directed to an insurance information output apparatus including: an insurance information acquiring unit that acquires insurance information regarding insurance, using the asset value output by the asset value output apparatus according to any one of the first to eighth aspects; and an insurance information output unit that outputs the insurance information.

With this configuration, it is possible to acquire insurance information, using an asset value.

Furthermore, a tenth aspect of the present invention is directed to the insurance information output apparatus according to the ninth aspect, further including: an aquaculturist information storage unit in which aquaculturist information regarding an aquaculturist of an aquatic organism group is stored, wherein the insurance information acquiring unit acquires insurance information using the asset value and the aquaculturist information.

With this configuration, it is possible to acquire insurance information, using an asset value and aquaculturist information.

Furthermore, an eleventh aspect of the present invention is directed to the insurance information output apparatus according to the tenth aspect, wherein the insurance information acquiring unit includes: a rank acquiring part that acquires an aquaculturist rank, using the aquaculturist information; and an insurance information acquiring part that acquires insurance information using the asset value and the rank.

With this configuration, it is possible to acquire proper insurance information, based on the aquaculturist rank.

Furthermore, a twelfth aspect of the present invention is directed to the insurance information output apparatus according to the ninth or tenth aspect, further including: a risk factor information storage unit in which one or more pieces of risk factor information are stored, the risk factor information being a factor that increases or decreases a risk that a state in which insurance money is paid out for an aquatic organism group arises, wherein the insurance information acquiring unit acquires insurance information, also using the one or more pieces of risk factor information.

With this configuration, it is possible to acquire proper insurance information, based on the risk factor.

Furthermore, a thirteenth aspect of the present invention is directed to the insurance information output apparatus according to the eleventh aspect, wherein the one or more pieces of risk factor information contain one or more pieces of information out of nature information regarding nature in a culture farm, an attribute value of an aquatic organism group, surrounding environment information regarding a surrounding environment, operation information regarding an operation by an aquaculturist, and facilities information regarding facilities for use in culturing.

With this configuration, it is possible to acquire proper insurance information, based on the risk factor.

Furthermore, a fourteenth aspect of the present invention is directed to a finance related information output apparatus including: an asset value storage unit in which an asset value of an aquatic organism group is stored in association with an aquaculturist identifier for identifying an aquaculturist or an enclosure identifier for identifying an enclosure; a finance related information acquiring unit that acquires finance related information regarding finance, using the asset value stored in the asset value storage unit; and a finance related information output unit that outputs the finance related information.

With this configuration, it is possible to acquire, for example, finance related information such as insurance information and loan amount information, using an asset value of an aquatic organism group including at least two culture targets.

Furthermore, a fifteenth aspect of the present invention is directed to the finance related information output apparatus according to the fourteenth aspect, further including: an aquaculturist information storage unit in which aquaculturist information regarding an aquaculturist of an aquatic organism group is stored, wherein the finance related information acquiring unit acquires finance related information, using the asset value and the aquaculturist information.

With this configuration, it is possible to acquire, for example, finance related information such as insurance information and loan amount information, using an asset value of an aquatic organism group including at least two culture targets and aquaculturist information.

Furthermore, a sixteenth aspect of the present invention is directed to the finance related information output apparatus according to the fourteenth or fifteenth aspect, further including: a risk factor information storage unit in which one or more pieces of risk factor information are stored, the risk factor information being a factor that increases or decreases a risk that a state in which insurance money is paid out for an aquatic organism group arises, wherein the finance related information acquiring unit acquires insurance information, also using the one or more pieces of risk factor information.

With this configuration, it is possible to acquire, for example, finance related information such as insurance information and loan amount information, using an asset value of an aquatic organism group including at least two culture targets and risk factor information.

Furthermore, a seventeenth aspect of the present invention is directed to a damage amount output apparatus including: an aquaculturist information storage unit in which one or more pieces of aquaculturist information containing an aquaculturist identifier for identifying an aquaculturist or an enclosure identifier for identifying an enclosure, and scale information for specifying a scale of an enclosure are stored, the aquaculturist information being information regarding an aquaculturist of an aquatic organism group; a reimbursement unit price storage unit in which reimbursement unit price information for specifying a damage amount per unit amount of an enclosure is stored; an instruction accepting unit that accepts a damage amount calculation instruction containing an aquaculturist identifier or an enclosure identifier; a scale acquiring unit that acquires scale information paired with the aquaculturist identifier or the enclosure identifier contained in the damage amount calculation instruction, from the aquaculturist information storage unit; a damage amount acquiring unit that acquires a damage amount of the aquaculturist identified with the aquaculturist identifier or the enclosure identified with the enclosure identifier contained in the damage amount calculation instruction, using the reimbursement unit price information and the scale information acquired by the scale acquiring unit; and a damage amount output unit that outputs the damage amount acquired by the damage amount acquiring unit.

With this configuration, it is possible to calculate a damage amount of an enclosure in which a damage has occurred, using scale information of an enclosure and a reimbursement unit price.

Furthermore, an eighteenth aspect of the present invention is directed to the damage amount output apparatus according to the seventeenth aspect, wherein one or more pieces of unit price management information containing a factor condition that is a condition regarding risk factor information, and reimbursement unit price information are stored in the reimbursement unit price storage unit, the damage amount output apparatus further comprises: a risk factor accepting unit that accepts one or more pieces of risk factor information; and a reimbursement unit price acquiring unit that acquires reimbursement unit price information paired with a factor condition that matches the one or more pieces of risk factor information accepted by the risk factor accepting unit, and the reimbursement unit price information in the reimbursement unit price storage unit is the reimbursement unit price information acquired by the reimbursement unit price acquiring unit.

With this configuration, it is possible to automatically acquire a reimbursement unit price.

Furthermore, a nineteenth aspect of the present invention is directed to the damage amount output apparatus according to the seventeenth or eighteenth aspect, further including: an enclosure image storage unit in which one or more enclosure images obtained by capturing images of an enclosure are stored; and a presence determining unit that determines whether or not there is an enclosure, using one or more enclosure images, wherein the damage amount output apparatus performs processing that differs according to a determination result of the presence determining unit.

With this configuration, it is possible to determine whether or not there is an enclosure.

Furthermore, a twentieth aspect of the present invention is directed to the damage amount output apparatus according to the seventeenth or eighteenth aspect, further including: an operation determining unit that determines whether or not an operation on an enclosure is performed by an aquaculturist, wherein the damage amount output apparatus performs processing that differs according to a determination result of the presence determining unit.

With this configuration, it is possible to determine whether or not an operation on an enclosure is performed by an aquaculturist.

Furthermore, a twenty-first aspect of the present invention is directed to the damage amount output apparatus according to the twentieth aspect, wherein the operation determining unit determines whether or not an operation on an enclosure is performed by an aquaculturist, using an image obtained by capturing an image of the enclosure.

With this configuration, it is possible to determine whether or not an operation on an enclosure is performed by an aquaculturist, using one or more enclosure images.

Furthermore, a twenty-second aspect of the present invention is directed to the damage amount output apparatus according to the twentieth aspect, further including: a positional information receiving unit that receives one or more pieces of positional information corresponding to an aquaculturist, wherein the operation determining unit determines whether or not an operation on an enclosure is performed by an aquaculturist, using the one or more pieces of positional information.

With this configuration, it is possible to determine whether or not an operation on an enclosure is performed by an aquaculturist, using one or more pieces of positional information corresponding to an aquaculturist.

Furthermore, a twenty-third aspect of the present invention is directed to the damage amount output apparatus according to any one of the seventeenth to twentieth aspects, further including: a damage occurrence determining unit that determines whether or not a damage has occurred in an enclosure, wherein the damage amount output unit outputs the damage amount only in a case in which the damage occurrence determining unit determines that a damage has occurred.

With this configuration, it is possible to determine whether or not a damage has occurred in an enclosure.

Furthermore, a twenty-fourth aspect of the present invention is directed to the damage amount output apparatus according to the twenty-third aspect, wherein the damage occurrence determining unit determines whether or not a damage has occurred in an enclosure, using one or more images obtained by capturing images of the enclosure.

With this configuration, it is possible to determine whether or not a damage has occurred in an enclosure, using one or more enclosure images.

Furthermore, a twenty-fifth aspect of the present invention is directed to the damage amount output apparatus according to the twenty-third aspect, further including: an environmental information accepting unit that accepts environmental information regarding environment, wherein the damage occurrence determining unit determines whether or not a damage has occurred in an enclosure, using the environmental information.

With this configuration, it is possible to determine whether or not a damage has occurred in an enclosure, using environmental information.

Advantageous Effects of Invention

With the asset value output apparatus according to the present invention, it is easy to acquire an asset value of an aquatic organism group including at least two culture targets.

Brief Description of Drawings

FIG. 1 is a conceptual diagram of an information system A in Embodiment 1.
FIG. 2 is a block diagram of the information system A in the embodiment.
FIG. 3 is a block diagram of an asset value output apparatus 1 constituting the information system A in the embodiment.
FIG. 4 shows an example of size information that is acquired by a size information acquiring part 1311 in the embodiment.
FIG. 5 is a flowchart illustrating an operation example of the asset value output apparatus 1 in the embodiment.
FIG. 6 is a flowchart illustrating an example of enclosure asset value acquiring processing in the embodiment.
FIG. 7 is a flowchart illustrating an example of size information, etc. acquiring processing in the embodiment.

FIG. 8 is a flowchart illustrating an operation example of a feeder 2 in the embodiment.

FIG. 9 shows an aquaculturist information management table in the embodiment.

FIG. 10 shows a feed cost proportion management table in the embodiment.

FIG. 11 shows a target market price management table in the embodiment.

FIG. 12 shows a feeding information management table in the embodiment.

FIG. 13 shows a culture target information management table in the embodiment.

FIG. 14 is a diagram showing an output example in the embodiment.

FIG. 15 is a conceptual diagram of an information system B in Embodiment 2.

FIG. 16 is a block diagram of an insurance information output apparatus 5 constituting the information system B in the embodiment.

FIG. 17 is a flowchart illustrating an operation example of the insurance information output apparatus 5 in the embodiment.

FIG. 18 shows an aquaculturist information management table in the embodiment.

FIG. 19 shows a risk factor information management table in the embodiment.

FIG. 20 shows an asset insurance management table in the embodiment.

FIG. 21 shows an aquaculturist rank correction table in the embodiment.

FIG. 22 shows a risk rank correction table in the embodiment.

FIG. 23 is a conceptual diagram of an information system C in Embodiment 3.

FIG. 24 is a block diagram of a finance related information output apparatus 6 constituting the information system C in the embodiment.

FIG. 25 is a flowchart illustrating an operation example of the finance related information output apparatus 6 in the embodiment.

FIG. 26 shows an asset finance related information management table in the embodiment.

FIG. 27 shows an example of an aquaculturist rank correction table in the embodiment.

FIG. 28 shows an example of a risk rank correction table in the embodiment.

FIG. 29 is a block diagram of a damage amount output apparatus 7 in Embodiment 4.

FIG. 30 is a flowchart illustrating a first operation example of the damage amount output apparatus 7 in the embodiment.

FIG. 31 is a flowchart illustrating a second operation example of the damage amount output apparatus 7 in the embodiment.

FIG. 32 is a flowchart illustrating an example of enclosure presence determination processing in the embodiment.

FIG. 33 is a flowchart illustrating an example of operation execution determination processing in the embodiment.

FIG. 34 is a flowchart illustrating an example of damage occurrence determination processing in the embodiment.

FIG. 35 is a flowchart illustrating an example of damage amount acquiring processing in the embodiment.

FIG. 36 shows an example of a unit price management table in the embodiment.

FIG. 37 is a schematic view of a computer system in the foregoing embodiments.

FIG. 38 is a block diagram of the computer system in the embodiments.

Description of Embodiment

Hereinafter, embodiments of an asset value output apparatus and the like will be described with reference to the drawings. It should be noted that constituent elements denoted by the same reference numerals in the embodiments perform similar operations, and thus a description thereof may not be repeated.

Embodiment 1

In this embodiment, for example, an information system including an asset value output apparatus that calculates an asset value of an aquatic organism group, using one or more pieces of information out of food information regarding food given to aquatic organisms such as fish and size information of the fish will be described. The aquatic organisms are culture targets in water, and are, for example, culture targets that move in water. The aquatic organisms are, for example, fish, octopuses, squids, shrimps, dolphins, or the like. The aquatic organisms may also be considered as including those that do not move in water, such as kelp and seaweed. The aquatic organisms may also be considered as including shellfish.

Furthermore, in this embodiment, an information system including an asset value output apparatus that acquires size information regarding aquatic organisms from an image of the aquatic organisms acquired using a camera, sonar, or the like, and calculates an asset value of an aquatic organism group using the size information will be described.

Furthermore, in this embodiment, an information system including an asset value output apparatus that samples aquatic organisms from an image of an aquatic organism group acquired using a camera, sonar, or the like, acquires a representative value of the size information, and calculates an asset value of the aquatic organism group using the representative value will be described.

Furthermore, in this embodiment, an information system including an asset value output apparatus that calculates an asset value through at least two algorithms including a cost approach and a market approach will be described. The cost approach is a method for calculating an asset value based on the cost of culturing. The market approach is a method for calculating an asset value based on the value of an aquatic organism on the market.

Furthermore, in this embodiment, an information system including an asset value output apparatus that calculates asset values of one or at least two enclosures will be described.

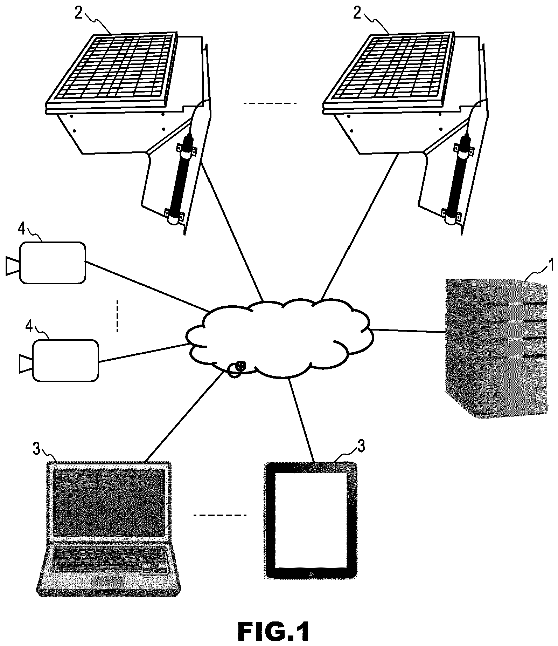

FIG. 1 is a conceptual diagram of an information system A in this embodiment. The information system A includes an asset value output apparatus 1, one or at least two feeders 2, one or at least two user terminals 3, and one or at least two cameras 4.

The asset value output apparatus 1 is an apparatus that outputs an asset value of an aquatic organism group. The asset value output apparatus 1 is typically an apparatus that can communicate with the one or more feeders 2, the one or more user terminals 3, and the one or more cameras 4. The asset value output apparatus 1 is, for example, a server apparatus such as a cloud server or an ASP server. Note that the asset value output apparatus 1 may also be a stand-alone apparatus.

The feeders 2 are apparatuses for giving food to aquatic organism groups. The feeders 2 are, for example, apparatuses that transmit later-described food information to the asset value output apparatus 1.

The user terminals 3 are terminals that are used by users. The users are, for example, aquaculturists of aquatic organisms such as fish, other staff members of an organization to which the aquaculturists belong, loan officers who finance the aquaculturists, or the like, and there is no limitation on the role thereof. There is no limitation on the job type of other staff members. The terminals are mobile terminals such as smartphones or tablet devices, desktop PCs, or the like, and there is no limitation on the location or type thereof. The culturing may also be said to be farming. The aquaculturists may also be said to be farmers.

The cameras 4 acquire images by capturing images of aquatic organism groups. The images are preferably moving images, but may also be still images. It is preferable that the cameras 4 have a communication function, and transmit images to the asset value output apparatus 1 or/and the user terminals 3. It is preferable that enclosure identifiers are stored in the cameras 4, and are transmitted together with images. Also, it is preferable that camera identifiers are stored in the cameras 4, and are transmitted together with images. In this case, it is preferable that the camera identifiers also function as information for identifying enclosures.

There is no limitation on the timing at which the cameras 4 transmit images and the like. For example, the cameras 4 may always transmit images and the like. It is also possible that the cameras transmit images and the like only when a transmission request is received. In this case, the cameras 4 have the function of receiving transmission requests and the like.

Furthermore, it is preferable that one or at least two cameras 4 are installed in each enclosure. It is preferable that the cameras 4 are installed in water, but may also be installed at locations other than those in water, such as positions at which images can be captured from above the enclosures. The enclosures are facilities for culturing aquatic organisms such as fish. There is no limitation on the type of the cameras 4, but preferable examples thereof include 360-degree cameras, wide-area cameras, and stereo cameras. The cameras 4 may also be distance cameras. A stereo camera is a camera system in which at least two cameras are synchronized. That is to say, a stereo camera is a camera capable of simultaneously capturing images of an object from multiple different directions, thereby recording information in the depth direction as well. Sonar (an ultrasonic device) may also be used to acquire images instead of the cameras 4. The sonar is, for example, imaging sonar, and is a known technology (see the Internet URL http-//www.kwk.co.jp/marine/products/sonar.html, for example).

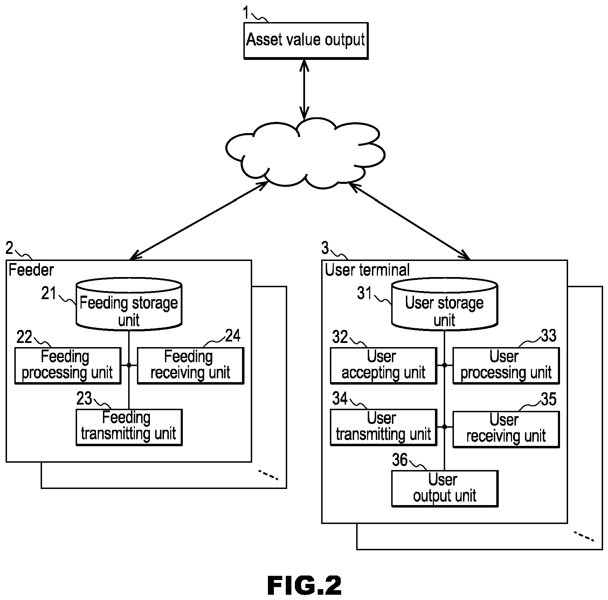

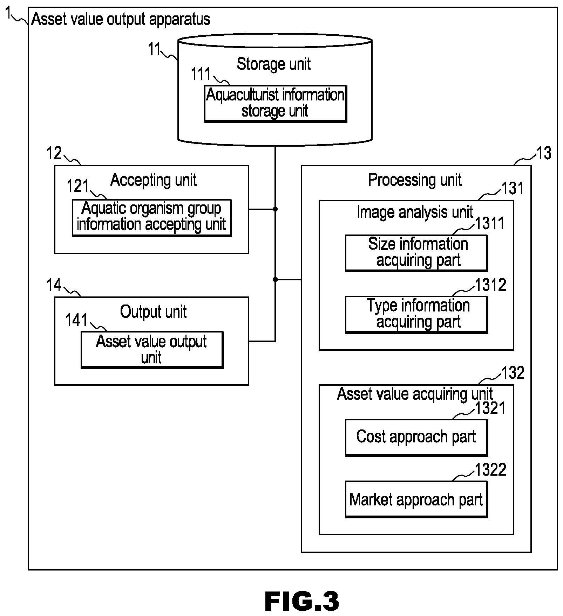

FIG. 2 is a block diagram of the information system A in this embodiment. FIG. 3 is a block diagram of the asset value output apparatus 1 constituting the information system A.

The asset value output apparatus 1 includes a storage unit 11, an accepting unit 12, a processing unit 13, and an output unit 14. The storage unit 11 includes an aquaculturist information storage unit 111. The accepting unit 12 includes an aquatic organism group information accepting unit 121. The processing unit 13 includes an image analysis unit 131 and an asset value acquiring unit 132. The image analysis unit 131 includes a size information acquiring part 1311 and a type information acquiring part 1312. The asset value acquiring unit 132 includes a cost approach part 1321 and a market approach part 1322. The output unit 14 includes an asset value output unit 141.

Each feeder 2 includes a feeding storage unit 21, a feeding processing unit 22, a feeding transmitting unit 23, and a feeding receiving unit 24.

Each user terminal 3 includes a user storage unit 31, a user accepting unit 32, a user processing unit 33, a user transmitting unit 34, a user receiving unit 35, and a user output unit 36.

Various types of information are stored in the storage unit 11 constituting the asset value output apparatus 1. The various types of information are, for example, aquaculturist information, various later-described operation expressions, and various later-described correspondence tables.

The operation expressions are, for example, an operation expression for calculating a later-described feeding efficiency, an operation expression for calculating a later-described uneaten food amount reduction ratio, an operation expression for calculating a later-described actual thickening factor, an operation expression for calculating a later-described feed cost, an operation expression for calculating a later-described market value, or the like.

The correspondence tables are, for example, a later-described feed cost proportion management table, a later-described target market price management table, a later-described feeding information management table, and a correspondence table between the size information (e.g., fork length, total length, or body height) and the weight.

One or at least two pieces of aquaculturist information are stored in the aquaculturist information storage unit 111. The aquaculturist information is information regarding an aquaculturist of an aquatic organism group.

The aquaculturist information contains, for example, an aquaculturist identifier and an enclosure identifier. The aquaculturist identifier is information for identifying an aquaculturist. The aquaculturist identifier is, for example, an ID, an aquaculturist's name, a telephone number, an e-mail address, an IP address of a user terminal 3 that is used by the aquaculturist, or the like. The enclosure identifier is information for identifying an enclosure of the aquaculturist identified with the aquaculturist identifier. The enclosure identifier is, for example, an ID. The enclosure identifier may be considered as containing an aquaculturist identifier.

The aquaculturist information contains, for example, type information indicating culture targets of the aquaculturist. The type information indicates, for example, tuna, sea bream, oyster, wakame seaweed, or the like.

The aquaculturist information contains, for example, food information regarding food that is given by the aquaculturist to culture targets. The food information will be described later in detail.

The aquaculturist information may contain, for example, enclosure information regarding an enclosure, in association with an enclosure identifier. The enclosure information indicates, for example, the number of young fish placed in an enclosure, positional information indicating the position or the region of the enclosure, the number of dead fish indicating the number of fish that have died in the enclosure.

The accepting unit 12 accepts various types of instructions, information, and the like. The various types of instructions, information, and the like are, for example, later-described aquatic organism group information, food information, an asset value output instruction, an image, or the like. The asset value output instruction is an instruction to prompt output of the asset value. The asset value output instruction typically contains an aquaculturist identifier.

For example, the accepting unit 12 receives food information and the like from the feeders 2. The food information and the like are, for example, food information and an enclosure identifier. The food information and the like contain, for example, an aquaculturist identifier. The food information is, for example, the weight of food given, the weight of food estimated to have been eaten, the weight of food estimated to have not been eaten, feeding time, the number of feedings in a certain period of time (e.g., one day, one month, or one year), information indicating that food was given, or time information regarding the time at which food was given (e.g., 10:45, morning, daytime, etc.).

The weight of food estimated to have been eaten and the weight of food estimated to have not been eaten may be acquired by, for example, a later-described image analysis unit 131.

For example, the accepting unit 12 receives an image from the cameras 4. It is preferable that the accepting unit 12 receives an enclosure identifier together with the image. The accepting unit 12 may receive an aquaculturist identifier together with the image. It is preferable that the image that is received by the accepting unit 12 is a moving image having at least two images, but may also be a still image.

The accepting is typically receiving from an external apparatus via a wired or wireless communication line. The accepting may be realized by input made by a user using an input device such as a keyboard, a mouse, or a touch panel, or through processing such as later-described image processing. The accepting may be considered as a concept that encompasses accepting information read from a storage medium such as an optical disk, a magnetic disk, or a semiconductor memory.

The aquatic organism group information accepting unit 121 accepts aquatic organism group information. It is preferable that the aquatic organism group information accepting unit 121 accepts aquatic organism group information of each of at least two enclosures. For example, the aquatic organism group information accepting unit 121 accepts an enclosure identifier for identifying an enclosure and aquatic organism group information in association with each other. The aquatic organism group information accepting unit 121 reads, for example, the aquatic organism group information in the storage unit 11.

The aquatic organism group information accepting unit 121 may acquire aquatic organism group information through at least two different ways, such as receiving a portion of the information constituting the aquatic organism group information and reading a portion of the information from the storage unit 11.

The aquatic organism group information is information regarding a cultured aquatic organism group. The aquatic organism group is a group of at least two aquatic organisms.

The aquatic organism group information contains one or at least two pieces of information out of food information and size information. It is preferable that the aquatic organism group information contains food information and size information. It is preferable that the aquatic organism group information has supplier information regarding a seedling lot supplier, genetic information (DNA), and a rank when the safety of seedlings is ranked according to the breed variety.

For example, the aquatic organism group information accepting unit 121 receives the food information transmitted by the feeder 2, and accepts the size information acquired by the size information acquiring part 1311.

The food information is information regarding food given to an aquatic organism group including at least two culture targets. The food information is, for example, the feeding weight in a single feeding or in a certain period of time (one day, one month, or one year), the feeding weight per unit time (g/sec, g/min, or g/hour), the feeding time of a single feeding, the number of feedings in a certain period of time (e.g., one day, one month, or one year), the timing information regarding the feeding timing, or the like. The timing information is, for example, information indicating whether or not to perform feeding in the morning, information indicating whether or not to perform feeding in the daytime, information indicating whether or not to perform feeding in the evening, or the like. The food information is, for example, received from the feeder 2, or received from an external apparatus (not shown) that received the information from the feeder 2.

The food information may contain, for example, any one or more of food type information indicating the type of food, food content information indicating the content of food, and food property information indicating the physical properties of food. The food type information is, for example, information indicating any one of EP (sinking type, floating type), DP, MP, live food (fish species), and the like. The food type information may be, for example, information indicating the safety level of food.

Furthermore, the food content information indicates, for example, the amount of fish meal. The food content information indicates, for example, the presence or absence or amount of alternative proteins (microalgae, single cells, crustaceans, soybeans, etc.), the presence or absence or amount of amino acids, the presence or absence or amount of vitamins, the presence or absence or amount of minerals, or the like.

Furthermore, the food property information is information indicating one or more of the food size, the food viscosity, the food color, the food hardness, and the like.

Furthermore, the food information may indicate the feed price per unit weight and the feeding efficiency. The feeding efficiency is information regarding the efficiency when feeding is performed, and may be calculated, for example, by the operation expression "feeding efficiency (%) = 100 × increased body weight (wet weight) / amount of food eaten (dry weight)". The feeding efficiency may be calculated, for example, by the operation expression "actual feeding efficiency (%) = 100 × increased body weight (wet weight) / fed feed weight (dry weight)". The operation expression for calculating the feeding efficiency may also be another operation expression.

Furthermore, the food information contains, for example, one or more pieces of information out of the food type information indicating the food type, the food content information indicating the food content, the food property information indicating the physical properties of food, and the feed price per unit weight.

The size information is information regarding the size of culture targets. The size information is, for example, one or at least two pieces of information out of the fork length, the standard body length, the total length, the body height, the body width, and the weight of a fish. The size information is acquired, for example, through image processing by the size information acquiring part 1311. The total length is the length from the front end of the body to the rear end of the caudal fin. The fork length is the length from the tip of the maxilla to the outer edge of the central recess where the caudal fin bifurcates. The standard body length is the length from the tip of the maxilla to the base of the caudal fin. The body height is the vertical length from the back edge to the abdominal edge of the body. The body width is the length between the bases of the left and right pectoral fins.

The aquatic organism group information contains, for example, a feed cost proportion, an eaten food amount ratio, an uneaten food amount, an uneaten food amount reduction ratio, a market price, a thickening factor, an actual thickening factor, a feeding efficiency, type information, and a target rank. The feed cost proportion is the proportion of the feed cost relative to the total culturing cost. The eaten food amount ratio is information regarding a ratio of the amount of food that has been eaten relative to the fed food, and is calculated by the operation expression "eaten food amount ratio = eaten food amount / supplied food amount". The uneaten food amount is information regarding a ratio of the amount of food that has not been eaten relative to the fed food, and is calculated by the operation expression "uneaten food amount = supplied food amount - uneaten food amount". The uneaten food amount reduction ratio is information regarding a ratio between the uneaten food amounts at different two points in time, and is calculated by the operation expression "uneaten food amount reduction ratio = uneaten food amount A / uneaten food amount B (A and B represent two different points in time)". The market price is the value of culture targets on the market. The market price is typically the price unit weight. The thickening factor is the amount of food (e.g., kg) that is necessary for growth by a unit weight (e.g., 1 kg), and can be calculated by the operation expression "thickening factor = amount of food eaten (dry weight) / increased body weight (wet weight)" or the operation expression "actual thickening factor = fed feed weight (dry weight) / increased body weight (wet weight)". The thickening factor and the actual thickening factor mean that the smaller the factors, the smaller the amount of food that is necessary for growth.

The target rank is a rank regarding the health condition of culture targets. The target rank can be acquired, for example, using the fish color, the optical flow, the activity time, the cumulative movement distance, and the activity pattern. For example, the longer the activity time or the longer the cumulative movement distance, the higher the target rank.

The method for acquiring the rank using the fish color is, for example, as follows. For example, multiple pixel values (RGB values, etc.) in a region of a fish contained in an image are used. That is to say, a representative value (an average, a median, etc.) of multiple pixel values in a region of a fish is acquired, a threshold value (which is stored in the storage unit 11) as to whether or not the representative value is information indicating a disease is referred to, and, if the representative value is larger than the threshold value (e.g., if it has a strong yellow tint), it is determined that the fish has a disease and a low rank is acquired.

Furthermore, the method for acquiring the rank using the optical flow (kinetic momentum) is, for example, as follows. For example, a threshold value for determination of a kinetic momentum during normal swimming is stored in the storage unit 11, kinetic momentum information is acquired through the optical flow, and, if the kinetic momentum information is at most the threshold value or smaller than the threshold value, it is determined that the fish has a disease and a low rank is acquired.

In a similar manner, as for the activity time and the cumulative movement distance, a threshold value of a cumulative value per unit time (e.g., one day) acquired from swimming activity during normal swimming is stored in the storage unit 11, and, if the acquired value (activity time or cumulative movement distance) is at most the threshold value or smaller than the threshold value of the cumulative value, it is determined that the fish has a disease and a low rank is acquired.

Furthermore, as for the activity pattern, activity pattern information acquired from swimming activity during normal swimming is stored in the storage unit 11, and, if the similarity between the acquired activity pattern information and the stored activity pattern information is at most the threshold value or smaller than the threshold value, it is determined that the fish has a disease and a low rank is acquired.

The processing unit 13 performs various types of processing. The various types of processing are, for example, processes that are performed by the image analysis unit 131 and the asset value acquiring unit 132.

The image analysis unit 131 analyzes an image acquired from an aquatic organism group, thereby acquiring size information regarding the size of culture targets.

For example, the image analysis unit 131 analyzes one or at least two images obtained by capturing images of an aquatic organism group using a camera, thereby acquiring size information regarding the size of culture targets. It is preferable that these images are images transmitted by the camera 4 and received by the accepting unit 12. Note that the images may also be images acquired using unshown sonar. The images may also be images input by a user. The processing performed by the image analysis unit 131 to acquire size information will be described in detail in the description of the size information acquiring part 1311.

The image analysis unit 131 analyzes an image acquired from an aquatic organism group, thereby acquiring type information indicating the type of culture targets.

For example, the image analysis unit 131 analyzes one or at least two images obtained by capturing images of an aquatic organism group using a camera, thereby acquiring type information indicating the type of culture targets. Note that the images may also be images acquired using unshown sonar. The images may also be images input by a user. The processing performed by the image analysis unit 131 to acquire type information will be described in detail in the description of the type information acquiring part 1312.

It is also possible that the image analysis unit 131 analyzes one or at least two images acquired from an aquatic organism group, thereby acquiring the number of cultured aquatic organisms. The images are, for example, images acquired using the camera 4 or unshown sonar. The technique for acquiring the number of aquatic organisms using sonar is a known technique (see the Internet URL "http://www.suikei.co.jp/養殖マグロ：「養殖マグロ，「音 響カーテン」通過させ尾数正しく算出"）.

For example, it is also possible that the image analysis unit 131 analyzes one or at least two images obtained by capturing images of an aquatic organism group using the camera 4, thereby acquiring the number of cultured aquatic organisms.

For example, the image analysis unit 131 recognizes aquatic organisms from an image, and calculates the number of aquatic organisms recognized. The technique for recognizing an object in an image and the technique for acquiring the number of objects in an image are known techniques, and thus a detailed description thereof has been omitted. It is preferable that these images are images acquired by a 360-degree camera. It is preferable that the image analysis unit 131 acquires the number of aquatic organisms in each of at least two images, and takes, for example, the largest number as the number of aquatic organisms.

For example, the image analysis unit 131 may analyze an image, thereby acquiring the number of aquatic organisms that have sunk to the bottom of an enclosure. The number of such aquatic organisms is, for example, the number of dead fish.

The size information acquiring part 1311 detects at least two culture targets from one or at least two images acquired from an aquatic organism group, and acquires the sizes of the at least two culture targets.

It is preferable that the size information acquiring part 1311 acquires size information, which is a representative value of the sizes of the at least two culture targets. The representative value is, for example, an average or a median. Note that the representative value may also be the largest value or the like.

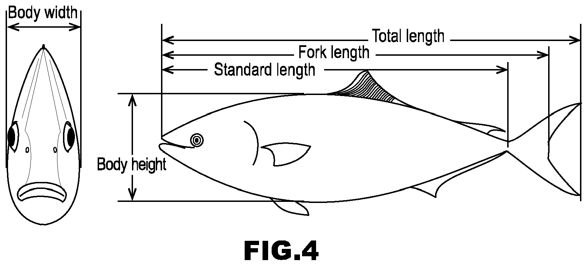

For example, the size information acquiring part 1311 detects an aquatic organism from one or at least two images, and acquires information indicating one or at least two of the width, the height, and the length of the detected aquatic organism. It is preferable that the size information acquiring part 1311 uses an image in the case in which it is detected that the aquatic organism is facing forward. The technique for detecting a specific object from an image is a known image recognition technique, and thus a description thereof has been omitted. Also, the technique for acquiring the size of an object in an image is a known technique, and thus a description thereof has been omitted. For example, the size information acquiring part 1311 acquires the fork length, the total length, the body height, and the body width of a fish from an image as shown in FIG. 4. Then, the size information acquiring part 1311 acquires weight using one or at least two types of the acquired size information. For example, the size information acquiring part 1311 calculates the weight, using an operation expression of an increasing function in which the fork length, the body height, and the body width are taken as parameters. This operation expression is stored in the storage unit 11. For example, the size information acquiring part 1311 acquires the size at each point of an object using a distance image or a stereo camera.

The type information acquiring part 1312 analyzes an image acquired from an aquatic organism group, thereby acquiring type information indicating the type of culture targets. The culture targets in this example are aquatic organisms. There is no limitation on the method for acquiring an image, and examples thereof include, as described above, a method of acquiring an image using the camera 4, a method of acquiring an image using sonar, and a method of acquiring an image by accepting it from a user.

For example, the type information acquiring part 1312 acquires type information through a machine learning algorithm. That is to say, for example, the type information acquiring part 1312 performs training with one or at least two images corresponding to each piece of type information, configures a learning module, and accumulates the learning module in the storage unit 11. In machine learning, in order to configure a learning module, for example, if an information group (an image or a vector in which features acquired from the image are taken as elements) that functions as input, and type information that is to be output are given as arguments to a machine learning function (e.g., fasttext, TinySVM, various randomForest functions, etc.), a learning module is configured.

Then, the type information acquiring part 1312 detects an aquatic organism from one or at least two images, extracts a region of the detected culture target, and applies the extracted partial image to a learning module through a machine learning algorithm, thereby acquiring type information. It will be appreciated that there is no limitation on the machine learning algorithm, and examples thereof include deep learning, SVM, decision tree, random forest, and the like. In machine learning, if an extracted partial image or a vector in which features acquired from the partial image are taken as elements, and a learning module are given as arguments to a machine learning function (e.g., fasttext, TinySVM, various randomForest functions, etc.), type information can be obtained.

In the case in which an SVM algorithm is used, the type information acquiring part 1312 configures vectors from one or at least two images corresponding to each piece of type information, performs training with a positive example vector and a negative example vector for each piece of type information, configures a learning module for each piece of type information, and accumulates the learning module in the storage unit 11. For example, for each piece of type information, a positive example vector is configured from an image corresponding to the type information, and a negative example vector is configured from an image corresponding to another type of information. Then, the type information acquiring part 1312 detects an aquatic organism from one or at least two images, extracts a region of the detected culture target, and applies the extracted partial image to a learning module for each piece of type information, thereby acquiring a score. Then, the type information acquiring part 1312 acquires type information corresponding to a learning module with the highest score.

For example, the type information acquiring part 1312 acquires type information, using a correspondence table. That is to say, for example, the type information acquiring part 1312 stores a correspondence table having at least two pieces of correspondence information each having a pair of type information and learning information, in the storage unit 11. The learning information is information obtained by vectorizing an image of a culture target of the type that matches the corresponding type information. Then, the type information acquiring part 1312 detects an aquatic organism from one or at least two images, extracts a region of the detected culture target, vectorizes the extracted partial image, and acquires type information paired with learning information (vector) that is the most approximate to the vector.

The asset value acquiring unit 132 acquires an asset value of the aquatic organism group, using the aquatic organism group information. That is to say, the asset value acquiring unit 132 acquires an asset value of an aquatic organism group, using one or at least two pieces of information out of the food information and the size information of culture targets. The aquatic organism group information is information accepted by the aquatic organism group information accepting unit 121.

It is preferable that the asset value acquiring unit 132 acquires a larger asset value in accordance with an increase in the amount of food indicated by the food information, the food information being information regarding the amount of food. The information regarding the amount of food is, for example, one or more pieces of information out of the feeding weight in a single feeding or in a certain period of time (one day, one month, or one year), the feeding weight per unit time (g/sec, g/min, or g/hour), the feeding time of a single feeding, and the number of feedings in a certain period of time (e.g., day, month, or year).

The asset value acquiring unit 132 acquires a larger asset value in accordance with an increase in the size indicated by the size information.

It is preferable that the asset value acquiring unit 132 acquires an asset value of an aquatic organism group of each of at least two enclosures.

The asset value is typically an amount of money, but may also be a rank or the like. The rank is the rank of assets, and there is no limitation on the number of classes and examples thereof include 5 grades, 10 grades, 100 grades, and the like.

It is preferable that the asset value acquiring unit 132 acquires an asset value, using one or more pieces of information out of a first asset value acquired by a later-described cost approach part 1321 and a second asset value acquired by a later-described market approach part 1322.

For example, the asset value acquiring unit 132 may acquire the largest, smallest, or average asset value, of at least two asset values including the first asset value and the second asset value. The largest asset value is an asset value that is to be output. For example, the asset value acquiring unit 132 may acquire an asset value that is a result of statistical processing performed on at least two asset values including the first asset value and the second asset value.

The cost approach part 1321 acquires a larger first asset value in accordance with an increase in the amount of food indicated by the food information, the food information being information regarding the amount of food. The cost approach part 1321 may acquire a first asset value also using the size information. The cost approach part 1321 typically acquires a large first asset value in the case in which the size information is information indicating a large size.

For example, the cost approach part 1321 calculates the feed cost that is necessary for raising of aquatic organisms, for example, using any of the following operation expressions (1) to (3). It is assumed that all operation expressions are stored in the storage unit 11, for example.

$$(1)\ \text{Feed cost} = \text{weight of aquatic organisms} \times \text{thickening factor or}$$
$$\text{actual thickening factor} \times \text{feed price per unit weight}$$

$$(2)\ \text{Feed cost} = \text{total amount of food supplied} \times \text{feed price per unit}$$
$$\text{weight}$$

$$(3)\ \text{Feed cost} = \text{feeding weight per unit time} \times \text{feeding time in single}$$
$$\text{feeding} \times \text{number of feedings} \times \text{feed price per unit weight}$$

It is assumed that the feed price per unit weight, the feed price per unit weight, the feed price per unit weight, and the like are stored in advance in the storage unit 11. The weight of aquatic organisms is a value acquired from the size information.

Furthermore, for example, the total raising cost per fish is calculated by the operation expression "total raising cost per fish = asset value per fish = feed cost / feed cost proportion". It is assumed that the feed cost proportion is the proportion of the feed cost relative to the total culturing cost, and, for example, is stored in advance in the storage unit 11. The feed cost proportion is, for example, 0.7, 0.6, or the like.

Furthermore, for example, the total raising cost per enclosure is calculated by the operation expression "total raising cost per enclosure = asset value per enclosure = total raising cost per fish × number of fish in enclosure". The total raising cost per enclosure is a first asset value per enclosure. The number of fish in an enclosure may be acquired by the image analysis unit 131 as described above, or stored in advance in the storage unit 11 in association with an enclosure identifier or an aquaculturist identifier. The number of fish in an enclosure may be calculated, for example, by "number of young fish stored in advance - number of dead fish".

Furthermore, a personal estate asset value (e.g., referred to as cultured fish assets) of one operating company is calculated by the operation expression "personal estate asset value of one operating company = sum of total raising costs of respective enclosures". The personal estate asset value of one operating company is a first asset value per operating company. That is to say, the cost approach part 1321 adds the total raising costs corresponding to one or more enclosure identifiers paired with an aquaculturist identifier of one aquaculturist, thereby calculating a first asset value per operating company.

The market approach part 1322 acquires a larger second asset value in accordance with an increase in the size indicated by the size information. The market approach part 1322 acquires a larger second asset value in accordance with an increase in the weight.

The market approach part 1322 may also use the food information. The size information is the information acquired by the size information acquiring part 1311, for example, but may be included in the aquatic organism group information accepted by the aquatic organism group information accepting unit 121.

For example, the market approach part 1322 calculates a market value per fish, using the operation expression "market value per fish = asset value per fish = weight of culture targets $\times$ market price". It is assumed that the market price per unit weight is stored in advance in the storage unit 11.

Furthermore, for example, the market approach part 1322 calculates a market value per enclosure, using the operation expression "market value per enclosure = asset value per enclosure = market value per fish $\times$ number of fish in enclosure". The market value per enclosure is a second asset value per enclosure.

Furthermore, for example, the market approach part 1322 calculates a personal estate value of one operating company, using the operation expression "personal estate value of one operating company = sum of market values of respective enclosures". The personal estate value of one operating company is a second asset value per operating company. That is to say, the market approach part 1322 adds market values corresponding to one or more enclosure identifiers paired with an aquaculturist identifier of one aquaculturist, thereby calculating a second asset value per operating company.

The output unit 14 outputs various types of information. The various types of information are, for example, an asset value, a first asset value, and a second asset value. The output is typically transmission to an external apparatus, but may be considered as a concept that also encompasses display on a display screen, projection using a projector, printing by a printer, output of sound, accumulation in a storage medium, delivery of a processing result to another processing apparatus or another program, and the like.

The asset value output unit 141 outputs the asset value acquired by the asset value acquiring unit 132. The asset value output unit 141 may output at least two asset values including the first asset value and the second asset value, or a representative value of the at least two asset values.

For example, the asset value output unit 141 outputs the largest, smallest, or average asset value, of at least two asset values including the first asset value and the second asset value.

It is preferable that the asset value output unit 141 outputs the asset value of each of at least two enclosures.

An enclosure identifier, a device identifier, type information, supplied food amount information, timing information, and the like are stored, for example, in the feeding storage unit 21 constituting the feeder 2. The type information that is stored indicates, for example, the type of culture targets (e.g., fish) cultured in an enclosure at which the feeder 2 is located. The supplied food amount information is preset information indicating the supplied food amount. The timing information is preset information regarding feeding timing. The timing information may be, for example, the same as the timing to acquire the remaining amount information described above. It will be appreciated that the preset information (information indicating the supplied food amount, information regarding the feeding timing, etc.) can be appropriately set. It is preferable that the feeder 2 can perform feeding in response to a manual operation at any timing.

The feeding processing unit 22 performs various types of processing. The feeding processing unit 22 performs processing for feeding when the timing indicated by the timing information is reached. The processing for feeding is, for example, processing that opens a feeding port of the feeder 2, and closes the port when food of the feed supply amount indicated by the feed supply amount information has been supplied. The processing for feeding is, for example, processing that takes out food of the feed supply amount indicated by the feed supply amount information from a container (not shown) containing food, and loads the food into an enclosure. There is no limitation on the processing for feeding, and examples thereof also include other processing.

For example, the feeding processing unit 22 acquires remaining amount information, using a remaining amount sensor. For example, the feeding processing unit 22 acquires a supplied food amount. For example, the feeding processing unit 22 acquires environmental information, using an environmental sensor.

The remaining amount information is information regarding the remaining amount of food. The remaining amount is the amount of food remaining in the feeder 2. The information regarding remaining amount is, for example, the remaining amount, but may also be the used amount. The used amount is the amount of food that has been loaded into an enclosure from the feeder 2. The used amount is, for example, a result obtained by subtracting the remaining amount from the predetermined amount. The predetermined amount is, for example, the amount of food that can be accommodated in the container included in the feeder 2 (hereinafter, this may be referred to as capacity). Furthermore, if the feeder 2 can measure the weight of food, the remaining amount may be obtained in the weight.

Furthermore, the environmental information is information regarding the environment. The environment is typically an environment in which culture targets such as fish are cultured. The environment is, for example, the environment inside an enclosure, but may be the environment of the place at which an enclosure is installed. The place at which an enclosure is installed is, as described above, for example, underwater such as in a sea, a lake and a river, or a pond on land, but it may be an environment in an area where a sea or the like is present. Alternatively, the environment may be considered to include not only such a local environment but also the environment of the whole earth.

The environmental information is, for example, values such as water temperature, salinity, dissolved oxygen amount, transparency, and flow rate, but there is no limitation on the type thereof, as long as it is a physical value, a chemical component, or the like that can be detected by an environmental sensor. The environmental information may be, for example, a value at the present time or an average in a predetermined period of time. The period of time is, for example, one year or three months, but there is no limitation on the length thereof. The period of time is, for example, a period of time up to the present time (e.g., the latest three months, the current year, etc.), but may be a certain period of time in the past (e.g., the three months until last month, the previous year, etc.). Furthermore, the environmental information may be, for example, any one of later-described one or more parameters.

The feeding transmitting unit 23 transmits various types of information. The various types of information are, for example, the remaining amount information acquired by the feeding processing unit 22, the supplied food amount information indicating the amount of food used, the environmental information acquired by the feeding processing unit 22, and the like. The feeding transmitting unit 23 typically transmits acquired information indicating the remaining amount and the like to the asset value output apparatus 1, but, for example, may transmit the information to other apparatuses such as the user terminal 3. For example, the feeding transmitting unit 23 may transmit the remaining amount information, the supplied food amount information, the environmental information, and the like, together with the enclosure identifier, the device identifier, the type information, and the timing information stored in the feeding storage unit 21.

For example, the feeding receiving unit 24 receives various instructions from the user terminals 3. The various instructions are, for example, instructions to transmit the remaining amount information, the environmental information, or the like.

For example, information such as a user identifier and a terminal identifier are stored in the user storage unit 31 constituting the user terminal 3. The user identifier is information for identifying a user. The user identifier is, for example, an address/name, a mobile phone number, an e-mail address, or the like, but may be an ID or any information with which the user can be identified. The terminal identifier is information for identifying the user terminal 3. The terminal identifier is, for example, an IP address, but may be an ID, may also be used as a user identifier, and may be any information with which the user terminal 3 can be identified.

The user accepting unit 32 accepts instructions, information, and the like from a user. The instructions, information, and the like are, for example, an asset value output instruction, or a later-described insurance information output instruction.

The user accepting unit 32 receives instructions, information, and the like via an input device such as a touch panel, a keyboard, and a mouse, but may receive them from another device.

The user processing unit 33 performs various types of processing. The various types of processing are, for example, processing that changes the structure of various types of information of the user receiving unit 35 into an information structure suitable for output, processing that changes the structure of instructions, information, and the like accepted by the user accepting unit 32 into an information structure suitable for transmission, or the like.

The user transmitting unit 34 transmits the instructions, information, and the like, to the asset value output apparatus 1. The instructions, information, and the like are, for example, an asset value output instruction. The user transmitting unit 34 performs transmission to a later-described insurance information output apparatus 5. The instructions, information, and the like are, for example, an insurance information output instruction.

For example, the user receiving unit 35 receives various types of information from the asset value output apparatus 1. The various types of information are, for example, asset values. For example, the user receiving unit 35 receives various types of information from a later-described insurance information output apparatus 5. The various types of information are, for example, later-described insurance information.

For example, the user output unit 36 outputs the various types of information received by the user receiving unit 35. The output by the user output unit 36 is typically output via an output device such as a display screen, but may also be, for example, accumulation in a storage medium, delivery of a processing result to another function or another program, or transmission to another apparatus.

The storage unit 11, the aquaculturist information storage unit 111, the feeding storage unit 21, and the user storage unit 31 are preferably non-volatile storage media, but can also be realized by volatile storage media.

There is no limitation on the procedure in which information is stored in the storage unit 11 and the like. For example, information may be stored in the storage unit 11 and the like via a storage medium, information transmitted via a communication line or the like may be stored in the storage unit 11 and the like, or information input via an input device may be stored in the storage unit 11 and the like.

The accepting unit 12, the aquatic organism group information accepting unit 121, the feeding receiving unit 24, and the user receiving unit 35 are typically realized by wireless or wired communication parts, but can also be realized by broadcast receiving parts.

The processing unit 13, the image analysis unit 131, the size information acquiring part 1311, the type information acquiring part 1312, the asset value acquiring unit 132, the cost approach part 1321, the market approach part 1322, the feeding processing unit 22, and the user processing unit 33 are typically realized by MPUs, memories, or the like. Typically, the processing procedure of the processing unit 13 and the like is realized by software, and the software is stored in a storage medium such as a ROM. Note that the processing procedure may be realized by hardware (dedicated circuits).

The output unit 14, the asset value output unit 141, the feeding transmitting unit 23, and the user transmitting unit 34 are typically realized by wireless or wired communication parts, but can also be realized by broadcasting parts.

The user accepting unit 32 may be realized by a device driver for an input part such as a numeric keypad or a keyboard, software for controlling a menu screen, or the like.

The user output unit 36 may be considered to include or to not include an output device such as a display screen or a speaker. The user output unit 36 may be realized by driver software for an output device, a combination of driver software for an output device and the output device, or the like.

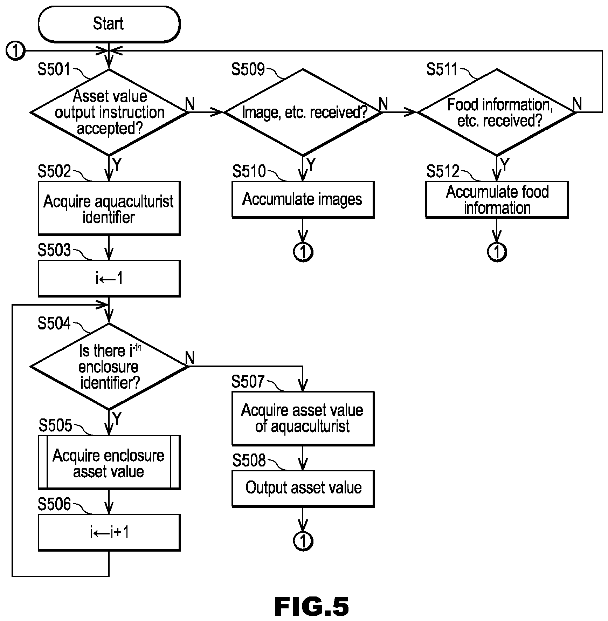

Next, an operation of the information system A will be described. First, an operation example of the asset value output apparatus 1 will be described with reference to the flowchart in FIG. 5.

(Step S501) The accepting unit 12 determines whether or not it has accepted an asset value output instruction. If it has accepted an asset value output instruction, the procedure advances to step S502, otherwise, the procedure advances to step S509. For example, the accepting unit 12 receives an asset value output instruction from the user terminal 3. The asset value output instruction may contain a portion of or the entire aquatic organism group information.

(Step S502) The processing unit 13 acquires an aquaculturist identifier contained in the asset value output instruction.

(Step S503) The processing unit 13 substitutes 1 for a counter i.

(Step S504) The processing unit 13 determines whether or not there is an i$^{-th}$ enclosure identifier paired with the aquaculturist identifier acquired in step S502, in the aquaculturist information storage unit 111. If there is an i$^{-th}$ enclosure identifier, the procedure advances to step S505, otherwise, the procedure advances to step S507.

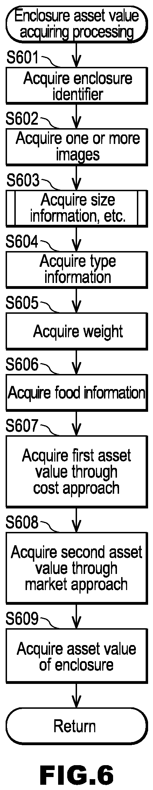

(Step S505) The processing unit 13 acquires an asset value of an aquatic organism group that is cultured in the enclosure identified with the i$^{-th}$ enclosure identifier. An example of the enclosure asset value acquiring processing will be described later with reference to the flowchart in FIG. 6.

(Step S506) The processing unit 13 increments the counter i by 1. The procedure returns to step S504.

(Step S507) The asset value acquiring unit 132 acquires an asset value of an aquatic organism group that is cultured by an aquaculturist identified with the aquaculturist identifier acquired in step S502, from the asset values of one or at least two enclosures. The asset value acquiring unit 132 typically acquires the total of the asset values of the enclosures, as an asset value of an aquatic organism group that is cultured by the aquaculturist.

(Step S508) The asset value output unit 141 outputs the asset value acquired in step S507. The procedure returns to step S501. The asset value output unit 141 may output the asset value in units of one or more enclosures acquired in step S505. The output is, for example, transmission of an asset value to the user terminal 3 from which an asset value output instruction was transmitted.

(Step S509) The accepting unit 12 determines whether or not it has received an image and the like from the camera 4. If it has received an image and the like, the procedure advances to step S510, otherwise, the procedure advances to step S511. The image and the like are, for example, an image and an enclosure identifier. The image and the like are, for example, an image, an enclosure identifier, and an aquaculturist identifier. The image and the like may contain, for example, a camera identifier for identifying the camera 4 that captured the image.

(Step S510) The processing unit 13 accumulates the image received in step S509 in the storage unit 11 in association with the corresponding enclosure identifier. The procedure returns to step S501.

(Step S511) The accepting unit 12 determines whether or not it has received food information and the like from the feeder 2. If it has received food information and the like, the procedure advances to step S512, otherwise, the procedure returns to step S501. The food information and the like are, for example, food information and an enclosure identifier. The food information and the like are, for example, food information, an enclosure identifier, and an aquaculturist identifier. The food information contains, for example, one or more pieces of information out of the weight of food given, the feeding time, and the time information regarding the time at which food was given.

(Step S512) The processing unit 13 accumulates the food information in the storage unit 11, in association with the enclosure identifier. The procedure returns to step S501.

In the flowchart in FIG. 5, the processing unit 13 may perform one or more types of processing out of processing that calculates an average feeding weight in a single feeding, processing that calculates the total feeding weight, which is the feeding weight in a certain period of time (one day, one month, or one year), processing that calculates the cumulative feeding time, processing that acquires timing information, processing that calculates a feeding efficiency, processing that calculates an uneaten food amount reduction ratio, and processing that calculates an actual thickening factor, using a group of accumulated food information (e.g., the weight of food given, the feeding time, and the time information regarding the time at which food was given). There is no limitation on the processing timing. For example, the processing unit 13 performs such processing when a predetermined time is reached or when an asset value output instruction is accepted.

Furthermore, in the flowchart in FIG. 5, it is also possible to perform processing that acquires and outputs an asset value only for one enclosure.

In the flowchart in FIG. 5, the processing ends at power off or at an interruption of termination processing.

Next, an example of the enclosure asset value acquiring processing in step S505 will be described with reference to the flowchart in FIG. 6.

(Step S601) The processing unit 13 acquires an enclosure identifier of an enclosure whose asset value is to be acquired.

(Step S602) The image analysis unit 131 acquires one or more images paired with the enclosure identifier acquired in step S601, the images matching a condition, from the storage unit 11. The condition is, for example, that time information (information indicating the image capturing time) corresponding the image is sufficiently recent that it satisfies a predetermined condition. The condition is, for example, that it is not a time period for feeding. The image analysis unit 131 may acquire one or more images associated with the enclosure identifier acquired in step S601, the images being images currently received from the camera 4.

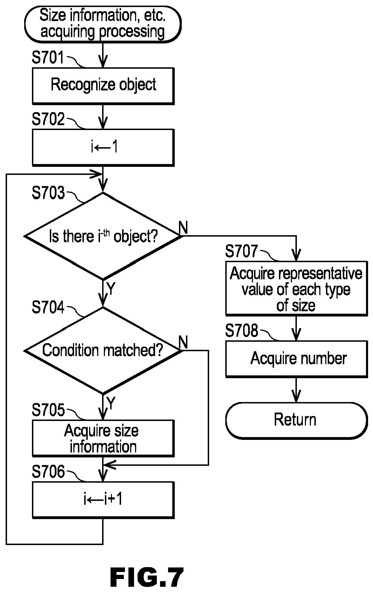

(Step S603) The size information acquiring part 1311 performs processing that acquires size information and the like of culture targets, using the one or more images acquired in step S602. An example of the size information, etc. acquiring processing will be described later with reference to the flowchart in FIG. 7. In this example, the number of fish in an enclosure, which is the number of fish that are cultured in an enclosure identified with the enclosure identifier acquired in step S601, is also acquired.

(Step S604) The type information acquiring part 1312 acquires type of cultured aquatic organisms, using the one or more images acquired in step S602. The type information acquiring part 1312 may acquire type information stored in the storage unit 11 and paired with an enclosure identifier or an aquaculturist identifier.

(Step S605) The processing unit 13 acquires weight using the size information acquired in step S603. It is preferable that the processing unit 13 acquires weight also using the type information acquired in step S604. For example, the processing unit 13 reads an operation expression for calculating the weight corresponding to the type information acquired in step S604, from the storage unit 11, substitutes one or at least two pieces of size information for the operation expression, and executes the operation expression, thereby calculating the weight. The operation expression is, for example, an increasing function in which the acquired size information (e.g., fork length, total length, and body height) is taken as a parameter. For example, the processing unit 13 acquires the weight paired with a size information range corresponding to the acquired size information, from a correspondence table (a table for acquiring the weight) corresponding to the type information acquired in step S604. In this case, the correspondence table is a table containing at least two pieces of correspondence information having pairs of the information indicating the size range and the weight. The weight that is acquired is, for example, an average weight of aquatic organisms in an enclosure.

(Step S606) The asset value acquiring unit 132 acquires food information corresponding to the enclosure identifier.

(Step S607) The cost approach part 1321 calculates a feed cost, using the acquire food information. For example, the cost approach part 1321 calculates a first asset value of an enclosure, which is the total raising cost in the enclosure, using the feed cost and the number of fish in the enclosure.

(Step S608) For example, the market approach part 1322 calculates a second asset value of the enclosure, using the weight acquired in step S605, the market value per unit weight, and the number of fish in the enclosure.

(Step S609) The asset value acquiring unit 132 acquires an asset value of the enclosure, using the first asset value and the second asset value. The procedure returns to the upper-level processing.

Next, an example of the size information, etc. acquiring processing in step S603 will be described with reference to the flowchart in FIG. 7.

(Step S701) The size information acquiring part 1311 performs object recognition of a cultured aquatic organism in one or at least two images.

(Step S702) The size information acquiring part 1311 substitutes 1 for a counter i.

(Step S703) The size information acquiring part 1311 determines whether or not there is an $i$-th object in the objects identified in step S701. If there is an $i$-th object, the procedure advances to step S704, otherwise, the procedure advances to step S707.

(Step S704) The size information acquiring part 1311 determines whether or not the shape of the $i$-th object in the images matches a condition. If the shape matches a condition, the procedure advances to step S705, otherwise, the procedure advances to step S706. The case in which the shape matches a condition is, for example, a case in which the shape of an object in an image is the shape of a culture target viewed from the front, or a case in which the shape of an object in an image is the shape of a front face of a culture target. In addition, the case in which the shape matches a condition is, for example, a case in which the shape of an object in an image is the shape of a culture target viewed from above. Such a determination can be realized through machine learning (deep learning, random forest, etc.) in which training with the shapes of the faces of a culture target is performed in advance.

(Step S705) The size information acquiring part 1311 acquires one or at least two pieces of size information of the i-th object in the images, and accumulates it in an unshown buffer. The size information is, for example, information indicating one or more of the fork length, the total length, the body height, and the body width of a fish. The one or more pieces of size information are accumulated such that the portion whose size is indicated by the size information is identifiable. The state in which size information is accumulated such that the portion whose size is indicated by the size information is identifiable are, for example, a state in which the size information is accumulated in association with an attribute name for identifying the portion from which the size was acquired (e.g., fork length, total length, body height, or body width).

(Step S706) The size information acquiring part 1311 increments the counter i by 1. The procedure returns to step S703.

(Step S707) The size information acquiring part 1311 acquires a representative value (e.g., an average, a median, etc.) of the size, for each type of size (e.g., fork length, total length, body height, or body width), using the size information of one or at least two objects.

(Step S708) The size information acquiring part 1311 acquires the number of culture targets. The procedure returns to the upper-level processing.

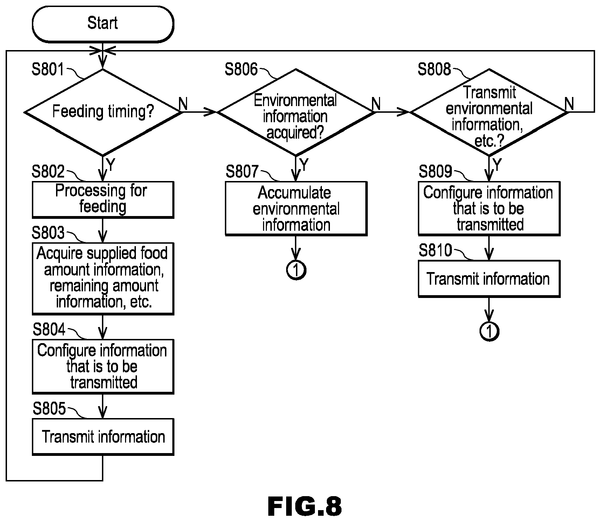

Next, an operation example of each feeder 2 will be described with reference to the flowchart in FIG. 8.

(Step S801) The feeding processing unit 22 determines whether or not it is a feeding timing, using the timing information in the feeding storage unit 21. If it is a feeding timing, the procedure advances to step S802, otherwise, the procedure advances to step S806.

(Step S802) The feeding processing unit 22 performs processing for feeding. In this case, for example, the processing is put into a wait state until the feeding is completed.

(Step S803) The feeding processing unit 22 acquires supplied food amount information and remaining amount information. The feeding processing unit 22 acquires an enclosure identifier, a device identifier, and type information, from the feeding storage unit 21. Furthermore, the feeding processing unit 22 acquires time information from an unshown clock.

(Step S804) The feeding processing unit 22 configures information that is to be transmitted, based on the information acquired in step S803. The information that is to be transmitted contains, for example, one or at least two pieces of information out of the supplied food amount information, the remaining amount information, the enclosure identifier, the device identifier, the type information, and the time information.

(Step S805) The feeding transmitting unit 23 transmits the information configured in step S804, to the asset value output apparatus 1. The procedure returns to step S801.

(Step S806) The feeding processing unit 22 determines whether or not it is the timing to acquire environmental information. If it is the timing to acquire environmental information, the procedure advances to step S807, otherwise, the procedure advances to step S808. The timing to acquire environmental information is, for example, always, at regular time intervals (e.g., every 10 minutes, every hour, etc.), when an instruction is accepted, or the like, and there is no limitation on the timing.

(Step S807) The feeding processing unit 22 acquires environmental information, using an environmental sensor. Then, the feeding processing unit 22 accumulates the environmental information in the feeding storage unit 21. It is preferable that, in this case, the feeding processing unit 22 acquires time information from an unshown clock, and accumulates the environmental information in association with the time information.

(Step S808) The feeding transmitting unit 23 determines whether or not it is the timing to transmit the environmental information and the like. If it is the timing to transmit the environmental information and the like, the procedure advances to step S809, otherwise, the procedure returns to step S801. There is no limitation on the timing to transmit the environmental information and the like. The timing to transmit the environmental information is, for example, always, at regular time intervals (e.g., every 10 minutes, every hour, etc.), when an instruction is accepted, or the like.

(Step S809) The feeding processing unit 22 acquires environmental information in the feeding storage unit 21. The feeding processing unit 22 acquires an enclosure identifier or a device identifier in the feeding storage unit 21. Then, the feeding processing unit 22 configures information that is to be transmitted, using the environmental information and the enclosure identifier, or the environmental information and the device identifier.

(Step S810) The feeding transmitting unit 23 transmits the information configured in step S809. The information is transmitted, for example, to the asset value output apparatus 1 or the user terminal 3. The procedure returns to step S801.

Next, an operation of each user terminal 3 will be described. First, the user accepting unit 32 accepts instructions, information, and the like from a user. Next, the user processing unit 33 changes the structure of instructions, information, and the like accepted by the user accepting unit 32 into an information structure suitable for transmission. Next, the user transmitting unit 34 transmits the configured information to the asset value output apparatus 1. The configured information is, for example, an asset value output instruction.

The user transmitting unit 34 may transmit the configured information to the feeder 2. The configured information is, for example, an environmental information acquiring instruction.

Next, the user receiving unit 35 receives information corresponding to the transmitted instruction, from the asset value output apparatus 1 or the feeder 2. The information is, for example, an asset value or environmental information. Then, the user processing unit 33 performs processing that changes the structure of various types of information of the user receiving unit 35 into an information structure suitable for output. Next, the user output unit 36 outputs the configured information.

Hereinafter, a specific operation of the information system A in this embodiment will be described. FIG. 1 is a conceptual diagram of the information system A. In this specific example, a case will be described in which the culture targets are fish, and the information system A calculates an asset value of each enclosure of cultured fish, or an asset value of each aquaculturist.

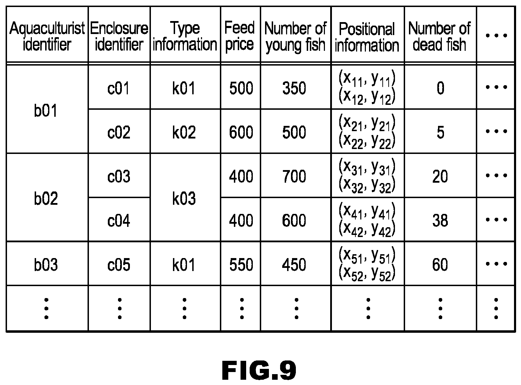

It is assumed that an aquaculturist information management table with the structure shown in FIG. 9 is stored in the aquaculturist information storage unit 111 of the storage unit 11 of the asset value output apparatus 1. In the aquaculturist information management table, at least two records each having "aquaculturist identifier", "enclosure identifier", "type information", "feed price", "number of young fish", "positional information", and "number of dead fish" are stored. "Type information" is the type of aquatic organisms that are cultured in the enclosure identified with the corresponding enclosure identifier. "Type information" is, for example, information acquired by the type information acquiring part 1312 through image recognition performed on the image received from the camera 4. "Type information" may also be information input by the user and received from the user terminal 3. "Feed price" is the price per unit amount of feed for use in culturing, and is, for example, information input by the user and received from the user terminal 3. "Number of young fish" is the number of young fish that were initially placed into an enclosure. "Number of young fish" is, for example, information input by the user and received from the user terminal 3. "Positional information" is information indicating the position of an enclosure, and is, in this example, information indicating a rectangular region expressing the region of an enclosure in the form of (latitude, longitude) of each of two points (e.g., the upper left point and the lower right point) of the rectangle. "Number of dead fish" is the number of fish that have died during culturing. "Number of dead fish" is, for example, information obtained by the image analysis unit 131 recognizing culture targets that have sunk to the bottom, in a received image in an enclosure, and acquiring the number of recognized culture targets. Note that "number of dead fish" may also be information input by the user and received from the user terminal 3.

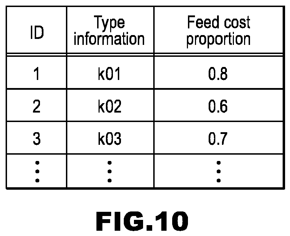

Furthermore, a feed cost proportion management table shown in FIG. 10 is stored in the storage unit 11. The feed cost proportion management table is a table for managing the feed cost proportion corresponding to the type of culture targets. In the feed cost proportion management table, one or more records each having "ID", "type information", and "feed cost proportion" are stored. "ID" is information for identifying a record.

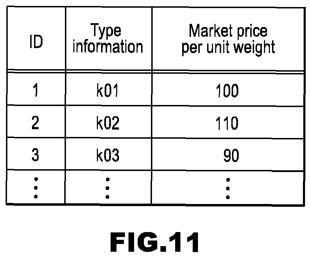

Furthermore, a target market price management table shown in FIG. 11 is stored in the storage unit 11. The target market price management table is a table for managing the market price per unit weight of culture targets. In the target market price management table, one or more records each having "ID", "type information", and "market price per unit weight" are stored. "ID" is information for identifying a record. There is no limitation on the unit weight, and examples thereof include 1 kg and 100 g. "Market price" in this case is, for example, the price in yen.

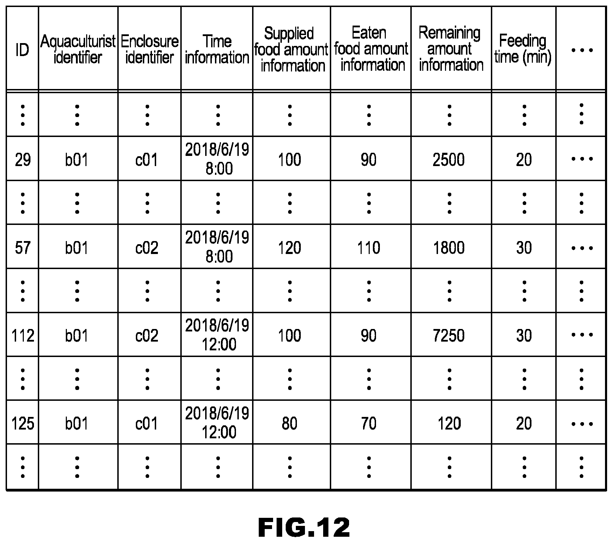

Furthermore, a feeding information management table with the structure shown in shown in FIG. 12 is stored in the storage unit 11. The feeding information management table is a table for managing the information regarding feeding. In the feeding information management table, at least two records each having "ID", "aquaculturist identifier", "enclosure identifier", "time information", "supplied food amount information", "eaten food amount information", "remaining amount information", and "feeding time" may be stored. "Time information", "supplied food amount information", "remaining amount information", and "feeding time" of each record in the feeding information management table are based on, for example, food information received from the feeder 2 when feeding is performed.

"Eaten food amount information" is acquired, for example, as follows. That is to say, the image analysis unit 131 analyzes an image immediately after feeding is started, thereby acquiring the time during which food is not eaten by culture targets through image analysis, or analyzes an image after food is eaten, thereby acquiring the amount of food that is present on the bottom, substitutes one or more of the time during which food is not eaten and the amount of food that is present on the bottom for an operation expression, and executes the operation, thereby calculating the amount of food that has not been eaten, and subtracts the amount of food that has not been eaten from the supplied food amount indicated by the supplied food amount information, thereby obtaining eaten food amount information. The operation expression is an increasing function in which the time during which food is not eaten and the amount of food that is present on the bottom are taken as parameters. The eaten food amount information may be calculated, for example, by "eaten food amount information = supplied food amount information × proportion" using the proportion of the eaten food amount relative to the supplied food amount, which was received from the user terminal 3.

Furthermore, the processing unit 13 may acquire "feeding time" from the start to the end thereof, by causing the image analysis unit 131 to automatically detect the start time and the end time of feeding from a moving image (a group of at least two still images) received from the camera 4. In this case, for example, the processing unit 13 may use time information associated with images, or use time information using a field identifier and a frame rate associated with images.

Furthermore, it is assumed that a weight calculation operation expression, which is an operation expression for calculating the weight is stored in the storage unit 11, in association with each piece of type information of fish. It is assumed that the weight calculation operation expression is an increasing function in which the fork length, the body height, and the body width are taken as parameters. It is preferable that the weight calculation operation expression differs according to the type information, but the operation expressions corresponding to at least two pieces of type information may be the same.

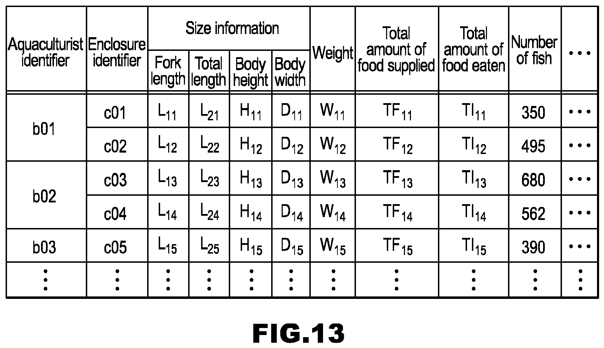

Furthermore, a culture target information management table with the structure shown in shown in FIG. 13 is stored in the storage unit 11. The culture target information management table is a table in which information regarding culture targets is stored for each enclosure. In the culture target information management table, at least two records each having "aquaculturist identifier", "enclosure identifier", "size information", "weight", "total amount of food supplied", "total amount of food eaten", and "number of fish" can be stored. "Size information" has "fork length", "total length", "body height", and "body width". The culture target information management table shown in FIG. 13 shows the situation of each enclosure at the end of June, 2018. Each attribute value of "size information" is an average size of fish in that enclosure.

Furthermore, each attribute value of "size information" is, for example, a value obtained through the above-described algorithm by the size information acquiring part 1311 analyzing an image transmitted on June 30, 2018 from each enclosure. "Weight" is an accumulated value obtained by the processing unit 13 acquiring type information corresponding to the enclosure identifier from the management table in FIG. 9, acquiring a weight calculation operation expression, paired with the type information from the storage unit 11, substituting the fork length, the body height, and the body width for the weight calculation operation expression, and executing the operation.

"Total amount of food supplied" is an accumulated value obtained by the processing unit 13 acquiring a record corresponding to the enclosure identifier from the feeding information management table in FIG. 12, and adding the supplied food amount information contained in the record.

"Total amount of food eaten" is an accumulated value obtained by the processing unit 13 acquiring a record corresponding to the enclosure identifier from the feeding information management table in FIG. 12, and adding the eaten food amount information contained in the record.

"Number of fish" is an accumulated value obtained by the processing unit 13 acquiring a record corresponding to the enclosure identifier from the aquaculturist information management table in FIG. 9, and subtracting "number of dead fish" from "number of young fish" of the record. It will be appreciated that "number of fish" may be acquired using sonar or images. That is to say, there is no limitation on the method for acquiring "number of fish".

It is assumed that, in this situation, the aquaculturist "b01" inputs an asset value output instruction to a user terminal 3. Then, the user accepting unit 32 accepts the asset value output instruction from the user. Then, the user processing unit 33 reads the aquaculturist identifier "b01" in the user storage unit 31, and configures an asset value output instruction with the aquaculturist identifier "b01". Next, the user transmitting unit 34 transmits the asset value output instruction to the asset value output apparatus 1.

Next, the accepting unit 12 of the asset value output apparatus 1 receives the asset value output instruction. Next, the processing unit 13 acquires the aquaculturist identifier "b01" contained in the received asset value output instruction.

Next, the processing unit 13 calculates, as follows, an asset value of an aquatic organism group that is cultured in the enclosure identified with the first enclosure identifier "c01" paired with the aquaculturist identifier "b01".

That is to say, first, the cost approach part 1321 reads the size information, the weight, the total amount of food supplied, and the total amount of food eaten paired with the enclosure identifier "c01" from the management table in FIG. 13.

Next, the cost approach part 1321 calculates a difference "$W_{11} - W_{01}$" between the weight of the previous month (which is taken as $W_{01}$, although not shown) and the weight $W_{11}$ of this month stored in the storage unit 11. Next, the cost approach part 1321 calculates the actual thickening factor "actual thickening factor = $TF_{11}/(W_{11} - W_{01})$", using the total amount of food supplied "$TF_{11}$" and "$W_{11} - W_{01}$". It will be appreciated that the actual thickening factor may also be information (thickening factor) that is given in advance. It will be appreciated that the difference between the weights is not limited to a difference between one month, and may be the difference between the weights at two points in time in a predetermined period of time (e.g., several days, one week, etc.).

Then, the cost approach part 1321 calculates the feed cost, using any one or more of the following feed cost operation expressions (1) to (3).

$$(1) \text{ Feed cost} = \text{weight of aquatic organisms} \times \text{thickening factor or}$$

$$\text{actual thickening factor} \times \text{feed price per unit weight}$$

$$(2) \text{ Feed cost} = \text{total amount of food supplied} \times \text{feed price per unit}$$

$$\text{weight}$$

$$(3) \text{ Feed cost} = \text{feeding weight per unit time} \times \text{feeding time in single}$$

$$\text{feeding} \times \text{number of feedings} \times \text{feed price per unit weight}$$

If the feed cost is calculated by at least two feed cost operation expressions, the cost approach part 1321 may acquire a representative value (e.g., a largest value, a median, an average, etc.) of the at least two feed costs, and take it as the feed cost that is used to calculate the total raising cost per fish.

Then, the cost approach part 1321 acquires the type information "k01" paired with the enclosure identifier "c01" from the management table in FIG. 9, reads the feed cost proportion "0.8" paired with the type information "k01" from the management table in FIG. 10, substitutes the feed cost proportion "0.8" and the calculated feed cost for the operation expression for calculating the total raising cost per fish "total raising cost per fish = asset value per fish = feed cost / feed cost proportion" stored in the storage unit 11, and executes the operation. Next, the cost approach part 1321 substitutes "total raising cost per fish" and the number "350" of fish in the enclosure for the operation expression for calculating the asset value per enclosure "asset value per enclosure = total raising cost per fish $\times$ number of fish in enclosure" stored in the storage unit 11, and executes the operation, thereby calculating an asset value of this enclosure. The number "350" of fish in the enclosure is information resulting from the cost approach part 1321 acquiring the number of fish "350" paired with the enclosure identifier "c01" from the management table in FIG. 13.

As described above, a first asset value of the enclosure identified with the enclosure identifier "c01" has been calculated.

Next, the cost approach part 1321 calculates a first asset value of an aquatic organism group that is cultured in the enclosure identified with the second enclosure identifier "c02" paired with the aquaculturist "b01", in a similar way to that of the enclosure with the enclosure identifier "c01".

Next, the market approach part 1322 acquires the weight "$W_{11}$" paired with the first enclosure identifier "c01" paired with the aquaculturist identifier "b01", from the management table in FIG. 13. The weight "$W_{11}$" is an average weight per fish. The market approach part 1322 acquires the type information "k01" paired with the enclosure identifier "c01" from the management table in FIG. 9. Next, the market approach part 1322 acquires the market value "100" per unit weight paired with the type information "k01", from the management table in FIG. 11. Next, the market approach part 1322 substitutes the weight "$W_{11}$" and the market value "100" per unit weight for the operation expression for calculating the asset value per fish "asset value per fish = weight of culture targets $\times$ market price" stored in the storage unit 11, thereby calculating an asset value per fish. Next, the market approach part 1322 substitutes the calculated asset value per fish and the number "350" of fish in the enclosure for the operation expression for calculating the asset value per enclosure "asset value per enclosure = market value per fish $\times$ number of fish in enclosure" stored in the storage unit 11, and executes the operation, thereby calculating an asset value of the enclosure identified with the enclosure identifier "c01".

As described above, a second asset value of the enclosure identified with the enclosure identifier "c01" has been calculated.

Next, the market approach part 1322 calculates a second asset value of an aquatic organism group that is cultured in the enclosure identified with the second enclosure identifier "c02" paired with the aquaculturist "b01", in a similar way to that of the enclosure with the enclosure identifier "c01".

Next, the asset value acquiring unit 132 acquires a representative value (e.g., a largest value, a smallest value, an average, etc.) of the first asset value and the second asset value, in association with the enclosure identifier "c01".

Furthermore, the asset value acquiring unit 132 acquires a representative value (e.g., a largest value, a smallest value, an average, etc.) of the first asset value and the second asset value, in association with the enclosure identifier "c02".

Next, the asset value acquiring unit 132 adds the representative value corresponding to the enclosure identifier "c01" and the representative value corresponding to the enclosure identifier "c02", and associates the obtained value with the aquaculturist identifier "b01".

Next, the asset value output unit 141 transmits the acquired asset values to the user terminal 3. The asset values that are transmitted are, for example, the asset value of the aquatic organism group in the enclosure identified with the enclosure identifier "c01", the asset value of the aquatic organism group in the enclosure identified with the enclosure identifier "c02", and the asset value of the aquatic organism group that is cultured by the aquaculturist identified as the aquaculturist "b01".

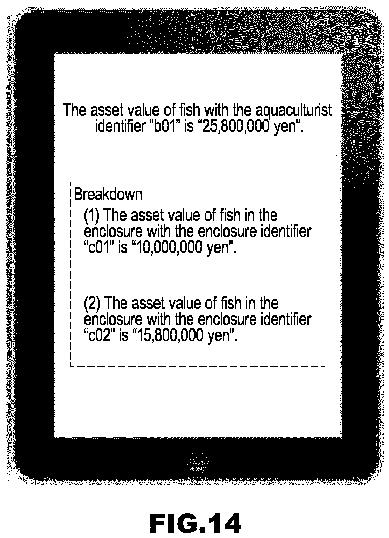

Next, the user receiving unit 35 of the user terminal 3 of the aquaculturist "b01" receives the above-described three asset values and the like. Then, the user processing unit 33 configures information that is to be output, based on the received asset values and the like. Next, the user output unit 36 outputs the configured information. FIG. 14 shows an output example.

As described above, according to this embodiment, it is easy to acquire an asset value of an aquatic organism group including at least two culture targets.

Furthermore, according to this embodiment, it is easy to acquire an asset value of an aquatic organism group including at least two culture targets, using size information of culture targets, obtained from an analysis result of an image captured by a camera.

Furthermore, according to this embodiment, it is easy to acquire an asset value of an aquatic organism group including at least two culture targets, using food information and size information.

Furthermore, according to this embodiment, it is possible to properly output an asset value of each enclosure.

Furthermore, according to this embodiment, it is easy to acquire an asset value, using size information obtained from an image from a location in water.

Furthermore, according to this embodiment, it is easy to acquire an asset value, using food information automatically received from the feeder 2.

Furthermore, the processing in this embodiment may be realized using software. This software may be distributed via a software download or the like. Also, this software may be recorded on a recording medium such as a CD-ROM and distributed. Note that this applies to the other embodiments in the present description. Software that realizes the asset value output apparatus 1 in this embodiment is a program as follows. Specifically, this program is a program for causing a computer to function as: an aquatic organism group information accepting unit that accepts aquatic organism group information containing one or at least two pieces of information out of food information regarding food given to an aquatic organism group including at least two culture targets, and size information regarding a size of the culture targets; an asset value acquiring unit that acquires an asset value of the aquatic organism group, using the aquatic organism group information; and an asset value output unit that outputs the asset value.


Embodiment 2

In this embodiment, an information system including an insurance information output apparatus that acquires insurance information using an asset value calculated in Embodiment 1 will be described.

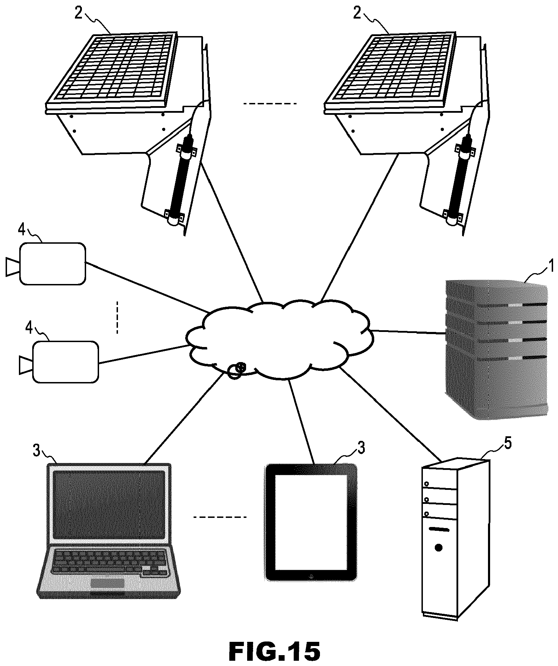

FIG. 15 is a conceptual diagram of an information system B in this embodiment. The information system B includes the asset value output apparatus 1, the one or at least two feeders 2, the one or at least two user terminal 3, the one or at least two cameras 4, and an insurance information output apparatus 5.

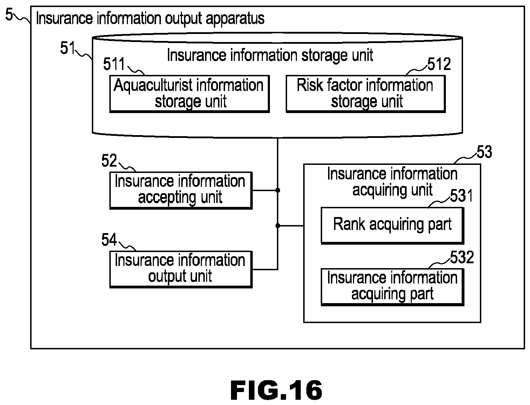

FIG. 16 is a block diagram of the insurance information output apparatus 5 constituting the information system B in this embodiment.

The insurance information output apparatus 5 includes an insurance information storage unit 51, an insurance information accepting unit 52, an insurance information acquiring unit 53, and an insurance information output unit 54. The insurance information storage unit 51 includes an aquaculturist information storage unit 511 and a risk factor information storage unit 512. The insurance information acquiring unit 53 includes a rank acquiring part 531 and an insurance information acquiring part 532.

Various types of information are stored in the insurance information storage unit 51 constituting the insurance information output apparatus 5. The various types of information are, for example, aquaculturist information, later-described risk factor information, and later-described various operation expressions.

One or at least two pieces of aquaculturist information are stored in the aquaculturist information storage unit 511. The aquaculturist information is information regarding an aquaculturist of an aquatic organism group.

It is preferable that the aquaculturist information is associated with an aquaculturist identifier. The aquaculturist information contains, for example, one or more pieces of information out of a name, contact information, the aquaculturist's number of enclosures, sales, output, and bank information for specifying a main bank. The aquaculturist information contains, for example, past performance information of an aquaculturist. The past performance information is information on the past performance of the aquaculturist. The past performance information contains, for example, one or more pieces of information out of the past average yields of the aquaculturist and one or more pieces of accident history information. The accident history information is information on accidents related to past culturing, and contains, for example, one or more pieces of information out of the time of occurrence, the content of the accident, and the amount of damage. The contact information is information indicating a contact address, and is, for example, an e-mail address, a telephone number, an IP address, an address, or the like. The aquaculturist information contains, for example, system introduction information and system usage information. The system introduction information is information regarding introduction of a system for safely or/and efficiently performing culturing. If the bank information is information for identifying a bank registered in advance (e.g., the name of a city bank), the fact that the scale or credit of the operating company is at least a threshold value is used as information for determination. For example, if the bank is information for identifying a bank registered in advance (e.g., the name of a city bank), the aquaculturist rank can be set higher.

The aquaculturist information may contain, for example, information on a result of water sampling, information regarding the frequency of inspection of an enclosure, information regarding the frequency of inspection of farm facilities, information regarding the frequency of inspection of dead fish, information regarding specifications of a ship, information on how to use a ship (e.g., data of thermometers installed on the ship), information regarding whether or not there is specific equipment (e.g., onboard feeders, etc.), information regarding specifications of an enclosure, information regarding specifications of an enclosure net, information regarding the cleaning frequency of an enclosure or an enclosure net, information regarding the lifetime of an enclosure or an enclosure net, information regarding whether or not there is a guarantee for an enclosure or an enclosure net, type information for identifying the type of culture targets, information regarding the date of watering, the size of culture targets at the time of watering, the production period of culture targets, information for specifying a seedling lot supplier, the current size of culture targets, the size of culture targets at the time of shipment, information regarding whether or not there is a management document of an aquaculturist, information regarding a person responsible, information regarding a person in charge, information regarding payment of food charges (payment frequency, payment date, etc.), past insurance claim information, financial information, fish price information, information regarding the production efficiency (FCR, SGR), and the like. The management document is, for example, a document in which a record of body measurement, a record of weight measurement, a record of the number of aquatic organisms, a record of feeding, a record of a health condition, a record of medication, a record of water quality, a record of parasite control, a record of a disease, a record of plankton/algae outbreak and the like are written.

The system is, for example, a system for monitoring an enclosure of an aquaculturist, such as a system for acquiring information from the asset value output apparatus 1, a system for receiving an image from the camera 4 installed at an enclosure, or the like. The system may also be the feeder 2. Note that the system may use sonar, various sensors, or the like, instead of or in addition to the camera 4.

The system introduction information is, for example, a system introduction rate "total number of systems introduced / total number of enclosures", or information indicating whether or not a system has been introduced.

The system usage information is, for example, the number of times that monitoring was performed, the number of times that the feeding status was checked, or the number of times that a management app was started. The number of times that monitoring was performed is the number of times that an image was received from the camera 4, using the user terminal 3 of the aquaculturist. It is preferable that this number of times is the number of times in a unit period (e.g., one day, one week, one month, etc.). The number of times that the feeding status was checked is the number of times that the user terminal 3 accessed the asset value output apparatus 1 and received a record of the user from the management table in FIG. 12. The number of times that a management app was started is the number of times that the user terminal 3 started an app that accessed the asset value output apparatus 1, or started an app and accessed the asset value output apparatus 1. It is assumed that the user terminal 3 of the aquaculturist can access the asset value output apparatus 1 and obtain information on the feeding information and the like of the user from the asset value output apparatus 1.

One or at least two pieces of risk factor information are stored in the risk factor information storage unit 512. The risk factor information is information on a factor that increases or decreases a risk that a state in which insurance money is paid out for an aquatic organism group arises. The risk factor information is stored, for example, in association with the aquaculturist identifier or the enclosure identifier. The risk factor information may be manually accumulated in the risk factor information storage unit 512, or received from an unshown external server or the like. That is to say, it will be appreciated that there is no limitation on the route through which the risk factor information is accumulated in the risk factor information storage unit 512.

The risk factor information is, for example, nature information, an attribute value of an aquatic organism group, surrounding environment information, operation information, and facilities information. The risk factor information is, for example, enclosure information, an eaten food amount ratio (eaten food amount / supplied food amount) indicating the amount of food that has been eaten relative to the amount of food that has been supplied, and interaction information indicating interaction with other users in the system.

The nature information is information regarding the nature in a culture farm. The culture farm is, for example, an enclosure, or a region or an area in which an enclosure is present. The nature information is, for example, one or more pieces of information out of hours of daylight / daylength, rainfall, and weather information.

If the hours of daylight / daylength is out of a predetermined proper range, the risk increases. If the rainfall is out of a predetermined proper range, the risk increases. The weather information is information regarding weather, and indicates, for example, the average number of disasters such as storms, hurricanes, and tsunamis in a unit period (e.g., one year). The larger the average number of disasters, the greater the risk.

The attribute value of an aquatic organism group is information regarding a disease of culture targets. It is determined that there is a risk corresponding to the attribute value of an aquatic organism group.

The surrounding environment information is information regarding a surrounding environment. The surrounding environment information is, for example, a seawater temperature, a seawater oxygen concentration (DO), a seawater salinity, a seawater ORP concentration, a seawater $NH_4^+$ concentration, a seawater $NO_3^-$ concentration, a seawater $NO_2^-$ concentration, a seawater $Ca_3^+$ concentration, a seawater $Mg_2^+$ concentration, a seawater $K^+$ concentration, a seawater Ca concentration, a seawater Mg concentration, a seawater harmful plankton concentration, a seawater chlorophyll concentration, a tide velocity, a seawater turbidity, a seawater transparency, a seawater diatom amount, or red tide information.

The surrounding environment information may contain, for example, any one or more of wind speed information regarding a wind speed, tide information regarding a tide, typhoon information regarding a typhoon, earthquake information regarding an earthquake, water temperature information regarding a water temperature, atmospheric temperature information regarding an atmospheric temperature, water quality information regarding a water quality, topographical information regarding topography, and color information regarding a color of a farm environment in a sea, a pond, a lake, or the like.

The wind speed information is, for example, information regarding an average wind speed, a maximum wind speed, an average wind speed, a minimum wind speed, a wind direction, or a blowing distance. For example, the larger a value of the average wind speed, the maximum wind speed, the average wind speed, or the minimum wind speed, the greater the risk. For example, the greater the level by which a value of the average wind speed, the maximum wind speed, the average wind speed, or the minimum wind speed exceeds a threshold value, the greater the risk.

The tide information is, for example, information regarding a maximum wave height, a maximum tide velocity, an average tide velocity, a maximum tide velocity, or a tide current direction. For example, the larger a value of the maximum wave height, the maximum tide velocity, the average tide velocity, or the maximum tide velocity, the greater the risk. For example, the greater the level by which a value of the maximum wave height, the maximum tide velocity, the average tide velocity, or the maximum tide velocity exceeds a threshold value, the greater the risk.

The typhoon information is, for example, information regarding a typhoon occurrence frequency, a maximum wind speed in a typhoon, a maximum wave height, or a movement direction of a typhoon, or information for specifying the date and time or the season in which a typhoon occurs. For example, the larger a value of the typhoon occurrence frequency, the maximum wind speed in a typhoon, or the maximum wave height, the greater the risk. For example, the greater the level by which a value of the typhoon occurrence frequency, the maximum wind speed in a typhoon, or the maximum wave height exceeds a threshold value, the greater the risk.

The earthquake information indicates, for example, the number of earthquakes that have occurred in the vicinity in a predetermined period of time (e.g., 30 years, or 50 years) in the past. For example, the larger a value of the number of earthquakes that have occurred, the greater the risk. For example, the greater the level by which a value of the number of earthquakes that have occurred exceeds a threshold value, the greater the risk.

The water temperature information indicates, for example, a maximum water temperature, an average water temperature, a minimum water temperature, a summer maximum water temperature, or a winter minimum water temperature. For example, the higher a value of the maximum water temperature, the average water temperature, the minimum water temperature, the summer maximum water temperature, or the winter minimum water temperature, the greater the risk. For example, the greater the level by which a value of the maximum water temperature, the average water temperature, the minimum water temperature, the summer maximum water temperature, or the winter minimum water temperature exceeds a threshold value, the greater the risk.

The atmospheric temperature information indicates, for example, a maximum atmospheric temperature, an average atmospheric temperature, a minimum atmospheric temperature, a summer maximum atmospheric temperature, or a winter minimum atmospheric temperature. For example, the higher a value of the maximum atmospheric temperature, the average atmospheric temperature, the minimum atmospheric temperature, the summer maximum atmospheric temperature, or the winter minimum atmospheric temperature, the greater the risk. For example, the greater the level by which a value of the average atmospheric temperature, the minimum atmospheric temperature, the summer maximum atmospheric temperature, or the winter minimum atmospheric temperature exceeds a threshold value, the greater the risk.

The water quality information is various types of data regarding the water quality. For example, the greater the level by which a value of the water quality information exceeds a threshold value, the greater the risk.

The topographical information is, for example, information regarding the shape of a bay, information regarding geology, or information regarding the form of a pond. For example, the greater the level by which the topographical information exceeds a threshold value, the greater the risk.

The color information is, for example, information for specifying a color of a pond, a sea, or the like, or information indicating whether or not farming is performed based on estimation from the color. The greater the level by which the color information exceeds a threshold value, the greater the risk.

If the seawater temperature is out of a predetermined range, the risk increases. If the seawater oxygen concentration (DO) is out of a predetermined proper range, the risk increases. If the salinity is out of a predetermined proper range, the risk increases. If the ORP concentration is out of a predetermined proper range, the risk increases. If the $NH_4^+$ concentration is out of a predetermined proper range, the risk increases. If the $NO_3^-$ concentration is out of a predetermined proper range, the risk increases. If the $NO_2^-$ concentration is out of a predetermined proper range, the risk increases. If the $Ca_3^+$ concentration is out of a predetermined proper range, the risk increases. If the $Mg_2^+$ concentration is out of a predetermined proper range, the risk increases. If the K+ concentration is out of a predetermined proper range, the risk increases. If the Ca concentration is out of a predetermined proper range, the risk increases. If the Mg concentration is out of a predetermined proper range, the risk increases. If the chlorophyll concentration is out of a predetermined proper range, the risk increases. If the harmful plankton concentration is out of a predetermined proper range, the risk increases. If the tide velocity is out of a predetermined proper range, the risk increases. If the turbidity or the transparency is out of a predetermined proper range, the risk increases. If the diatom amount is out of a predetermined proper range, the risk increases. The red tide information indicates the number of times that a red tide occurred in a unit period (e.g., one year, or three years). The larger the number of times that a red tide occurred, the greater the risk.

The operation information is information regarding an operation by an aquaculturist. The operation information is, for example, the number of enclosure operations. The larger the number of enclosure operations, the greater the risk.

The facilities information is information regarding facilities for use in culturing. The facilities information is, for example, system introduction information, or system usage information.

The system introduction information is, for example, a system introduction rate, or information indicating whether or not systems have been introduced. The higher the system introduction rate, or the more the systems have been introduced, the less the risk.

The system usage information indicates, for example, the number of times that monitoring was performed by a system for monitoring an enclosure, the monitoring frequency, the number of times that the feeding status was checked, the number of times that a management app was started or the frequency thereof, the app being stored in the user terminal 3 included in a system for monitoring an enclosure. The monitoring is, for example, monitoring of an image received from the camera 4, monitoring of a sensor value received from the feeder 2, monitoring of satellite data received from the feeder 2, or the like. The system usage information is, for example, the number of times that automatic feeding was performed using the feeder 2 or the frequency thereof.

The larger the number of times that monitoring was performed, the less the risk, the larger the number of times that a management app was started or the frequency thereof, the less the risk, and the larger the number of times that automatic feeding was performed or the frequency thereof, the less the risk. Furthermore, if optimization of feeding based on swimming/feeding activity analysis, reduction of wasted food through monitoring, or reduction of wasted food based on swimming/feeding activity analysis is detected, the risk decreases.

The enclosure information is information regarding an enclosure. The enclosure information is, for example, the number of fish, the density, or the water depth. The number of fish is the number of culture targets in an enclosure. The density is the density of culture targets in an enclosure. If the density is out of a predetermined proper range, the risk increases. If the water depth is out of a predetermined proper range, the risk increases.

The aquaculturist information may contain one or at least two enclosure identifiers. It is also possible that an asset value is stored in association with the enclosure identifier. The asset value is, for example, an asset value of an enclosure, and an asset value acquired by the asset value output apparatus 1. Note that this asset value may also be, for example, information input by a user. The aquaculturist information may contain an asset value corresponding to the aquaculturist identifier. This asset value is also an asset value acquired by the asset value output apparatus 1. The aquaculturist information may contain information contained in the aquaculturist information described in Embodiment 1.

The insurance information accepting unit 52 accepts instructions, information, and the like. The instructions, information, and the like are, for example, an insurance information output instruction. The insurance information output instruction is an instruction to prompt output of the insurance information. The insurance information output instruction contains, for example, an aquaculturist identifier, an enclosure identifier, or an aquaculturist identifier and an enclosure identifier.

The insurance information accepting unit 52 includes, for example, a satellite receiver. The state of including a satellite receiver may be a state in which a satellite receiver is housed inside or externally attached to the insurance information output apparatus 5. For example, the insurance information accepting unit 52 may receive the following information, from an unshown apparatus that acquired information using a satellite receiver.

The satellite receiver is a device or module that receives information from an artificial satellite. The artificial satellite is, for example, an earth observation satellite such as a meteorological satellite, but may be a broadcasting satellite, a communication satellite, or the like, but there is no limitation on the type thereof. The meteorological satellite is an artificial satellite that observes the weather. The weather observation is, for example, cloud observations, water vapor observations, rain and wind observations, or atmospheric temperature and seawater temperature observations. The meteorological satellite includes various observation devices, and observes the weather using the various observation devices, thereby acquiring weather information. The various observation devices are, for example, a camera using visible light, an infrared camera, a microwave scatterometer, and the like, but there is no limitation on the type thereof. The thus acquired weather information is, for example, transmitted (e.g., broadcasted) to the ground by, for example, the meteorological satellite itself, or via a broadcasting satellite or a communication satellite.

The earth observation satellite is an artificial satellite that observes the earth. The observation is, for example, the above-described weather observation, but may be capturing an image of the earth surface (e.g., the ground surface, the sea surface, etc.). The earth observation satellite captures an image of the earth surface, for example, using electromagnetic waves of various wavelengths, such as radio waves, infrared rays, and visible light, thereby acquiring image information at various wavelengths. The acquired image information is also, for example, transmitted to the ground by, for example, the meteorological satellite itself, or via a broadcasting satellite or the like.

The insurance information acquiring unit 53 acquires insurance information using an asset value output by the asset value output apparatus 1. The insurance information acquiring unit 53 preferably acquires insurance information using an asset value and aquaculturist information. The insurance information acquiring unit 53 preferably acquires insurance information, also using one or more pieces of risk factor information. The insurance information acquiring unit 53 more preferably acquires insurance information using an asset value, aquaculturist information, and one or more pieces of risk factor information.

The insurance information is information regarding insurance. The insurance information is, for example, an insurance rate, an insurance amount, an insurance fee, or the like. The insurance rate is a unit price of insurance, and is, for example, an insurance fee per fixed fee (e.g., 1000 yen) of the insurance amount. The insurance amount is the amount received by the insured. The insurance fee is the amount paid to an insurance company.

For example, the insurance information acquiring unit 53 calculates an insurance rate using an increasing function in which an asset value is taken as a parameter. This increasing function is stored in the insurance information storage unit 51. For example, the insurance information acquiring unit 53 calculates an insurance amount using an increasing function in which an asset value is taken as a parameter. For example, the insurance information acquiring unit 53 calculates an insurance fee using an increasing function in which an asset value is taken as a parameter.

Furthermore, for example, it is also possible that a correspondence table indicating correspondence between the asset value range and the insurance information (insurance rate, insurance amount, insurance fee, etc.) is stored in the insurance information storage unit 51, and the insurance information acquiring unit 53 acquires insurance information corresponding to an asset value that is used, from the correspondence table.

For example, in the case in which the insurance information acquiring unit 53 acquires insurance information using one or more pieces of risk factor information, it acquires a higher insurance rate in the case in which a parameter value with "greater risk" as described above is used than in the case in which a parameter value with "less risk" as described above is used.

The rank acquiring part 531 acquires an aquaculturist rank, which is a rank of an aquaculturist, using the aquaculturist information. The aquaculturist rank may be in 5 grades, 10 grades, or 100 grades. The aquaculturist information may have an aquaculturist rank from the first point. In this case, the rank acquiring part 531 is not necessary. In this case, the aquaculturist rank is, for example, manually input.

For example, the rank acquiring part 531 acquires a higher aquaculturist rank in accordance with an increase in the aquaculturist's number of enclosures, sales, and output that have been accepted. For example, the rank acquiring part 531 acquires an aquaculturist rank using an increasing function in which one or more of the aquaculturist's number of enclosures, sales, and output that have been accepted are taken as parameters. A correspondence table having at least two pieces of correspondence information indicating correspondence between the condition using the aquaculturist's number of enclosures, sales, or output, and the aquaculturist rank is stored in the insurance information storage unit 51, and, for example, the rank acquiring part 531 acquires an aquaculturist rank paired with a condition that matches one or more pieces of information out of the aquaculturist's number of enclosures, sales, and output that have been accepted, from the correspondence table.

Furthermore, for example, the rank acquiring part 531 acquires a higher aquaculturist rank in accordance with an increase in the average yield of the aquaculturist in the past. For example, the rank acquiring part 531 acquires an aquaculturist rank using an increasing function in which the accepted yield is taken as a parameter. A correspondence table having at least two pieces of correspondence information indicating correspondence between the condition using the yield and the aquaculturist rank is stored in the insurance information storage unit 51, and, for example, the rank acquiring part 531 acquires an aquaculturist rank paired with a condition that matches the accepted yield, from the correspondence table.

Furthermore, for example, the rank acquiring part 531 acquires a lower aquaculturist rank in accordance with an increase in the number of accidents and the damage indicated by the accepted accident history information. For example, the rank acquiring part 531 acquires an aquaculturist rank using a decreasing function in which one or more of the number of accidents and the damage are taken as parameters. A correspondence table having at least two pieces of correspondence information indicating correspondence between the condition using one or more of the number of accidents and the damage, and the aquaculturist rank is stored in the insurance information storage unit 51, and, for example, the rank acquiring part 531 acquires an aquaculturist rank paired with a condition that matches one or more pieces of information out of the accepted number of accidents and damage, from the correspondence table.

For example, the rank acquiring part 531 acquires a higher aquaculturist rank in accordance with an increase in a value of any one or more pieces of frequency-related information out of the information regarding the frequency of inspection of an enclosure, the information regarding the frequency of inspection of farm facilities, and the information regarding the frequency of inspection of dead fish. For example, the rank acquiring part 531 acquires an aquaculturist rank using an increasing function in which one or more of the information regarding the frequency of inspection of an enclosure, the information regarding the frequency of inspection of farm facilities, and the information regarding the frequency of inspection of dead fish are taken as parameters. For example, a correspondence table having at least two pieces of correspondence information indicating correspondence between the condition using the one or more the information regarding the frequency of inspection of an enclosure, the information regarding the frequency of inspection of farm facilities, and the information regarding the frequency of inspection of dead fish, and the aquaculturist rank is stored in the rank acquiring part 531, and, for example, the rank acquiring part 531 acquires an aquaculturist rank paired with a condition that matches one or more pieces of information out of the accepted information regarding the frequency of inspection of an enclosure and the like, from the correspondence table.

Furthermore, for example, the rank acquiring part 531 acquires a higher aquaculturist rank in the case in which information regarding whether or not there is specific equipment, contained in the aquaculturist information, indicates that "there is specific equipment" than in the case in which "there is no such specific equipment".

Furthermore, for example, the rank acquiring part 531 acquires a higher aquaculturist rank in the case in which data of thermometers installed in the ship is stored in association with aquaculturist information than in the case in which such data is not stored.

Furthermore, a correspondence table having at least two pieces of correspondence information indicating correspondence between the net identifier for identifying an enclosure net, and the price or rank is stored in the storage unit 11, and, for example, the rank acquiring part 531 acquires a higher aquaculturist rank in accordance with an increase in the price or rank paired with the net identifier of an enclosure net contained in the aquaculturist information.

Furthermore, for example, the rank acquiring part 531 acquires a higher aquaculturist rank in accordance with an increase in a value of the information regarding the cleaning frequency of an enclosure or an enclosure net.

Furthermore, for example, the rank acquiring part 531 acquires a higher aquaculturist rank in accordance with an increase in the replacement frequency (a decrease in the lifetime) indicated by the information regarding the lifetime of an enclosure or an enclosure net.

Furthermore, for example, the rank acquiring part 531 acquires a higher aquaculturist rank in the case in which information regarding whether or not there is a guarantee for an enclosure or an enclosure net indicates that "there is a guarantee" than in the case in which "there is no such guarantee".

Furthermore, a correspondence table having at least two pieces of correspondence information indicating correspondence between the type information and the information for specifying a yield is stored in the storage unit 11, and, for example, the rank acquiring part 531 acquires information for specifying a yield paired with the type information, from the correspondence table, and acquires a higher aquaculturist rank in accordance with an increase in the yield indicated by the information for specifying a yield.

Furthermore, for example, the rank acquiring part 531 acquires a higher aquaculturist rank in accordance with an increase in a value of the size of culture targets at the time of watering.

Furthermore, for example, the rank acquiring part 531 acquires a higher aquaculturist rank in accordance with a decrease in the production period of culture targets.

Furthermore, a correspondence table having at least two pieces of correspondence information indicating correspondence between the information for specifying a seedling lot supplier and the rank or yield of the supplier is stored in the storage unit 11, and, for example, the rank acquiring part 531 acquires a rank or yield of the supplier paired with the information for specifying a seedling lot supplier, and acquires a higher aquaculturist rank in accordance with an increase in a value of the information.

Furthermore, for example, the rank acquiring part 531 acquires a higher aquaculturist rank in accordance with an increase in the current size of culture targets and the size of culture targets at the time of shipment.

Furthermore, for example, the rank acquiring part 531 acquires a higher aquaculturist rank in the case in which information regarding whether or not there is a management document of an aquaculturist indicates that "there is a management document" than in the case in which "there is no such a management document".

Furthermore, for example, the rank acquiring part 531 acquires a higher aquaculturist rank in accordance with an increase in the recording frequency of a management document by an aquaculturist. In this case, recording of a management document by an aquaculturist is contained in the aquaculturist information.

Furthermore, for example, the rank acquiring part 531 acquires a higher aquaculturist rank in the case in which the aquaculturist information contains information regarding a person responsible or information regarding a person in charge than in the case in which the aquaculturist information does not contain such information.

Furthermore, for example, the rank acquiring part 531 acquires a higher aquaculturist rank in the case in which information regarding payment of food charges indicates a short payment term than in the case in which the information indicates a long payment term.

Furthermore, for example, the rank acquiring part 531 acquires a higher aquaculturist rank in accordance with a decrease in the insurance reimbursement indicated by the past insurance claim information or a decrease in the number of times that insurance was claimed or the frequency thereof.

Furthermore, for example, the rank acquiring part 531 acquires a higher aquaculturist rank in the case in which it can be determined that the financial situation indicated by the financial information is stable than in the case in which the financial situation is not stable.

Furthermore, for example, the rank acquiring part 531 acquires a higher aquaculturist rank in accordance with an increase in the price indicated by the fish price information.

Furthermore, for example, the rank acquiring part 531 acquires a higher aquaculturist rank in accordance with an increase in a value of the efficiency indicated by the production efficiency.

The rank acquiring part 531 may acquire a risk rank, which is a rank of a risk. The rank acquiring part 531 acquires a risk rank using one or more pieces of risk factor information in the risk factor information storage unit 512. For example, the rank acquiring part 531 substitutes one or more pieces of risk factor information for an operation expression for calculating the risk rank, performs the operation, thereby acquiring a risk rank. A correspondence table having at least two pieces of correspondence information indicating correspondence between the condition using one or more pieces of risk factor information and the risk rank is stored in the insurance information storage unit 51, and, for example, the rank acquiring part 531 acquires a risk rank paired with a condition that matches one or more pieces of risk factor information, from the correspondence table.

The operation expression for calculating the risk rank is, for example, an increasing function in which a value indicating the degree by which the above-described risk factor information is out of the proper range is taken as a parameter. The operation expression for calculating the risk rank is, for example, an increasing function in which the number of enclosure operations is taken as a parameter. The operation expression for calculating the risk rank is, for example, a decreasing function in which the system introduction rate is taken as a parameter. The operation expression for calculating the risk rank is, for example, is a decreasing function in which the system usage information (one or more pieces of information out of the number of times that monitoring was performed, the monitoring frequency, the number of times that the feeding status was checked, and the like) is taken as a parameter. That is to say, the more the system is used, the less the risk.

The insurance information acquiring part 532 acquires insurance information using an asset value and a rank. For example, the insurance information acquiring part 532 acquires insurance information using one or more ranks out of the aquaculturist rank and the risk rank.

For example, the insurance information acquiring part 532 acquires a higher insurance fee in accordance with an increase in the asset value.

For example, the insurance information acquiring part 532 acquires a lower insurance rate in accordance with an increase in the aquaculturist rank.

For example, the insurance information acquiring part 532 acquires a higher insurance rate in accordance with an increase in the risk rank.

For example, the insurance information acquiring part 532 acquires standard insurance information using an asset value, and acquires insurance information obtained by correcting the standard insurance information using one or more ranks out of the aquaculturist rank and the risk rank. There is no limitation on the algorithm through which the insurance information acquiring part 532 acquires insurance information.

The insurance information output unit 54 outputs the insurance information acquired by the insurance information acquiring unit 53. The output is, for example, transmission to the user terminal 3. Note that the output may also be displaying.

The insurance information storage unit 51, the aquaculturist information storage unit 511, and the risk factor information storage unit 512 are preferably non-volatile storage media, but can also be realized by volatile storage media.

There is no limitation on the procedure in which information is stored in the insurance information storage unit 51 and the like. For example, information may be stored in the insurance information storage unit 51 and the like via a storage medium, information transmitted via a communication line or the like may be stored in the insurance information storage unit 51 and the like, or information input via an input device may be stored in the insurance information storage unit 51 and the like.

The insurance information acquiring unit 53, the rank acquiring part 531, and the insurance information acquiring part 532 are typically realized by MPUs, memories, or the like. Typically, the processing procedure of the insurance information acquiring unit 53 and the like is realized by software, and the software is stored in a storage medium such as a ROM. Note that the processing procedure may be realized by hardware (dedicated circuits).

The insurance information output unit 54 is typically realized by a wireless or wired communication part, but can also be realized by a broadcasting part.

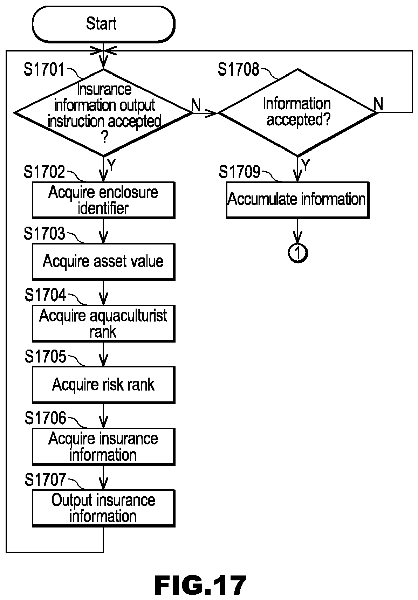

Next, an operation of the insurance information output apparatus 5 will be described with reference to the flowchart in FIG. 17.

(Step S1701) The insurance information accepting unit 52 determines whether or not it has accepted an insurance information output instruction. If it has accepted an insurance information output instruction, the procedure advances to step S1702, otherwise, the procedure advances to step S1708.

(Step S1702) The insurance information acquiring unit 53 acquires an enclosure identifier contained in the insurance information output instruction accepted in step S1701.

(Step S1703) The insurance information acquiring unit 53 acquires an asset value paired with the enclosure identifier acquired in step S1702, from the insurance information storage unit 51.

(Step S1704) The rank acquiring part 531 acquires aquaculturist information corresponding to the aquaculturist identifier paired with the enclosure identifier, from the aquaculturist information storage unit 511. Then, the rank acquiring part 531 acquires an aquaculturist rank using the aquaculturist information. An example of the algorithm for acquiring the aquaculturist rank is as described above, and thus a detailed description thereof has been omitted.

(Step S1705) The rank acquiring part 531 acquires risk factor information corresponding to the aquaculturist identifier paired with the enclosure identifier, from the risk factor information storage unit 512. Then, the rank acquiring part 531 acquires a risk rank using the risk factor information. An example of the algorithm for acquiring the risk rank is as described above, and thus a detailed description thereof has been omitted.

(Step S1706) The insurance information acquiring part 532 acquires insurance information using the asset value acquired in step S1703, the aquaculturist rank acquired in step S1704, and the risk rank acquired in step S1705.

(Step S1707) The insurance information output unit 54 outputs the insurance information acquired in step S1706. The procedure returns to step S1701.

(Step S1708) The insurance information accepting unit 52 determines whether or not it has accepted information. If it has accepted information, the procedure advances to step S1709, otherwise, the procedure returns to step S1701. The information is, for example, aquaculturist information, or risk factor information. The insurance information accepting unit 52 accepts information associated with the enclosure identifier or the aquaculturist identifier.

(Step S1709) An unshown accumulating part accumulates the information received in step S1708, in the insurance information storage unit 51. The procedure returns to step S1701. The information received in step S1708 is typically accumulated in association with the enclosure identifier or the aquaculturist identifier.

Hereinafter, a specific operation of the information system B in this embodiment will be described. FIG. 15 is a conceptual diagram of the information system B.

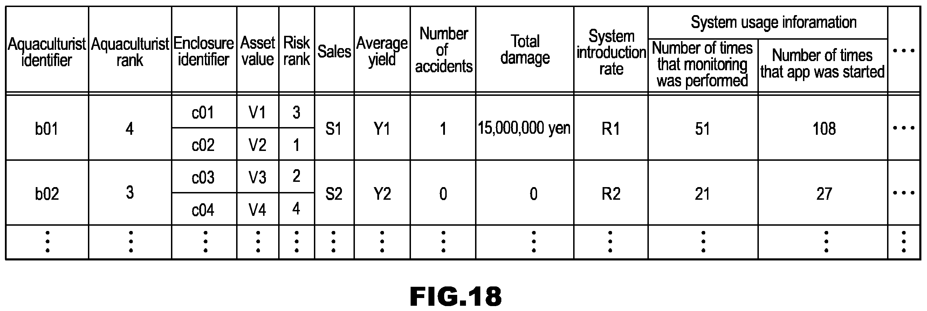

It is assumed that an aquaculturist information management table with the structure shown in FIG. 18 is stored in the aquaculturist information storage unit 511. In the aquaculturist information management table, at least two records each having "aquaculturist identifier", "aquaculturist rank", "enclosure identifier", "asset value", "risk rank", "sales", "average yield", "number of accidents", "total damage amount", "system introduction rate", and "system usage information" are stored. "System usage information" has "number of times that monitoring was performed" and "number of times that the app was started". "Aquaculturist rank" is a value calculated by the rank acquiring part 531 through the above-described algorithm for each aquaculturist. "Asset value" is information accumulated by the asset value output apparatus 1 as described in Embodiment 1. "Risk rank" is a value calculated through the above-described algorithm for each enclosure. "Sales" is information input by a user (e.g., an aquaculturist) and received from the user terminal 3. "Average yield" is a value calculated from the number of young fish input in the past and the number of dead fish automatically acquired or input in the past. "Number of accidents" and "Total damage amount" are information input by a user (e.g., an aquaculturist) and received from the user terminal 3. "System introduction rate" is information input by a user (e.g., an administrator of the insurance information output apparatus 5) and received from the user terminal 3. "Number of times that monitoring was performed" and "number of times that the app was started" are information acquired by the asset value output apparatus 1. It is assumed that V1 to V3, S1, S2, Y1, Y2, R1, R2, and the like in FIG. 18 are typically specific numeric values.

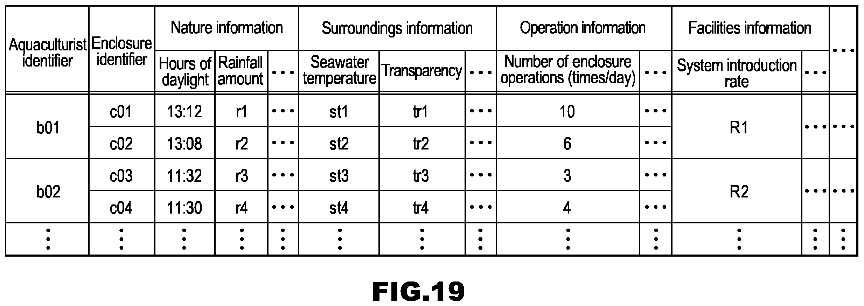

Furthermore, a risk factor information management table with the structure shown in FIG. 19 is stored in the risk factor information storage unit 512. In the risk factor information management table, at least two records each having "aquaculturist identifier", "enclosure identifier", "nature information", "surroundings information", "operation information", and "facilities information" are stored. "Nature information" in this example has, for example, "hours of daylight" and "rainfall amount". "Nature information" is, for example, information acquired from a server that manages an unshown server apparatus (a server that manages nature information, such as a server of the Japan Meteorological Agency) using, as a key, positional information of the enclosure identified with the enclosure identifier. "Surroundings information" in this example has, for example, "seawater temperature" and "transparency". "Surroundings information" is, for example, information is acquired and accumulated by the insurance information accepting unit 52. "Surroundings information" in FIG. 19 is surroundings information corresponding to the positional information paired with the enclosure identifier, which is acquired and accumulated by an unshown processing unit from the pieces of surroundings information received by the insurance information accepting unit 52. "Operation information" has "number of enclosure operations". "Number of enclosure operations" in this example is the number of operations performed on an enclosure by an aquaculturist per day. "Number of enclosure operations" is information obtained by the image analysis unit 131 of the asset value output apparatus 1 acquiring, for each day, the number of times that there is a person in an enclosure per day, from the received enclosure images, and calculating an average in a unit period (e.g., one month, one year, etc.). "Facilities information" in this example has "system introduction rate". "Facilities information" is, for example, information input by a user (e.g., an administrator of the insurance information output apparatus 5) and received from the user terminal 3. It is assumed that r1 to r4, st1 to st4, tr1 to tr4, R1, R2, and the like in FIG. 19 are typically specific numeric values.

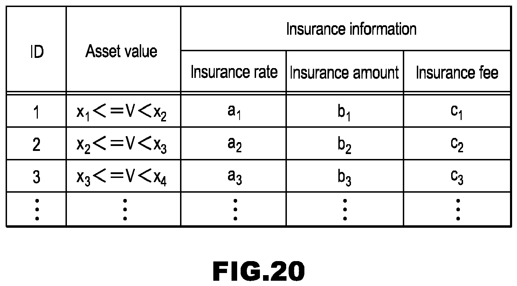

Furthermore, an asset insurance management table shown in FIG. 20 is stored in the insurance information storage unit 51. The asset insurance management table is a correspondence table for deciding on standard insurance information (insurance rate, insurance amount, and insurance fee) for an asset value (V) held thereby. Calculation formulas for acquiring specific numeric values or numeric values are typically stored in $x_1$ to $x_4$, $a_1$ to $a_3$, $b_1$ to $b_3$, $c_1$ to $c_3$, and the like in FIG. 20.

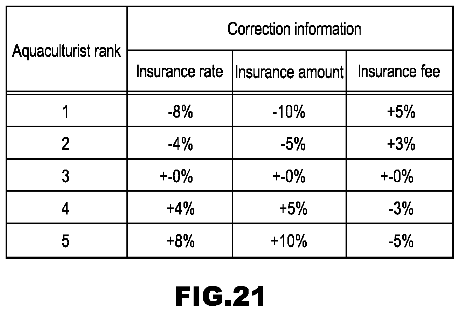

Furthermore, an aquaculturist rank correction table shown in FIG. 21 is stored in the insurance information storage unit 51. The aquaculturist rank correction table is a table for correcting a standard value acquired using FIG. 20, according to the aquaculturist rank. In FIG. 21, a standard value increases or decreases by the numeric value corresponding to the correction information, according to the aquaculturist rank.

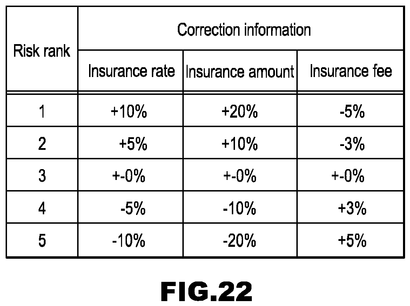

Furthermore, a risk rank correction table shown in FIG. 22 is stored in the insurance information storage unit 51. The risk rank correction table is a table for correcting a standard value acquired using FIG. 20, according to the risk rank. In FIG. 22, a standard value increases or decreases by the numeric value corresponding to the correction information, according to the risk rank.

It is assumed that, in this situation, a user (e.g., an aquaculturist or a member of an insurance company) inputs an insurance information output instruction with the enclosure identifier "c02" to a user terminal 3. Then, the user accepting unit 32 of the user terminal 3 accepts the insurance information output instruction. Then, the user processing unit 33 configures an insurance information output instruction with the enclosure identifier "c02" and with a structure suitable for transmission. Next, the user transmitting unit 34 transmits the insurance information output instruction to the insurance information output apparatus 5.

Next, the insurance information accepting unit 52 of the insurance information output apparatus 5 receives the insurance information output instruction. Next, the insurance information acquiring unit 53 acquires an enclosure identifier "c02" contained in the insurance information output instruction.

Next, the insurance information acquiring unit 53 acquires the asset value "V2" paired with the enclosure identifier "c02", from the management table in FIG. 18.

Next, the rank acquiring part 531 acquires the aquaculturist rank "4" corresponding to the aquaculturist identifier "b01" paired with the enclosure identifier "c02", from the management table in FIG. 18.

Furthermore, the rank acquiring part 531 acquires the risk rank "1" paired with the enclosure identifier "c02".

It is assumed that, next, the insurance information acquiring part 532 applies the asset value "V2" to the management table in FIG. 20, and determines that it corresponds to the record "ID = 3". Then, the insurance information acquiring part 532 acquires the standard insurance information (the insurance rate "$a_3$", the insurance amount "$b_3$", and the insurance fee "$c_3$") corresponding to the asset value "V2", from the management table in FIG. 20.

Next, the insurance information acquiring part 532 acquires correction information (the insurance rate "+4%", the insurance amount "+5%", and the insurance fee "-3%") corresponding to the aquaculturist rank "4", from the management table in FIG. 21.

Furthermore, the insurance information acquiring part 532 acquires correction information (the insurance rate "+10%", the insurance amount "+20%", and the insurance fee "-5%") corresponding to the risk rank "1", from the management table in FIG. 22.

Next, the insurance information acquiring part 532 calculates insurance information (the insurance rate "$a_3$ + 14%", the insurance amount "$b_3 \times 1.25$", and the insurance fee "$c_3 \times 0.9$"), using the standard insurance information (the insurance rate "$a_3$", the insurance amount "$b_3$", and the insurance fee "$c_3$"), the correction information (insurance rate "+4%", insurance amount "+5%", insurance fee "-3%") corresponding to the aquaculturist rank "4", and the correction information (insurance rate "+10%", insurance amount "+20%", insurance fee "-5%") corresponding to the risk rank "1".

Next, the insurance information output unit 54 transmits the acquired insurance information to the user terminal 3 from which the insurance information output instruction was transmitted.

Next, the user receiving unit 35 receives the insurance information. Then, the user processing unit 33 changes the structure of the received insurance information into a data structure suitable for output. Next, the user output unit 36 displays the insurance information.

As described above, according to this embodiment, it is possible to acquire proper insurance information using an asset value.

Furthermore, according to this embodiment, it is possible to acquire insurance information, using an asset value and aquaculturist information.

Furthermore, according to this embodiment, it is possible to acquire proper insurance information, based on the aquaculturist rank.

Furthermore, according to this embodiment, it is possible to acquire proper insurance information, based on the risk factor.

In this embodiment, the asset value output apparatus 1 may be housed inside the insurance information output apparatus 5. In this case, the insurance information output apparatus 5 includes the storage unit 11, the accepting unit 12, the processing unit 13, and the output unit 14. The storage unit 11 includes the aquaculturist information storage unit 511 and the risk factor information storage unit 512. The accepting unit 12 includes the aquatic organism group information accepting unit 121 and the insurance information accepting unit 52. The processing unit 13 includes the image analysis unit 131, the asset value acquiring unit 132, and the insurance information acquiring unit 53. The image analysis unit 131 includes the size information acquiring part 1311 and the type information acquiring part 1312. The asset value acquiring unit 132 includes the cost approach part 1321 and the market approach part 1322. The output unit 14 includes the asset value output unit 141 and the insurance information output unit 54. The insurance information acquiring unit 53 includes the rank acquiring part 531 and the insurance information acquiring part 532.

Furthermore, in this embodiment, a case was mainly described in which the insurance information output apparatus 5 acquires insurance information using an asset value calculated in Embodiment 1. However, it will be appreciated that the insurance information output apparatus 5 may acquire insurance information using an asset value manually input or the like.

Furthermore, the processing in this embodiment may be realized using software. This software may be distributed via a software download or the like. Also, this software may be recorded on a recording medium such as a CD-ROM and distributed. Note that this applies to the other embodiments in the present description. Software that realizes the insurance information output apparatus 5 in this embodiment is a program as follows. Specifically, this program is, for example, a program for causing a computer to function as: an insurance information acquiring unit that acquires insurance information regarding insurance, using the asset value output by an asset value output apparatus 1; and an insurance information output unit that outputs the insurance information.

Embodiment 3

In this embodiment, an information system including a finance related information output apparatus that acquires and outputs finance related information using an asset value of a cultured aquatic organism group will be described. The finance related information is, for example, insurance information, later-described loan amount information, later-described investment amount information, or later-described credit information. The credit information may be the same as the aquaculturist rank described above.

In the case in which the finance related information is insurance information, the finance related information output apparatus is the insurance information output apparatus 5 described above.

Furthermore, in this embodiment, an information system including a finance related information output apparatus that acquires and outputs finance related information also using an aquaculturist rank will be described.

Furthermore, in this embodiment, an information system including a finance related information output apparatus that acquires and outputs finance related information also using risk factor information will be described.

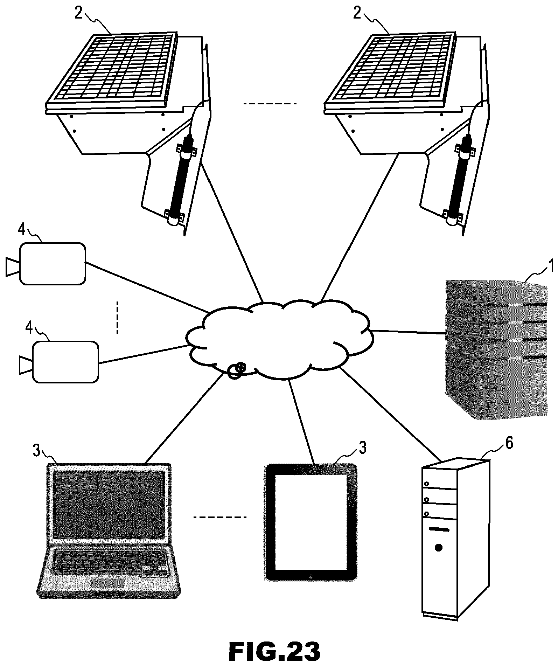

FIG. 23 is a conceptual diagram of an information system C in this embodiment. The information system C includes the asset value output apparatus 1, the one or at least two feeders 2, the one or at least two user terminals 3, the one or at least two cameras 4, and a finance related information output apparatus 6.

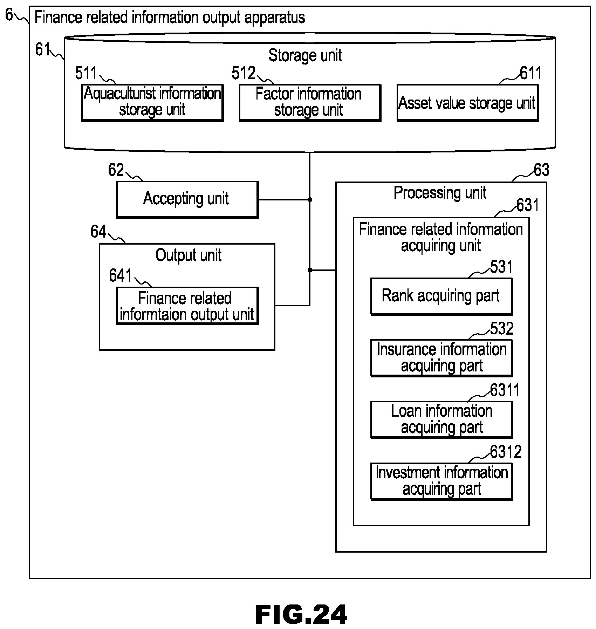

FIG. 24 is a block diagram of the finance related information output apparatus 6 constituting the information system C in this embodiment.

The finance related information output apparatus 6 includes a storage unit 61, an accepting unit 62, a processing unit 63, and an output unit 64.

The storage unit 61 includes the aquaculturist information storage unit 511, the risk factor information storage unit 512, and an asset value storage unit 611. The processing unit 63 includes a finance related information acquiring unit 631. The finance related information acquiring unit 631 includes the rank acquiring part 531, the insurance information acquiring part 532, a loan information acquiring part 6311, and an investment information acquiring part 6312. The output unit 64 includes a finance related information output unit 641.

Various types of information are stored in the storage unit 61 constituting the finance related information output apparatus 6. The various types of information are, for example, aquaculturist information, risk factor information, asset values, and later-described various operation expressions.

One or at least two asset values are stored in the asset value storage unit 611. An asset value is typically stored in the asset value storage unit 611 in association with one or more identifiers out of an aquaculturist identifier and an enclosure identifier. It is preferable that the asset value in the asset value storage unit 611 is the asset value acquired by the asset value output apparatus 1, but may also be an asset value input by a user, an asset value acquired by another apparatus, or the like. The asset value in this example is an asset value of an aquatic organism group.

The accepting unit 62 accepts various types of instructions, information, and the like. The accepting is typically receiving from an external apparatus via a wired or wireless communication line. The accepting may be realized by input made by a user using an input device such as a keyboard, a mouse, or a touch panel, or through processing such as later-described image processing. The accepting may be considered as a concept that encompasses accepting information read from a storage medium such as an optical disk, a magnetic disk, or a semiconductor memory.

The processing unit 63 performs various types of processing. The various types of processing are, for example, processes that are performed by the finance related information acquiring unit 631, the rank acquiring part 531, the insurance information acquiring part 532, the loan information acquiring part 6311, and the investment information acquiring part 6312.

The finance related information acquiring unit 631 acquires finance related information using the asset value stored in the asset value storage unit 611. The finance related information is information regarding finance. The finance related information is, for example, the above-described insurance information, loan information, or investment information. The loan information is information regarding a loan. The loan information is, for example, information regarding a loan amount or a loan condition (e.g., a loan period, etc.). The investment information is information regarding an investment. The investment information is information regarding an investment amount or an investment condition.

It is preferable that the finance related information acquiring unit 631 acquires finance related information using an asset value and aquaculturist information.

It is preferable that the finance related information acquiring unit 631 acquires insurance information, also using one or more pieces of risk factor information.

The loan information acquiring part 6311 acquires loan information using an asset value. It is preferable that the loan information acquiring part 6311 acquires loan information using an asset value and a rank. For example, the loan information acquiring part 6311 acquires loan information using one or more ranks out of the aquaculturist rank and the risk rank.

For example, the loan information acquiring part 6311 acquires a larger loan amount in accordance with an increase in the asset value. For example, the loan information acquiring part 6311 substitutes the asset value in the asset value storage unit 611 for an operation expression for outputting the loan amount, using the asset value as a parameter, and executes the operation expression, thereby calculating the loan amount. In this case, the operation expression is an increasing function in which an asset value is taken as a parameter. For example, the loan information acquiring part 6311 refers to a correspondence table having at least two pieces of correspondence information indicating correspondence between the asset value range and the loan amount, the correspondence table being stored in the storage unit 61, and acquires a loan amount corresponding to the asset value in the asset value storage unit 611, from the correspondence table.

For example, the loan information acquiring part 6311 acquires a larger loan amount in accordance with an increase in the aquaculturist rank. For example, the loan information acquiring part 6311 substitutes the aquaculturist rank for an operation expression for outputting the loan amount, using the aquaculturist rank as a parameter, and executes the operation expression, thereby calculating the loan amount. In this case, the operation expression is an increasing function in which an aquaculturist rank is taken as a parameter. For example, the loan information acquiring part 6311 refers to a correspondence table having at least two pieces of correspondence information indicating correspondence between the aquaculturist rank and the loan amount, the correspondence table being stored in the storage unit 61, and acquires a loan amount corresponding to the aquaculturist rank, from the correspondence table.

For example, the loan information acquiring part 6311 acquires a smaller loan amount in accordance with an increase in the risk rank. For example, the loan information acquiring part 6311 substitutes the risk rank for an operation expression for outputting the loan amount, using the risk rank as a parameter, and executes the operation expression, thereby calculating the loan amount. In this case, the operation expression is a decreasing function in which a risk rank is taken as a parameter. For example, the loan information acquiring part 6311 refers to a correspondence table having at least two pieces of correspondence information indicating correspondence between the risk rank and the loan amount, the correspondence table being stored in the storage unit 61, and acquires a loan amount corresponding to the risk rank, from the correspondence table. It will be appreciated that the loan may include a small investment loan such as crowdfunding.

There is no limitation on the algorithm through which the loan information acquiring part 6311 acquires loan information.

The investment information acquiring part 6312 acquires investment information using an asset value. It is preferable that the investment information acquiring part 6312 acquires investment information using an asset value and a rank. For example, the investment information acquiring part 6312 acquires investment information, using one or more ranks out of the aquaculturist rank and the risk rank.

For example, the investment information acquiring part 6312 acquires a higher investment amount in accordance with an increase in the asset value. For example, the investment information acquiring part 6312 substitutes the asset value in the asset value storage unit 611 for an operation expression for outputting the investment amount, using the asset value as a parameter, and executes the operation expression, thereby calculating the investment amount. In this case, the operation expression is an increasing function in which an asset value is taken as a parameter. For example, the investment information acquiring part 6312 refers to a correspondence table having at least two pieces of correspondence information indicating correspondence between the asset value range and the investment amount, the correspondence table being stored in the storage unit 61, and acquires an investment amount corresponding to the asset value in the asset value storage unit 611, from the correspondence table.

For example, the investment information acquiring part 6312 acquires a higher investment amount in accordance with an increase in the aquaculturist rank. For example, the investment information acquiring part 6312 substitutes the aquaculturist rank for an operation expression for outputting the investment amount, using the aquaculturist rank as a parameter, and executes the operation expression, thereby calculating the investment amount. In this case, the operation expression is an increasing function in which an aquaculturist rank is taken as a parameter. For example, the investment information acquiring part 6312 refers to a correspondence table having at least two pieces of correspondence information indicating correspondence between the aquaculturist rank and the investment amount, the correspondence table being stored in the storage unit 61, and acquires an investment amount corresponding to the aquaculturist rank, from the correspondence table.

For example, the investment information acquiring part 6312 acquires a smaller investment amount in accordance with an increase in the risk rank. For example, the investment information acquiring part 6312 substitutes the risk rank for an operation expression for outputting the investment amount, using the risk rank as a parameter, and executes the operation expression, thereby calculating the investment amount. In this case, the operation expression is a decreasing function in which a risk rank is taken as a parameter. For example, the investment information acquiring part 6312 refers to a correspondence table having at least two pieces of correspondence information indicating correspondence between the risk rank and the investment amount, the correspondence table being stored in the storage unit 61, and acquires an investment amount corresponding to the risk rank, from the correspondence table.

There is no limitation on the algorithm through which the investment information acquiring part 6312 acquires investment information.

The output unit 64 outputs various types of information. The output is, for example, transmission to the user terminal 3. Note that the output may also be displaying.

The finance related information output unit 641 outputs the finance related information acquired by the finance related information acquiring unit 631.

The storage unit 61 and the asset value storage unit 611 are preferably non-volatile storage media, but can also be realized by volatile storage media.

There is no limitation on the procedure in which information is stored in the storage unit 61 and the like. For example, information may be stored in the storage unit 61 and the like via a storage medium, information transmitted via a communication line or the like may be stored in the storage unit 61 and the like, or information input via an input device may be stored in the storage unit 61 and the like.

Tor example, the accepting unit 62 is realized by a wireless or wired communication part.

The processing unit 63, the finance related information acquiring unit 631, the loan information acquiring part 6311, and the investment information acquiring part 6312 are typically realized by MPUs, memories, or the like. Typically, the processing procedure of the processing unit 63 and the like is realized by software, and the software is stored in a storage medium such as a ROM. Note that the processing procedure may be realized by hardware (dedicated circuits).

For example, the output unit 64 and the finance related information output unit 641 are realized by wireless or wired communication parts.

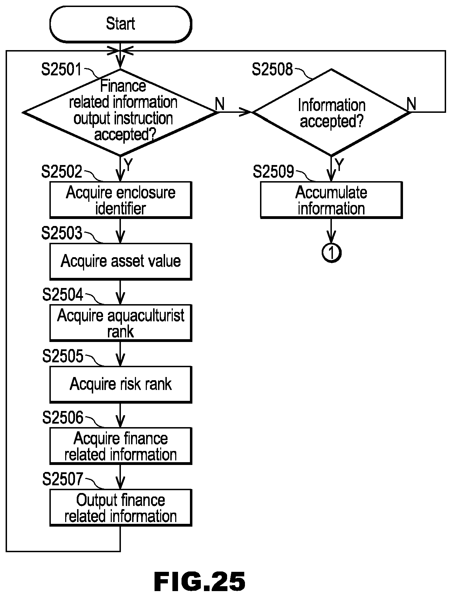

Next, an operation example of the finance related information output apparatus 6 constituting the information system C will be described with reference to the flowchart in FIG. 25.

(Step S2501) The accepting unit 62 determines whether or not it has accepted a finance related information output instruction. If it has accepted a finance related information output instruction, the procedure advances to step S2502, otherwise, the procedure advances to step S2508.

(Step S2502) The finance related information acquiring unit 631 acquires an enclosure identifier contained in the finance related information output instruction accepted in step S2501.

(Step S2503) The finance related information acquiring unit 631 acquires an asset value paired with the enclosure identifier acquired in step S2502, from the asset value storage unit 611.

(Step S2504) The rank acquiring part 531 acquires aquaculturist information corresponding to the aquaculturist identifier paired with the enclosure identifier, from the aquaculturist information storage unit 511. Then, the rank acquiring part 531 acquires an aquaculturist rank using the aquaculturist information. An example of the algorithm for acquiring the aquaculturist rank is as described above, and thus a detailed description thereof has been omitted.

(Step S2505) The rank acquiring part 531 acquires risk factor information corresponding to the aquaculturist identifier paired with the enclosure identifier, from the risk factor information storage unit 512. Then, the rank acquiring part 531 acquires a risk rank using the risk factor information. An example of the algorithm for acquiring the risk rank is as described above, and thus a detailed description thereof has been omitted.

(Step S2506) The finance related information acquiring unit 631 acquires finance related information, using the asset value acquired in step S2503, the aquaculturist rank acquired in step S2504, and the risk rank acquired in step S2505.

In the case in which the finance related information is insurance information, the insurance information acquiring part 532 acquires insurance information, using an asset value, an aquaculturist rank, and a risk rank. In the case in which the finance related information is loan information, the loan information acquiring part 6311 acquires loan information, using an asset value, an aquaculturist rank, and a risk rank. In the case in which the finance related information is investment information, the investment information acquiring part 6312 acquires investment information, using an asset value, an aquaculturist rank, and a risk rank.

It is also possible that the finance related information acquiring unit 631 acquires at least two types of finance related information (e.g., loan information and investment information).

(Step S2507) The finance related information output unit 54 outputs one or more types of finance related information acquired in step S2506. The procedure returns to step S2501.

(Step S2508) The accepting unit 62 determines whether or not it has accepted information. If it has accepted information, the procedure advances to step S2509, otherwise, the procedure returns to step S2501. The information is, for example, aquaculturist information or risk factor information. The accepting unit 62 accepts information associated with the enclosure identifier or the aquaculturist identifier.

(Step S2509) An unshown accumulating part accumulates the information received in step S2508 in the storage unit 61. The procedure returns to step S2501. The information received in step S2508 is typically accumulated in association with the enclosure identifier or the aquaculturist identifier.

In the flowchart in FIG. 25, the processing ends at power off or at an interruption of termination processing.

Hereinafter, a specific operation of the information system C in this embodiment will be described. FIG. 23 is a conceptual diagram of the information system B. The processing that acquires insurance information was described in Embodiment 2, and thus, in this embodiment, processing that acquires loan amount information and investment amount information will be described.

It is assumed that an aquaculturist information management table with the structure shown in FIG. 18 is stored in the aquaculturist information storage unit 511 It is assumed that.

Furthermore, it is assumed that a risk factor information management table with the structure shown in FIG. 19 is stored in the risk factor information storage unit 512.

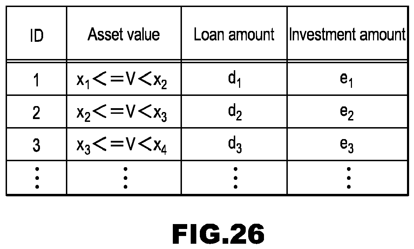

Furthermore, an asset finance related information management table shown in FIG. 26 is stored in the storage unit 61. The asset finance related information management table is a correspondence table for deciding on standard finance related information (loan amount, and investment amount) for an asset value (V) held thereby. Calculation formulas for acquiring specific numeric values or numeric values are typically stored in $x_1$ to $x_4$, $d_1$ to $d_3$, $e_1$ to $e_3$, and the like in FIG. 24. The loan amount is an example of the loan information, and the investment amount is an example of the investment information.

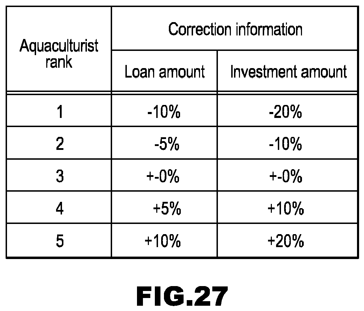

Furthermore, an aquaculturist rank correction table shown in FIG. 27 is stored in the storage unit 61. The aquaculturist rank correction table is a table for correcting a standard value acquired using FIG. 26, according to the aquaculturist rank. In FIG. 27, a standard value increases or decreases by the numeric value corresponding to the correction information, according to the aquaculturist rank.

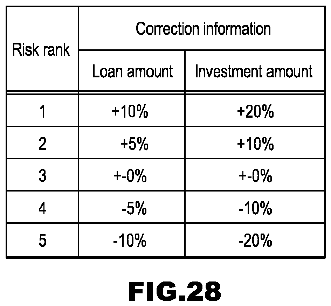

Furthermore, a risk rank correction table shown in FIG. 228 is stored in the storage unit 61. The risk rank correction table is a table for correcting a standard value acquired using FIG. 26, according to the risk rank. In FIG. 28, a standard value increases or decreases by the numeric value corresponding to the correction information, according to the risk rank.

It is assumed that, in this situation, a user (e.g., an aquaculturist, or a member of a financial company) inputs a finance related information output instruction with the aquaculturist identifier "b01" to a user terminal 3. Then, the user accepting unit 32 of the user terminal 3 accepts the finance related information output instruction. Then, the user processing unit 33 configures a finance related information output instruction with the aquaculturist identifier "b01" and with a structure suitable for transmission. Next, the user transmitting unit 34 transmits the finance related information output instruction to the finance related information output apparatus 6.

Next, the accepting unit 62 of the finance related information output apparatus 6 receives the finance related information output instruction. Next, the finance related information acquiring unit 631 acquires the aquaculturist identifier "b01" contained in the insurance information output instruction.

Next, the finance related information acquiring unit 631 acquires the asset values "V1" and "V2" paired with the aquaculturist identifier "b01", from the management table in FIG. 18. Then, the finance related information acquiring unit 631 adds the two asset values, thereby obtaining "V1+V2".

Next, the rank acquiring part 531 acquires the aquaculturist rank "4" corresponding to the aquaculturist identifier "b01", from the management table in FIG. 18.

Furthermore, the rank acquiring part 531 acquires the risk ranks "3" and "1" paired with the aquaculturist identifier "b01". The rank acquiring part 531 acquires "2" that is a representative value (e.g., an average in this example) of the two risk ranks "3" and "1". That is to say, the rank acquiring part 531 acquires a representative value using multiple risk ranks. Although the representative value in this example is an average, it may be the largest value, the smallest value, a median, or the like.

It is assumed that, next, the loan information acquiring part 6311 applies the asset value "V1+V2" to the management table in FIG. 26, and, for example, determines that it corresponds to the record "ID = 3". Then, the loan information acquiring part 6311 acquires the standard loan amount "$d_3$" corresponding to asset value "V1+V2", from the management table in FIG. 26.

Next, the loan information acquiring part 6311 acquires the correction information "+5%" corresponding to the aquaculturist rank "4", from the management table in FIG. 27.

Furthermore, the loan information acquiring part 6311 acquires the correction information "+5%" corresponding to the risk rank "2", from the management table in FIG. 28.

Next, the loan information acquiring part 6311 calculates "+10%" from the correction information "+5%" corresponding to the aquaculturist rank "4" and the correction information "+5%" corresponding to the risk rank "2", and calculates the loan amount "$d_3 \times 1.1$" using the "+10%" and the standard loan amount "$d_3$".

It is assumed that, next, the investment information acquiring part 6312 applies the asset value "V1+V2" to the management table in FIG. 26, and, for example, determines that it corresponds to the record "ID = 3". Then, the investment information acquiring part 6312 acquires the standard investment amount "$e_3$" corresponding to asset value "V1+V2", from the management table in FIG. 26.

Next, the investment information acquiring part 6312 acquires the correction information "+10%" corresponding to the aquaculturist rank "4", from the management table in FIG. 27.

Furthermore, the investment information acquiring part 6312 acquires the correction information "+10" corresponding to the risk rank "2", from the management table in FIG. 28.

Next, the investment information acquiring part 6312 calculates "+20%" from the correction information "+10%" corresponding to the aquaculturist rank "4" and the correction information "+10%" corresponding to the risk rank "2", and calculates the loan amount "$d_3 \times 1.2$" using the "+20%" and the standard investment amount "$e_3$".

Next, the finance related information output unit 641 transmits the calculated loan amount and investment amount to the user terminal 3 to which the finance related information output instruction was transmitted.

Next, the user receiving unit 35 of the user terminal 3 receives the loan amount and the investment amount. Then, the user processing unit 33 changes the structure of the received loan amount and investment amount into a data structure suitable for output. Next, the user output unit 36 displays the loan amount and the investment amount.

As described above, according to this embodiment, it is possible to acquire proper finance related information using an asset value.

Furthermore, according to this embodiment, it is possible to acquire finance related information, using an asset value and aquaculturist information.

Furthermore, according to this embodiment, it is possible to acquire proper finance related information, based on the aquaculturist rank.

Furthermore, according to this embodiment, it is possible to acquire proper finance related information, based on the risk factor.

In this embodiment, the asset value output apparatus 1 may be housed inside the finance related information output apparatus 6.

Software that realizes the finance related information output apparatus 6 in this embodiment is a program as follows. Specifically, this program is a program for causing a computer capable of accessing an asset value storage unit in which an asset value of an aquatic organism group is stored in association with an aquaculturist identifier for identifying an aquaculturist or an enclosure identifier for identifying an enclosure, to function as: a finance related information acquiring unit that acquires finance related information regarding finance, using the asset value stored in the asset value storage unit; and a finance related information output unit that outputs the finance related information.

Embodiment 4

In this embodiment, an information system including a damage amount output apparatus that accepts an identifier for specifying an enclosure or the like in which a damage has occurred, the enclosure being covered by insurance, acquires information acquired using the identifier (e.g., scale information for specifying a scale of an enclosure), from a storage unit, and calculates a damage amount based on the information will be described.

Furthermore, in this embodiment, an information system including a damage amount output apparatus that automatically acquires a reimbursement unit price, which is basic information when deciding on a damage amount, will be described.

Furthermore, in this embodiment, an information system including a damage amount output apparatus that performs enclosure presence determination processing that determines whether or not there is an enclosure, using one or more images obtained by capturing images of the enclosure will be described.

Furthermore, in this embodiment, an information system including a damage amount output apparatus that performs operation execution determination processing that determines whether or not an operation by an aquaculturist is executed will be described. If one or more images obtained by capturing images of an enclosure are used in the operation execution determination processing, a case will be described in which the positional information of a movable member that moves together with an aquaculturist or a ship is used.

Furthermore, in this embodiment, an information system including a damage amount output apparatus that performs damage occurrence determination processing that determines whether or not a damage has occurred will be described. If one or more images obtained by capturing images of an enclosure are used in the damage occurrence determination processing, for example, a case will be described in which environmental information such as a rainfall amount or an atmospheric temperature is used.

A conceptual diagram of an information system D in this embodiment is the same as FIG. 23, except that reference numeral 6 is changed to reference numeral 7. The information system D includes the asset value output apparatus 1, the one or at least two feeders 2, the one or at least two user terminals 3, the one or at least two cameras 4, and a damage amount output apparatus 7.

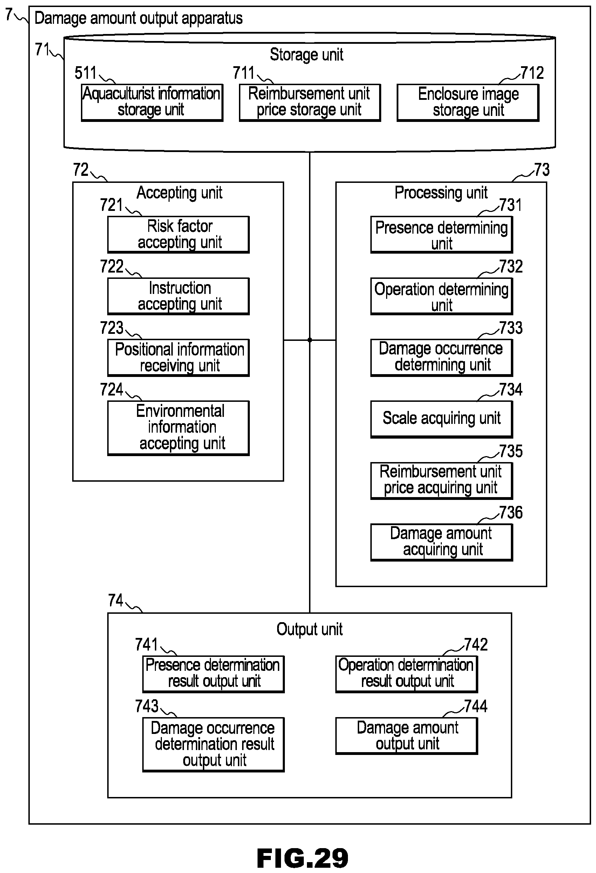

FIG. 29 is a block diagram of the damage amount output apparatus 7 constituting the information system D. The damage amount output apparatus 7 includes a storage unit 71, an accepting unit 72, a processing unit 73, and an output unit 74.

The storage unit 71 includes the aquaculturist information storage unit 511, a reimbursement unit price storage unit 711, and an enclosure image storage unit 712.

The accepting unit 72 includes a risk factor accepting unit 721, an instruction accepting unit 722, a positional information receiving unit 723, and an environmental information accepting unit 74.

The processing unit 73 includes a presence determining unit 731, an operation determining unit 732, a damage occurrence determining unit 733, a scale acquiring unit 734, a reimbursement unit price acquiring unit 735, and a damage amount acquiring unit 736.

The output unit 74 includes a presence determination result output unit 741, an operation determination result output unit 742, a damage occurrence determination result output unit 743, and a damage amount output unit 744.

Various types of information are stored in the storage unit 71 constituting the damage amount output apparatus 7. The various types of information are, for example, aquaculturist information, later-described unit price management information, a later-described reimbursement unit price, a later-described enclosure image, and one or more types of environmental information. The environmental information is information regarding the environment. The environmental information indicates, for example, a water temperature, an atmospheric temperature, a rainfall amount, or the like. The environmental information is, for example, information acquired from an unshown server. It is preferable that the environmental information in the storage unit 71 is associated with the date and time at which the environmental information occurred.

One or more pieces of aquaculturist information containing an aquaculturist identifier or an enclosure identifier, and scale information are stored in the aquaculturist information storage unit 511, the aquaculturist information being information regarding an aquaculturist of an aquatic organism group. The scale information is information for specifying the scale of an enclosure. The scale information is, for example, one or more pieces of information out of the number of aquatic organisms cultured in an enclosure, the area of an enclosure, and the volume of an enclosure.

One or at least two pieces of reimbursement unit price information are stored in the reimbursement unit price storage unit 711. It is also possible that one or at least two pieces of unit price management information containing reimbursement unit price information are stored in the reimbursement unit price storage unit 711. The unit price management information contains a factor condition that is a condition regarding risk factor information and reimbursement unit price information. For example, at least two pieces of unit price management information containing a risk level, a factor condition, and reimbursement unit price information are stored in the reimbursement unit price storage unit 711. It is preferable that a group of at least two pieces of unit price management information is stored in the reimbursement unit price storage unit 711 in association with one or more pieces of information out of type information indicating the type of culture targets, an area identifier for identifying an area, and an aquaculturist rank. The reimbursement unit price information is information for specifying a reimbursement unit price. The reimbursement unit price is a damage amount per unit amount of an enclosure. The unit amount of an enclosure is, for example, the unit number of aquatic organisms in an enclosure (e.g., per one aquatic organism, per 100 aquatic organisms, etc.), the unit area (e.g., 1 m², 100 m², etc.), or the unit volume (e.g., 1 m³, 50 m³, etc.). The factor condition is, for example, information for specifying the range of the environmental information.

One or more enclosure images obtained by capturing images of an enclosure are stored in the enclosure image storage unit 712. The one or more enclosure images are, for example, images captured by the camera 4. The one or more enclosure images are, typically, associated with an enclosure identifier. It is also possible that the one or more enclosure images are associated with positional information. It is sufficient that the one or more enclosure images are associated with information for specifying an enclosure at which the images were captured. The one or more enclosure images are, for example, images captured by the camera 4, an unshown artificial satellite, an unshown aircraft, an unshown drone, or the like, and images received from the camera 4, an artificial satellite, or the like. It will be appreciated that there is no limitation on the format of the one or more enclosure images.

The accepting unit 72 accepts various types of instructions, information, and the like. The various types of instructions, information, and the like are, for example, risk factor information, later-described damage amount calculation instruction, and later-described positional information.

The accepting is typically receiving from an external apparatus via a wired or wireless communication line. The accepting may be realized by input made by a user using an input device such as a keyboard, a mouse, or a touch panel, or through processing such as later-described image processing. The accepting may be considered as a concept that encompasses accepting information read from a storage medium such as an optical disk, a magnetic disk, or a semiconductor memory.

The risk factor accepting unit 721 accepts one or more pieces of risk factor information. For example, the risk factor accepting unit 721 receives one or more pieces of risk factor information from an unshown external apparatus or the user terminal 3. It is preferable that the risk factor accepting unit 721 accepts positional information or an enclosure identifier together with risk factor information.

The instruction accepting unit 722 accepts a damage amount calculation instruction containing an aquaculturist identifier or an enclosure identifier. The damage amount calculation instruction is an instruction to calculate a damage amount. For example, the instruction accepting unit 722 receives a damage amount calculation instruction from the user terminal 3.

The positional information receiving unit 723 receives one or more pieces of positional information corresponding to an aquaculturist. The one or more pieces of positional information corresponding to an aquaculturist are, for example, positional information for specifying the position of a mobile terminal of an aquaculturist, positional information for specifying the position of a terminal installed in a ship, or positional information for specifying the position of a user terminal 3. The positional information receiving unit 723 is, for example, a GPS receiver. The positional information is typically expressed as (latitude, longitude) but may have other data structures.

The environmental information accepting unit 74 accepts one or at least two pieces of environmental information. For example, the environmental information accepting unit 74 receives one or more pieces of environmental information from an unshown server (e.g., a server of the Japan Meteorological Agency). For example, the environmental information accepting unit 74 accepts one or more pieces of environmental information input from the user.

The processing unit 73 performs various types of processing. The various types of processing are, for example, processes that are performed by the presence determining unit 731, the operation determining unit 732, the damage occurrence determining unit 733, the scale acquiring unit 734, the reimbursement unit price acquiring unit 735, and the damage amount acquiring unit 736.

Furthermore, the processing unit 73 accumulates the one or more pieces of risk factor information accepted by the risk factor accepting unit 721, in the storage unit 71. The processing unit 73 accumulates the one or more pieces of positional information received by the positional information receiving unit 723, in the storage unit 71, in association with one or more identifiers out of the aquaculturist identifier, the enclosure identifier, the terminal identifier, and the like. The processing unit 73 accumulates the one or more pieces of environmental information accepted by the environmental information accepting unit 74, in the storage unit 71, in association with one or more pieces of information out of the date and time, the positional information, the area identifier, and the like.

The presence determining unit 731 determines whether or not there is an enclosure, using one or more enclosure images. This processing is referred to as enclosure presence determination processing.

The presence determining unit 731 operates, for example, as follows. That is to say, the presence determining unit 731 acquires an enclosure identifier contained in an instruction such as a damage amount calculation instruction accepted by the instruction accepting unit 722. Next, the presence determining unit 731 acquires one or more enclosure images paired with the enclosure identifier, from the enclosure image storage unit 712. Next, the presence determining unit 731 determines whether or not there is an enclosure in the images, using the acquired one or more enclosure images.

Example of the method for determining that an enclosure is a sea or lake enclosure include determining that (a) multiple perfectly circular or square enclosures with the same shape and the same size are arranged adjacent to each other, and that (b) an enclosure does not move in units of days or time compared with other movable members such as ships.

Furthermore, example of the method for determining that an enclosure is a shrimp farm pond on land include determining that (a) there re ponds in the shape of squares, rectangles, or the like arranged adjacent to each other, that (b) there is aeration equipment that is necessary to culture shrimps at high density, and that (c) there is a spiral flow appearing on a pond surface due to aeration.

The presence determining unit 731 can perform the above-described determination, for example, through the following three types of methods.

(1) Method through Machine Learning

The presence determining unit 731 configures a learning module through a machine learning algorithm by performing training with one or more enclosure images as one or more positive example images and one or more non-enclosure images as one or more negative example images. Then, the presence determining unit 731 classifies acquired one or more enclosure images into enclosure images or non-enclosure images, using the learning module and the machine learning algorithm. Then, upon determining from the classification result that the number of enclosure images is large enough to satisfy a predetermined condition (e.g., the proportion of enclosure images is at least a threshold value, or the number of enclosure images is at least a threshold value), the presence determining unit 731 determines that there is an enclosure. On the other hand, upon determining from the classification result that the number of non-enclosure images is large enough to satisfy a predetermined condition (e.g., the proportion of non-enclosure images is at least a threshold value, or the number of non-enclosure images is at least a threshold value), the presence determining unit 731 determines that there is an enclosure.

It will be appreciated that there is no limitation on the machine learning algorithm, and examples thereof include deep learning, SVM, decision tree, random forest, and the like.

Furthermore, in machine learning, if one or more positive example images and one or more negative example images, or a vector in which features acquired from each of the one or more positive example images are taken as elements and a vector in which features acquired from each of the one or more negative example images are taken as elements are given to a machine learning function (e.g., fasttext, TinySVM, various randomForest functions, etc.), a learning module for classification as to whether an image is a positive example image or a negative example image is configured.

Furthermore, in machine learning, if acquired one or more enclosure images or a vector in which features acquired from each of the enclosure images are taken as elements, and a learning module are given as arguments to a machine learning function (e.g., fasttext, TinySVM, various randomForest functions, etc.), a classification result (information indicating whether or not an image is an enclosure image) can be obtained. This processing is classification processing using machine learning, and similar to the classification processing through machine learning that is used by the above-described type information acquiring part 1312.

(2) Method through Object Recognition

The presence determining unit 731 performs object recognition in the acquired one or more enclosure images, thereby detecting one or more objects. The object recognition is a known technology. Then, the presence determining unit 731 acquires arrangement information indicating the shapes of objects, the sizes (sizes in the image), and the positions of the objects in the image. Then, if the information on an object acquired from an enclosure image satisfies a predetermined condition, the presence determining unit 731 determines that there is actually an enclosure identified with the enclosure identifier. It is assumed that the condition is stored in the storage unit 71.

For example, in the case in which an enclosure is a sea or lake enclosure, for example, upon determining from the information on objects acquired from an enclosure image that substantially circular or square multiple objects with substantially the same shape and substantially the same size are arranged adjacent to each other, the presence determining unit 731 determines that there is an enclosure in the enclosure image. Then, upon determining that the number of one or more enclosure images acquired is large enough to satisfy a predetermined condition (e.g., all the one or more enclosure images, at the proportion that is least a threshold value, in the number that is least a threshold value, one or more, etc.) and that there is an enclosure, the presence determining unit 731 determines that there is actually an enclosure identified with the enclosure identifier.

Furthermore, for example, in the case in which an enclosure is a sea or lake enclosure, for example, the presence determining unit 731 recognizes one or more objects from at least two enclosure images acquired from the same camera 4 at different times, and determines that there is actually an enclosure identified with the enclosure identifier, for example, if attribute values (e.g., shapes, sizes, or arrangements) of the one or more objects in the enclosure images match each other, substantially each other, or have a similarity that is at least a threshold value.

Furthermore, for example, in the case in which an enclosure is a shrimp farm pond on land, for example, upon determining from the information on objects acquired from an enclosure image that substantially square or rectangular multiple objects with substantially the same size are arranged adjacent to each other, the presence determining unit 731 determines that there is an enclosure in the enclosure image. Then, upon determining that the number of one or more enclosure images acquired is large enough to satisfy a predetermined condition (e.g., all the one or more enclosure images, at the proportion that is least a threshold value, in the number that is least a threshold value, one or more, etc.) and that there is an enclosure, the presence determining unit 731 determines that there is actually an enclosure identified with the enclosure identifier.

Furthermore, for example, in the case in which an enclosure is a shrimp farm pond on land, for example, if a group of attribute values (an attribute value vector) of any object acquired from an enclosure image is similar, enough to satisfy a predetermined condition, to a group of attribute values (attribute value vector) of an object of aeration equipment, the presence determining unit 731 determines that there is actually an enclosure identified with the enclosure identifier. In this case, it is assumed that such an attribute value vector of an object of aeration equipment is stored in the storage unit 71.

Furthermore, for example, in the case in which an enclosure is a shrimp farm pond on land, for example, if an attribute value vector of any object acquired from an enclosure image is similar, enough to satisfy a predetermined condition, to an attribute value vector acquired from an image of a spiral flow appearing on a pond surface due to aeration, the presence determining unit 731 determines that there is actually an enclosure identified with the enclosure identifier. In this case, it is assumed that such an attribute value vector acquired from an image of a spiral flow appearing on a pond surface due to aeration is stored in the storage unit 71.

(3) Method using Image Similarity

For example, it is assumed that a positive example vector, which is an average of vectors acquired from one or more positive example images that are one or more enclosure images, and a negative example vector, which is an average of vectors acquired from one or more negative example images that are non-enclosure images, are stored in the storage unit 71. Then, the presence determining unit 731 acquires a vector from acquired one or more enclosure images, calculates a distance between the vector and the positive example vector and a distance between the vector and the negative example vector, and compares the distances, wherein the presence determining unit determines that there is an enclosure in the enclosure image in the case in which the distance to the positive example vector is a shorter distance, and determines that there is no enclosure in the enclosure image in the case in which the distance to the positive example vector is a longer distance.

Alternatively, for example, it is assumed that a positive example vector, which is an average of vectors acquired from one or more positive example images that are one or more enclosure images, is stored in the storage unit 71. Then, the presence determining unit 731 acquires a vector from acquired one or more enclosure images, and calculates a distance between the vector and the positive example vector, wherein the presence determining unit determines that there is an enclosure in the enclosure image in the case in which the distance is short enough to satisfy a predetermined condition (at most a threshold value or smaller than the threshold value, etc.), and determines that there is no enclosure in the enclosure image in the case in which the distance is not short enough to satisfy a predetermined condition.

The operation determining unit 732 determines whether or not an operation on an enclosure is performed by an aquaculturist. This processing is referred to as operation execution determination processing.

For example, the operation determining unit 732 determines whether or not an operation on an enclosure is performed by an aquaculturist, using one or more images obtained by capturing an image of the enclosure. Hereinafter, four examples of the operation execution determination processing using an enclosure image will be described.

(1) For example, the operation determining unit 732 performs object recognition in one or more enclosure images, and, upon determining that there is an object that is a ship in an enclosure image in a time period and there is no object that is a ship in an enclosure image in another time period, the operation determining unit determines that an operation on an enclosure is performed by an aquaculturist, and acquires a determination result (e.g., "1" indicating that an operation is performed). For example, the operation determining unit 732 performs object recognition in one or more enclosure images, and, upon determining that there is no object that is a ship in enclosure images in any time periods, the operation determining unit determines that no operation on an enclosure is performed by an aquaculturist, and acquires a determination result (e.g., "0" indicating that no operation is performed). Whether or not there is a ship in an enclosure image can be determined through an image object recognition technology, and thus detailed description thereof has been omitted.

(2) For example, the operation determining unit 732 performs object recognition in one or more enclosure images, and the operation determining unit determines that an operation on an enclosure is performed by an aquaculturist upon determining that there is a predetermined facility such as an automatic feeder 2 in an enclosure image, and determines that no operation on an enclosure is performed by an aquaculturist upon determining that there is no predetermined facility such as an automatic feeder 2. Whether or not there is a predetermined facility such as an automatic feeder 2 can be determined through an image object recognition technology.

(3) For example, the operation determining unit 732 acquires an average of pixels of one or more enclosure images. Then, if the average is similar, enough to satisfy a predetermined condition, to a value of a farm region in which farming is performed, it is determined that an operation on an enclosure is performed by an aquaculturist. If the average is similar, enough to satisfy a predetermined condition, to a value of a farm region in which farming has been suspended, it is determined that no operation on an enclosure is performed by an aquaculturist. For example, in the case of a shrimp farm pond on land, the color of the surface of the shrimp farm pond is characterized in that the color is blue when farming has been suspended and changes to green or blown when farming is performed, and thus whether or not an operation on an enclosure is performed by an aquaculturist can be determined from the color of the pond.

(4) For example, the operation determining unit 732 configures a learning module through a machine learning algorithm using one or more positive example images that are one or more enclosure images in which farming is performed and one or more negative example images that are enclosure images in which farming has been suspended. Then, for example, the operation determining unit 732 classifies one or more enclosure images using the learning module through the machine learning algorithm, and determines whether each image is a positive example image or a negative example image. The machine learning algorithm is as described above.

For example, the operation determining unit 732 determines whether or not an operation on an enclosure is performed by an aquaculturist, using the one or more pieces of positional information. Hereinafter, two examples of the operation execution determination processing using positional information will be described.

(1) For example, the operation determining unit 732 acquires one or more pieces of positional information acquired from a GPS receiver of the user terminal 3, transmitted from the user terminal, and received by the positional information receiving unit 723. Then, the operation determining unit 732 acquires the positional information paired with the enclosure identifier, from the aquaculturist information storage unit 511. Then, a distance between each of the one or more pieces of positional information received by the positional information receiving unit 723 and the positional information paired with the enclosure identifier is calculated, and thus one or more distances are acquired. Then, for example, upon determining that, among the one or more distances, one or more distances are short enough to satisfy a predetermined condition, the operation determining unit 732 determines that there is a time period during which an aquaculturist is in an enclosure and that an operation on the enclosure is performed by the aquaculturist.
(2) For example, the operation determining unit 732 acquires at least two pieces of positional information transmitted from an unshown terminal installed in an enclosure, and received by the positional information receiving unit 723. Then, the operation determining unit 732 determines whether or not the enclosure has moved, from the at least two pieces of positional information. Upon determining that the enclosure has not moved, the operation determining unit 732 determines that an operation on the enclosure is performed by an aquaculturist. Upon determining that the enclosure has moved, the operation determining unit 732 determines that no operation on the enclosure is performed by an aquaculturist.

For example, the operation determining unit 732 calculates distances between the at least two pieces of positional information (x,y), and determines whether or not the enclosure has not moved based on the largest distance is at most a threshold value or smaller than the threshold value. That is to say, if the largest distance is at most a threshold value or smaller than the threshold value, it is determined that the enclosure has not moved, and information indicating that an operation on the enclosure is performed by an aquaculturist is acquired, whereas, if the largest distance is at least the threshold value or larger than the threshold value, it is determined that the enclosure has moved, and information indicating that no operation on the enclosure is performed by an aquaculturist is acquired.

The damage occurrence determining unit 733 determines whether or not a damage has occurred in an enclosure. This processing is referred to as damage occurrence determination processing.

The damage occurrence determining unit 733 determines whether or not a damage has occurred in an enclosure, using one or more images obtained by capturing images of the enclosure.

For example, the damage occurrence determining unit 733 calculates a similarity between an enclosure image on one day and an enclosure image on another day at substantially the same time, and determines that a damage has occurred in the case in which the similarity is low enough to satisfy a predetermined condition (the similarity is at most a threshold value or smaller than the threshold value). For example, the similarity between enclosure image in the case in which an enclosure was broken by a typhoon and an enclosure image in a normal state is low. It is preferable that, for such determination, for example, the damage occurrence determining unit 733 uses an enclosure image on one day and an enclosure image on another day in substantially the same weather at substantially the same time.

The damage occurrence determining unit 733 determines whether or not a damage has occurred in an enclosure, using environmental information.

For example, the damage occurrence determining unit 733 determines whether or not one or more pieces of environmental information in a given period of time of interest matches a factor condition that is a condition regarding risk factor information stored in the reimbursement unit price storage unit 711, wherein the damage occurrence determining unit determines that no damage has occurred in an enclosure in the case in which they match each other, and determines that a damage has occurred in the enclosure in the case in which they do not match each other.

For example, the damage occurrence determining unit 733 determines whether or not one or at least two pieces of environmental information that are continuous in time are within a proper value range stored in advance, and acquires a determination result indicating that a damage has occurred in an enclosure, if all of the pieces of environmental information are not within the proper value range. It is preferable that one or at least two pieces of environmental information that are continuous in time are at least two pieces of environmental information in a predetermined period of time (e.g., 10 hours, 24 hours, etc.).

The scale acquiring unit 734 acquires scale information paired with the aquaculturist identifier or the enclosure identifier contained in the damage amount calculation instruction, from the aquaculturist information storage unit 511.

The reimbursement unit price acquiring unit 735 acquires reimbursement unit price information paired with a factor condition that matches the one or more pieces of risk factor information accepted by the risk factor accepting unit 721.

The damage amount acquiring unit 736 acquires a damage amount of the aquaculturist identified with the aquaculturist identifier or the enclosure identified with the enclosure identifier contained in the damage amount calculation instruction, using the reimbursement unit price information and the scale information acquired by the scale acquiring unit 734.

For example, the damage amount acquiring unit 736 calculates a damage amount, using an operation expression "damage amount = reimbursement unit price information $\times$ scale information".

The output unit 74 outputs various types of information. The various types of information are various determination results, damage amounts, and the like. The output is, for example, transmission to a terminal such as the user terminal 3. Note that the output may also be display on a display screen, projection using a projector, printing by a printer, output of sound, transmission to an external apparatus, accumulation in a storage medium, delivery of a processing result to another processing apparatus or another program, or the like. There is no limitation on how to use damage amounts and determination results output by the output unit 74. The damage amounts and the determination results output by the output unit 74 may be used, for example, as information for a small investment loan such as crowdfunding. The damage amounts and the determination results output by the output unit 74 may be used, for example, to compile various reports, support stocking and selling for practical use of farms, and the like, for sharing services of available enclosures. The reports are, for example, reports that evaluate the environmental loads in practical use of farms.

The presence determination result output unit 741 outputs the determination result acquired by the presence determining unit 731. The determination result is information indicating whether or not there is an enclosure.

The operation determination result output unit 742 outputs the determination result acquired by the operation determining unit 732. The determination result information indicating whether or not an operation is performed by an aquaculturist.

The damage occurrence determination result output unit 743 outputs the determination result acquired by the damage occurrence determining unit 733. The determination result is information indicating whether or not a damage has occurred.

The damage amount output unit 744 outputs the damage amount acquired by the damage amount acquiring unit 736.

It is preferable that the damage amount output unit 744 outputs the damage amount only in a case in which the damage occurrence determining unit 733 determines that a damage has occurred.

The storage unit 71, the unit price management information management unit 712, the reimbursement unit price storage unit 711, and the enclosure image storage unit 712 are preferably non-volatile storage media, but can also be realized by volatile storage media.

There is no limitation on the procedure in which information is stored in the storage unit 71 and the like. For example, information may be stored in the storage unit 71 and the like via a storage medium, information transmitted via a communication line or the like may be stored in the storage unit 71 and the like, or information input via an input device may be stored in the storage unit 71 and the like.

The accepting unit 72, the risk factor accepting unit 721, the instruction accepting unit 722, and the positional information receiving unit 723 are typically realized by wireless or wired communication parts, but can also be realized by broadcast receiving parts.

The processing unit 73, the presence determining unit 731, the operation determining unit 732, the damage occurrence determining unit 733, the scale acquiring unit 734, the reimbursement unit price acquiring unit 735, and the damage amount acquiring unit 736 are typically realized by MPUs, memories, or the like. Typically, the processing procedure of the processing unit 73 and the like is realized by software, and the software is stored in a storage medium such as a ROM. Note that the processing procedure may be realized by hardware (dedicated circuits).

The output unit 74, the presence determination result output unit 741, the operation determination result output unit 742, the damage occurrence determination result output unit 743, and the damage amount output unit 744 are typically realized by wireless or wired communication parts. Note that the output unit 74 and the like may be realized by driver software for an output device, a combination of driver software for an output device and the output device, or the like.

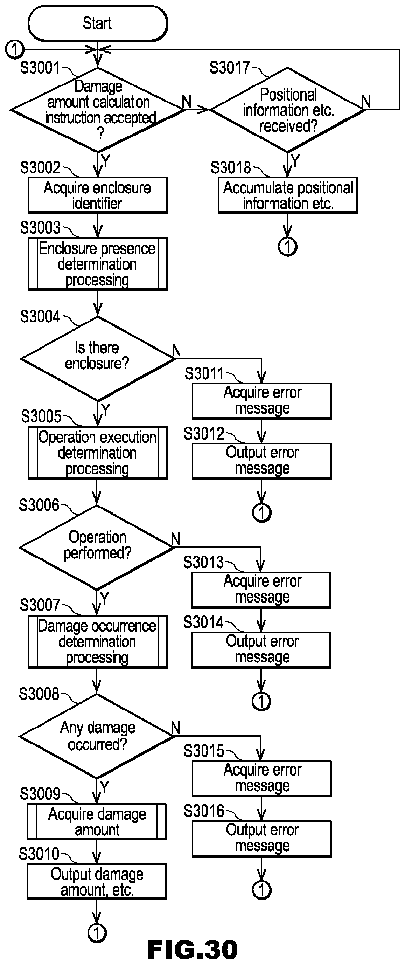

Next, a first operation example of the damage amount output apparatus 7 constituting the information system D will be described with reference to the flowchart in FIG. 30. The first operation example is an operation example in the case in which a damage amount is calculated and output in response to acceptance of a damage amount calculation instruction.

(Step S3001) The instruction accepting unit 722 determines whether or not it has accepted a damage amount calculation instruction. If it has accepted a damage amount calculation instruction, the procedure advances to step S3002, otherwise, the procedure advances to step S3017.

(Step S3002) The processing unit 73 acquires an enclosure identifier contained in the damage amount calculation instruction accepted in step S3001. The processing unit 73 may acquire an enclosure identifier paired with an aquaculturist identifier contained in the damage amount calculation instruction accepted in step S3001, from the aquaculturist information storage unit 511.

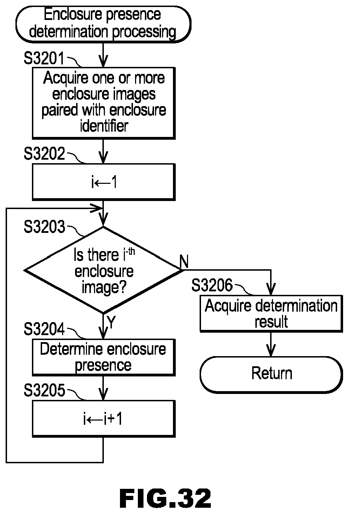

(Step S3003) The presence determining unit 731 performs enclosure presence determination processing that determines whether or not there is an enclosure identified with the enclosure identifier acquired in step S3002. Later, an example of the enclosure presence determination processing will be described with reference to the flowchart in FIG. 32.

(Step S3004) The processing unit 73 determines whether or not the determination result in step S3003 is "there is enclosure". If the determination result is "there is enclosure", the procedure advances to step S3005, and, if the determination result is "there is no enclosure", the procedure advances to step S3011.

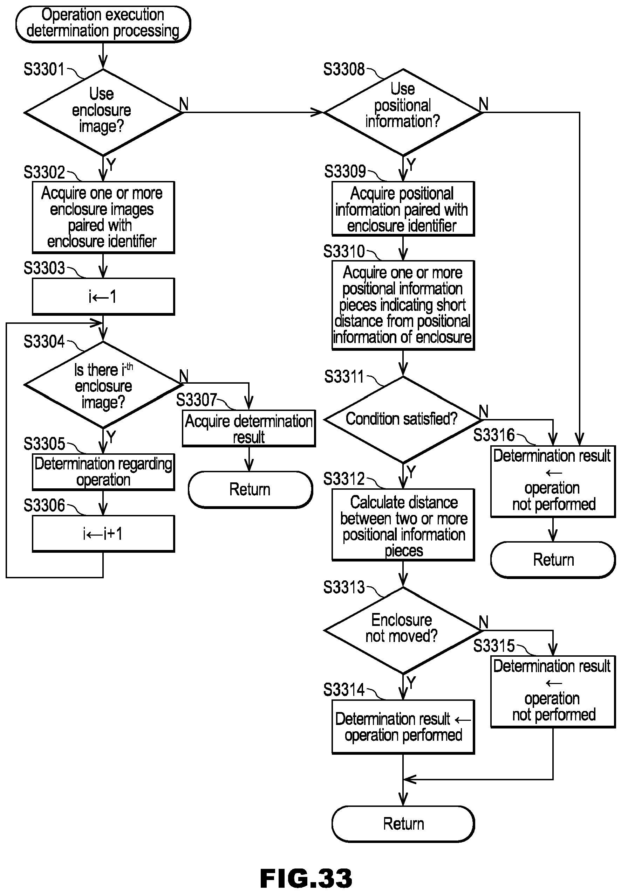

(Step S3005) The operation determining unit 732 performs operation execution determination processing that determines whether or not a culturing operation is performed by an aquaculturist in an enclosure identified with the enclosure identifier acquired in step S3002. Later, an example of the operation execution determination processing will be described with reference to the flowchart in FIG. 33.

(Step S3006) The processing unit 73 determines whether or not the determination result in step S3005 is "operation performed". If the determination result is "operation performed", the procedure advances to step S3007, and, if the determination result is "operation not performed", the procedure advances to step S3013.

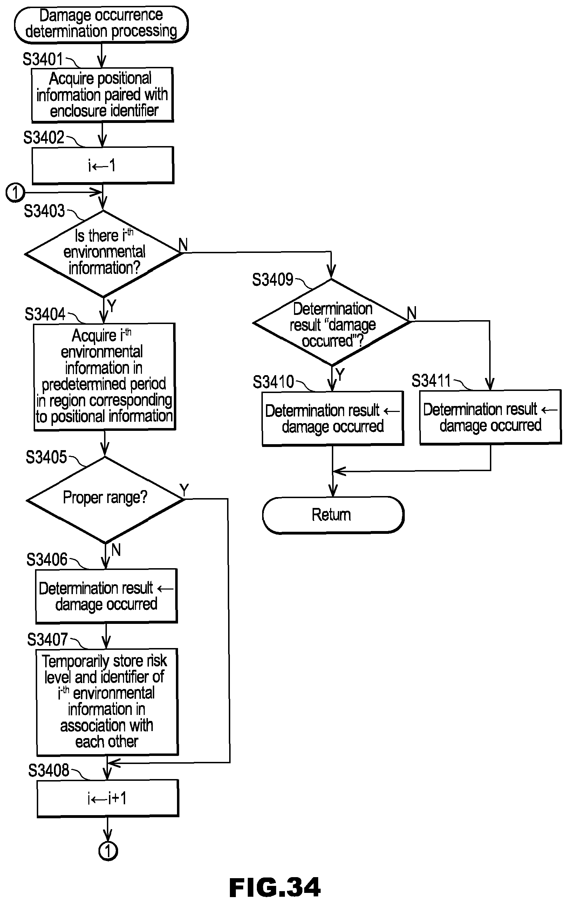

(Step S3007) The damage occurrence determining unit 733 performs the damage occurrence determination processing that determines whether or not a damage has occurred in the enclosure identified with the enclosure identifier acquired in step S3002. Later, an example of the damage occurrence determination processing will be described with reference to the flowchart in FIG. 34.

(Step S3008) The processing unit 73 determines whether or not the determination result in step S3007 is "damage occurred". If the determination result is "damage occurred", the procedure advances to step S3009, and, if the determination result is "damage not occurred", the procedure advances to step S3015.

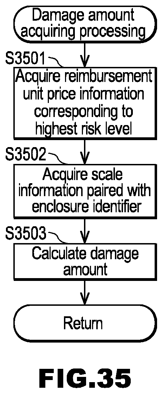

(Step S3009) The damage amount acquiring unit 736 acquires the damage amount of the damage that has occurred in the enclosure identified with the enclosure identifier acquired in step S3002. Later, an example of the damage amount acquiring processing will be described with reference to the flowchart in FIG. 35.

(Step S3010) The output unit 74 outputs the acquired damage amount and the like. The procedure returns to step S3001. The damage amount and the like may be only the damage amount, or may contain one or more of the presence determination result, the operation determination result, and the damage occurrence determination result, in addition to the damage amount.

(Step S3011) The processing unit 73 acquires an error message indicating that there is no enclosure.

(Step S3012) The output unit 74 outputs the error message acquired in step S3011.

(Step S3013) The processing unit 73 acquires an error message indicating that no operation is performed.

(Step S3014) The output unit 74 outputs the error message acquired in step S3011.

(Step S3015) The processing unit 73 acquires an error message indicating that no damage has occurred.

(Step S3016) The output unit 74 outputs the error message acquired in step S3011.

(Step S3017) The positional information receiving unit 723 determines whether or not it has received positional information and the like. If it has received positional information and the like, the procedure advances to step S3018, otherwise, the procedure returns to step S3001. The positional information and the like are one or more pieces of positional information, and one or more identifiers out of an aquaculturist identifier, an enclosure identifier, and a terminal identifier of a user terminal 3 of an aquaculturist, and the like.

(Step S3018) The processing unit 73 accumulates the positional information and the like received in step S3017, in the storage unit 71. The procedure returns to step S3001.

In the flowchart in FIG. 30, the enclosure presence determination processing, the operation execution determination processing, and the damage occurrence determination processing were performed. However, these three types of determination processing are optional and are not essential.

In the flowchart in FIG. 30, the processing ends at power off or at an interruption of termination processing.

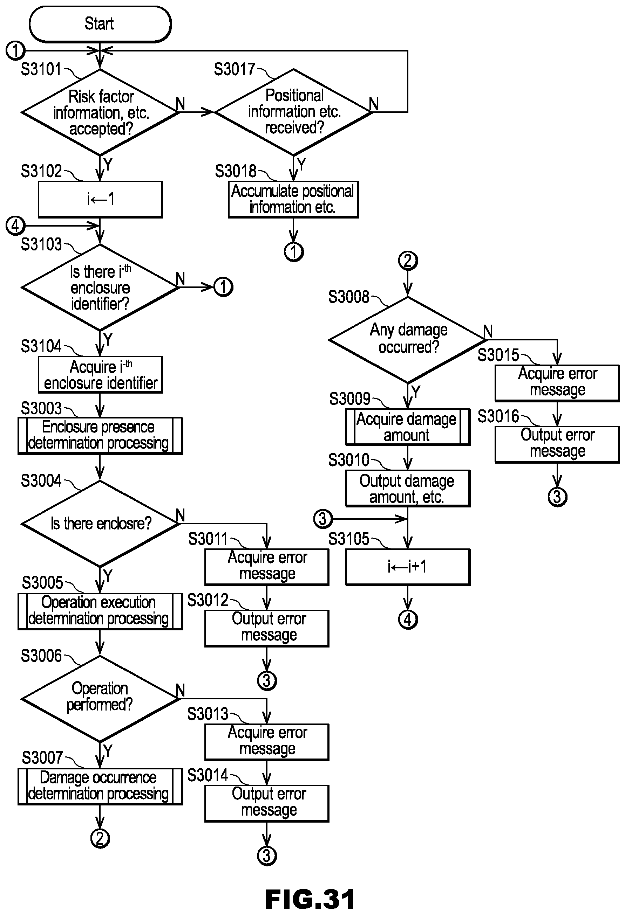

Next, a second operation example of the damage amount output apparatus 7 will be described with reference to the flowchart in FIG. 31. In the flowchart in FIG. 31, a description of the same steps as those in the flowchart in FIG. 30 has been omitted. The second operation example is an operation example in the case in which an enclosure that was damaged is specified, and a damage amount is calculated and output, in response to acceptance of risk factor information and the like.

(Step S3101) The risk factor accepting unit 721 determines whether or not it has accepted risk factor information and the like. If it has accepted risk factor information and the like, the procedure advances to step S3102, otherwise, the procedure advances to step S3017. The risk factor information and the like are, for example, one or more pieces of risk factor information, and positional information or an enclosure identifier. The risk factor information and the like are, for example, one or more pieces of risk factor information. It is preferable that the accepted risk factor information and the like contain information for specifying an enclosure such as positional information or an enclosure identifier.

(Step S3102) The processing unit 73 substitutes 1 for a counter i.

(Step S3103) The processing unit 73 determines whether or not there is an $i$-th enclosure identifier in the aquaculturist information storage unit 511. If there is an $i$-th enclosure identifier, the procedure advances to step S3104, otherwise, the procedure returns to step S3101. If the accepted risk factor information and the like contain information for specifying an enclosure such as positional information or an enclosure identifier, the $i$-th enclosure identifier is an enclosure identifier of an $i$-th enclosure among the enclosures specified with the information for specifying an enclosure.

(Step S3104) The processing unit 73 acquires the $i$-th enclosure identifier. The procedure advances to step S303. In this example, it is assumed that the number of enclosure identifiers acquired is one, but, if at least two enclosure identifiers are acquired, steps S3003 to S3010, and S3011 to S3016 are repeated the number of enclosure identifiers.

(Step S3105) The processing unit 73 increments the counter i by 1. The procedure returns to step S3103.

In the flowchart in FIG. 31, the enclosure presence determination processing, the operation execution determination processing, and the damage occurrence determination processing were performed. However, these three types of determination processing are optional and are not essential.

In the flowchart in FIG. 31, the processing ends at power off or at an interruption of termination processing.

Next, an example of the enclosure presence determination processing in step S3003 will be described with reference to the flowchart in FIG. 32.

(Step S3201) The presence determining unit 731 acquires one or more enclosure images paired with the enclosure identifier of interest, from the enclosure image storage unit 712. The one or more enclosure images paired with the enclosure identifier of interest are, for example, may also be one or more enclosure images paired with positional information indicating the position that is close, enough to satisfy a predetermined condition, to the position indicated by the positional information paired with the enclosure identifier of interest.

(Step S3202) The presence determining unit 731 substitutes 1 for a counter i.

(Step S3203) The presence determining unit 731 determines whether or not there is an $i$-th enclosure image, among the enclosure images acquired in step S3201. If there is an $i$-th enclosure image, the procedure advances to step S3204, otherwise, the procedure advances to step S3206.

(Step S3204) The presence determining unit 731 determines whether or not there is an enclosure identified with the enclosure identifier of interest, using the $i$-th enclosure image, through the above-described method. For example, the presence determining unit 731 temporarily stores the determination result in the storage unit 71. The method for determining whether or not there is an enclosure from one enclosure image is as described above.

(Step S3205) The presence determining unit 731 increments the counter i by 1. The procedure returns to step S3103.

(Step S3206) The presence determining unit 731 acquires a determination result as to whether or not there is an enclosure, using the one or more determination results accumulated in step S3204. The procedure returns to the upper-level processing.

For example, the presence determining unit 731 acquires a final determination result "there is enclosure" in the case in which the proportion of determination results indicating that "there is enclosure" is at least at a predetermined proportion, and acquires a final determination result "there is no enclosure" in the case in which the proportion of determination results indicating that "there is enclosure" is less than the predetermined proportion. For example, the presence determining unit 731 acquires a larger number of determination results, as a final determination result (voting by majority).

Next, an example of the operation execution determination processing in step S3005 will be described with reference to the flowchart in FIG. 33.

(Step S3301) The operation determining unit 732 determines whether or not to use an enclosure image to perform the operation execution determination processing. If an enclosure image is to be used, the procedure advances to step S3302, otherwise, the procedure advances to step S3308. Whether or not to use an enclosure image may be predetermined, or may be determined by an enclosure image paired with the enclosure identifier of interest is stored in the enclosure image storage unit 712.

(Step S3302) The operation determining unit 732 acquires one or more enclosure images paired with the enclosure identifier of interest, from the enclosure image storage unit 712.

(Step S3303) The operation determining unit 732 substitutes 1 for a counter i.

(Step S3304) The operation determining unit 732 determines whether or not there is an $i^{-th}$ enclosure image among the enclosure images acquired in step S3302. If there is an $i^{-th}$ enclosure image, the procedure advances to step S3305, otherwise, the procedure advances to step S3307.

(Step S3305) The operation determining unit 732 performs the operation execution determination, using the $i^{-th}$ enclosure image, through the above-described method, and temporarily stores the determination result in the storage unit 71. The processing that performs the operation execution determination processing from one enclosure image is as described above.

(Step S3306) The operation determining unit 732 increments the counter i by 1. The procedure returns to step S3103.

(Step S3307) The operation determining unit 732 acquires a final determination result, using the one or more determination results accumulated in step S3305. The procedure returns to the upper-level processing.

For example, the presence determining unit 731 acquires a final determination result "operation performed" in the case in which the proportion of determination results indicating that "operation performed" is at least at a predetermined proportion, and acquires a final determination result "operation not performed" in the case in which the proportion of determination results "operation performed" is less than the predetermined proportion. For example, the presence determining unit 731 acquires a larger number of determination results, as a final determination result (voting by majority).

(Step S3308) The operation determining unit 732 determines whether or not to use positional information to perform the operation execution determination processing. If positional information is to be used, the procedure advances to step S3309, otherwise, the procedure advances to step S3316. If an enclosure image is not used, typically, the operation determining unit 732 performs the operation execution determination processing, using positional information.

Whether or not to use positional information may be predetermined, or may be determined by determining whether or not an enclosure identifier of interest, an aquaculturist identifier paired with the enclosure identifier of interest, or positional information paired with a terminal identifier or the like paired with the enclosure identifier of interest is stored in the storage unit 71.

(Step S3309) The operation determining unit 732 acquires the positional information paired with the enclosure identifier of interest, from the aquaculturist information storage unit 511. The positional information is information for specifying a position of an enclosure identified with the enclosure identifier.

(Step S3310) The operation determining unit 732 acquires one or more pieces of positional information indicating the position that is close, enough to satisfy a predetermined condition, to the position indicated by the positional information acquired in step S3309, from the storage unit 71. The acquired one or more pieces of positional information are positional information transmitted from a terminal of an aquaculturist.

(Step S3311) The operation determining unit 732 determines whether or not a condition is satisfied by the one or more pieces of positional information acquired in step S3310. If a condition is satisfied, the procedure advances to step S3312, otherwise, the procedure advances to step S3316.

(Step S3312) The operation determining unit 732 acquires at least two pieces of positional information paired with the enclosure identifier of interest, and transmitted from a terminal arranged in the enclosure at different times, from the storage unit 71. Then, the operation determining unit 732 calculates a distance between the at least two pieces of positional information, using the at least two pieces of positional information.

(Step S3313) The operation determining unit 732 determines whether or not the enclosure has moved using the distance calculated in step S3312. If it is determined that the enclosure has not moved, the procedure advances to step S3314, otherwise, the procedure advances to step S3315.

(Step S3314) The operation determining unit 732 acquires a determination result "operation performed". The procedure returns to the upper-level processing.

(Step S3315) The operation determining unit 732 acquires a determination result "operation not performed". The procedure returns to the upper-level processing.

(Step S3316) The operation determining unit 732 acquires a determination result "operation not performed". The procedure returns to the upper-level processing.

In the flowchart in FIG. 33, only processing in some of steps S3309 to S33011, S3316, and S3312 to S3315 may be performed.

Next, an example of the damage occurrence determination processing in step S3007 will be described with reference to the flowchart in FIG. 34.

(Step S3401) The damage occurrence determining unit 733 acquires positional information paired with the enclosure identifier of interest, from the aquaculturist information storage unit 511.

(Step S3402) The damage occurrence determining unit 733 substitutes 1 for a counter i.

(Step S3403) The damage occurrence determining unit 733 determines whether or not there is an i-th piece of environmental information that is to be evaluated (e.g., a water temperature, an atmospheric temperature, a rainfall amount, etc.). If there is an i-th piece of environmental information, the procedure advances to step S3404, otherwise, the procedure advances to step S3409.

(Step S3404) The damage occurrence determining unit 733 acquires the i-th piece of environmental information in a given period of time in a region containing the position indicated by the positional information acquired in step S3401, from the storage unit 71 or an unshown server (e.g., a server of the Japan Meteorological Agency).

(Step S3405) The damage occurrence determining unit 733 determines whether or not a group of the i-th piece of environmental information in the given period of time acquired in step S3404 is within a proper range, using the factor condition that is a condition regarding risk factor information stored in the reimbursement unit price storage unit 711. If the group is within a proper range, the procedure advances to step S3408, otherwise, the procedure advances to step S3406.

(Step S3406) The damage occurrence determining unit 733 acquires a determination result "damage occurred", and temporarily stores it in the storage unit 71.

(Step S3407) The damage occurrence determining unit 733 acquires a risk level corresponding to the group of the i-th piece of environmental information in the given period of time acquired in step S3404, using the factor condition that is a condition regarding risk factor information stored in the reimbursement unit price storage unit 711. Then, the damage occurrence determining unit 733 temporarily stores the risk level and the identifier of the i-th piece of environmental information (e.g., information indicating that it is a water temperature, information indicating that it is an atmospheric temperature, or information indicating that it is a rainfall amount) in the storage unit 71 in association with each other.

(Step S3408) The damage occurrence determining unit 733 increments the counter i by 1. The procedure returns to step S3403.

(Step S3409) If the damage occurrence determining unit 733 accumulates the determination result "damage occurred" even once in step S3407, the procedure advances to step S3410, otherwise, the procedure advances to step S3411.

(Step S3410) The damage occurrence determining unit 733 acquires a determination result "damage occurred". The procedure returns to the upper-level processing.

(Step S3411) The damage occurrence determining unit 733 acquires a determination result "damage not occurred". The procedure returns to the upper-level processing.

In the flowchart in FIG. 34, the processing in step S3407 is processing for acquiring a damage amount, and is not necessary in the case of not acquiring a damage amount.

Next, an example of the damage amount acquiring processing in step S3009 will be described with reference to the flowchart in FIG. 35.

(Step S3501) The reimbursement unit price acquiring unit 735 acquires a highest risk level among the risk levels temporarily stored in step S3407. Then, the reimbursement unit price acquiring unit 735 acquires reimbursement unit price information paired with the highest risk level, from the reimbursement unit price storage unit 711.

(Step S3502) The scale acquiring unit 734 acquires scale information paired with the enclosure identifier of interest, from the aquaculturist information storage unit 511.

(Step S3503) The damage amount acquiring unit 736 acquires a damage amount, using the reimbursement unit price information acquired in step S3501 and the scale information acquired in step S3502. The procedure returns to the upper-level processing. For example, the damage amount acquiring unit 736 executes the operation expression "damage amount = reimbursement unit price information $\times$ scale information" stored in the storage unit 71, thereby calculating a damage amount.

In step S3501 in the flowchart in FIG. 35, reimbursement unit price information paired with the highest risk level is acquired, but it is also possible to acquire reimbursement unit price information paired with the lowest risk level, reimbursement unit price information paired with a medium risk level, or the like. That is to say, it is preferable that, if there are multiple risk levels temporarily stored in step S3407, the reimbursement unit price acquiring unit 735 acquires reimbursement unit price information paired with a risk level of a representative value.

Hereinafter, a specific operation of the damage amount output apparatus 7 constituting the information system D in this embodiment will be described.

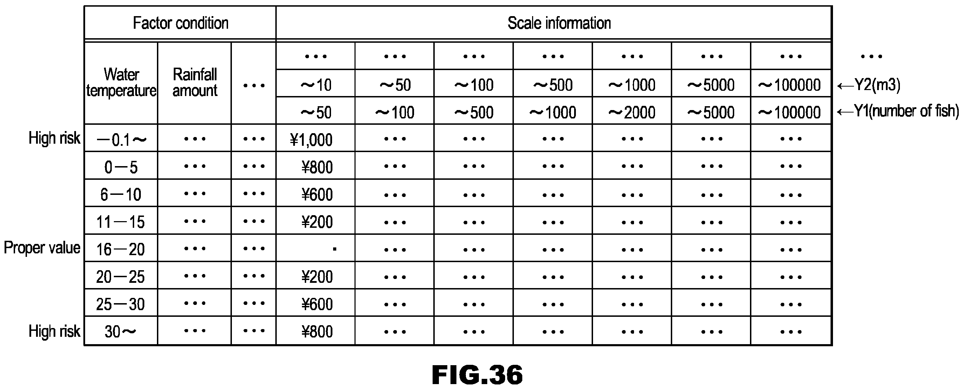

It is assumed that a unit price management table shown in FIG. 36 is stored in the reimbursement unit price storage unit 711 of the damage amount output apparatus 7. In the unit price management table, at least two pieces of unit price management information each having a factor condition and reimbursement unit price information are stored. The factor condition is, for example, a condition regarding "water temperature", a condition regarding "rainfall amount", or the like. The unit price management table manages reimbursement unit price information for each piece of scale information.

In FIG. 36, for example, if the water temperature is "16-20°C", it is assumed that it is a proper value, and no damage has occurred, and thus the reimbursement unit price information is "-" (none or 0). In FIG. 36, for example, the reimbursement unit price information of an enclosure with the scale information "up to 50 fishes" or "up to volume 10 m$^3$" when the water temperature "6-10°C" is kept at least for a predetermined given length of time is "600 yen". In FIG. 36, for example, the reimbursement unit price information of an enclosure with the scale information "up to 50 fishes" or "up to volume 10 m$^3$" when the water temperature "higher than 30°C" is kept at least for a predetermined given length of time is "800 yen". It is assumed that, in FIG. 36, the attribute value "..." means that a proper value is stored therein.

Furthermore, it is also possible that at least two unit price management tables are stored in the reimbursement unit price storage unit 711 in association with one or more pieces of information out of the type information indicating the type of culture targets, the area identifier for identifying an area, and the aquaculturist rank. In this case, it is assumed that, for example, the unit price management table in FIG. 36 is a unit price management table with the type information "A1", the area identifier "B1", and the aquaculturist rank "4".

Furthermore, it is assumed that the aquaculturist information management table in FIG. 18 is stored in the aquaculturist information storage unit 511.

Furthermore, it is assumed that a large number of enclosure images are stored in the enclosure image storage unit 712 in association with enclosure identifiers. It is assumed that the enclosure images are also associated with time information.

Furthermore, it is assumed that a large number of pieces of positional information associated with aquaculturist identifiers or/and enclosure identifiers in the storage unit 71. It is assumed that the positional information is also associated with time information.

It is assumed that, in this situation, a user inputs a damage amount calculation instruction with the enclosure identifier "c01" to a user terminal 3. Then, the user terminal 3 accepts the damage amount calculation instruction, configures a damage amount calculation instruction that is to be transmitted, and transmits the damage amount calculation instruction to the damage amount output apparatus 7.

Next, the instruction accepting unit 722 of the damage amount output apparatus 7 receives the damage amount calculation instruction with the enclosure identifier "c01" from the user terminal 3. Then, the processing unit 73 acquires the enclosure identifier "c01" contained in the received damage amount calculation instruction.

Next, the presence determining unit 731 performs the enclosure presence determination processing through the above-described algorithm. In this example, it is determined that there is an enclosure identified with the enclosure identifier "c01".

Furthermore, the operation determining unit 732 performs the operation execution determination processing through the above-described algorithm. In this example, it is determined that an operation is performed by an aquaculturist identified with the aquaculturist identifier "b01" corresponding to the enclosure identifier "c01".

Furthermore, the damage occurrence determining unit 733 performs damage occurrence determination processing that determines whether or not a damage has occurred in an enclosure identified with the enclosure identifier "c01", through the above-described algorithm. Specifically, for example, the damage occurrence determining unit 733 performs the damage occurrence determination processing as follows.

First, the damage occurrence determining unit 733 acquires positional information paired with the enclosure identifier "c01", from the aquaculturist information management table.

Next, the damage occurrence determining unit 733 acquires the area identifier "B1" corresponding to the positional information paired with the enclosure identifier "c01", from the correspondence table. It is assumed that a correspondence table indicating the ranges of the area identifier and the position is stored in the storage unit 71.

Next, the damage occurrence determining unit 733 acquires information on a water temperature in a given period of time, the information being paired with the area identifier "B1", from an unshown server in which environmental information is stored.

Next, the damage occurrence determining unit 733 determines whether or not the acquired information on a water temperature in a given period of time is within a proper value range ("16-20°C", in this example), from the unit price management table shown in FIG. 36 paired with the area identifier "B1". In this example, it is assumed that the damage occurrence determining unit 733 detects that the water temperature "11-15°C" was kept at least for a predetermined certain period of time, in the information on a water temperature in a given period of time. Then, the damage occurrence determining unit 733 acquires a determination result "damage occurred".

Furthermore, the damage occurrence determining unit 733 temporarily stores a risk level corresponding to "11-15°C" in the storage unit 71.

Next, the damage amount acquiring unit 736 acquires the damage amount of the damage that has occurred in the enclosure identified with the enclosure identifier "c01", for example, as follows.

That is to say, first, the scale acquiring unit 734 acquires scale information (e.g., 30 fishes) paired with the enclosure identifier "c01", from the aquaculturist information management table.

Next, the damage occurrence determining unit 733 acquires the reimbursement unit price information "200 yen" paired with the risk level corresponding to "11-15°C", from the unit price management table in FIG. 36.

Next, the damage amount acquiring unit 736 multiplies the acquired reimbursement unit price information "200 yen" by the acquired scale information "30 fishes", thereby acquiring the damage amount "6000 yen". Then, the damage amount output unit 744 transmits the damage amount "6000 yen" to the user terminal 3.

Furthermore, the presence determination result output unit 741 delivers information indicating there was an enclosure identified with the enclosure identifier "c01", to the processing unit 73. The operation determination result output unit 742 delivers information indicating that an operation was performed by an aquaculturist identified with the aquaculturist identifier "b01" corresponding to the enclosure identifier "c01", to the processing unit 73. The damage occurrence determination result output unit 743 delivers information indicating that a damage occurred in the enclosure identified with the enclosure identifier "c01", and the risk level corresponding to "11-15°C", to the processing unit 73. The damage amount output unit 744 delivers the damage amount "6000 yen" to the processing unit 73.

Next, the processing unit 73 compiles a report containing the delivered information. The report contains, for example, the aquaculturist identifier "b01", the enclosure identifier "c01", the risk level corresponding to "11-15°C", the damage amount "6000 yen", and the like.

Next, the output unit 74 transmits the report compiled by the processing unit 73, to the user terminal 3.

Then, the user terminal 3 receives and outputs the damage amount "6000 yen". The user terminal 3 receives and outputs the report.

As described above, according to this embodiment, it is possible to calculate a damage amount of an enclosure in which a damage has occurred, using scale information of an enclosure and a reimbursement unit price.

Furthermore, according to this embodiment, it is possible to automatically acquire a reimbursement unit price.

Furthermore, according to this embodiment, it is possible to determine whether or not there is an enclosure.

Furthermore, according to this embodiment, it is possible to determine whether or not an operation on an enclosure is performed by an aquaculturist.

Furthermore, according to this embodiment, it is possible to determine whether or not an operation on an enclosure is performed by an aquaculturist, using one or more enclosure images.

Furthermore, according to this embodiment, it is possible to determine whether or not an operation on an enclosure is performed by an aquaculturist, using one or more pieces of positional information corresponding to an aquaculturist.

Furthermore, according to this embodiment, it is possible to determine whether or not a damage has occurred in an enclosure.

Furthermore, according to this embodiment, it is possible to determine whether or not a damage has occurred in an enclosure, using one or more enclosure images.

Furthermore, according to this embodiment, it is possible to determine whether or not a damage has occurred in an enclosure, using environmental information.

Software that realizes the information processing apparatus in this embodiment is a program as follows. Specifically, this program is a program for causing a computer capable of accessing an aquaculturist information storage unit in which one or more pieces of aquaculturist information containing an aquaculturist identifier for identifying an aquaculturist or an enclosure identifier for identifying an enclosure, and scale information for specifying a scale of an enclosure are stored, the aquaculturist information being information regarding an aquaculturist of an aquatic organism group, and a reimbursement unit price storage unit in which reimbursement unit price information for specifying a damage amount per unit amount of an enclosure is stored, to function as: an instruction accepting unit that accepts a damage amount calculation instruction containing an aquaculturist identifier or an enclosure identifier; a scale acquiring unit that acquires scale information paired with the aquaculturist identifier or the enclosure identifier contained in the damage amount calculation instruction, from the aquaculturist information storage unit; a damage amount acquiring unit that acquires a damage amount of the aquaculturist identified with the aquaculturist identifier or the enclosure identified with the enclosure identifier contained in the damage amount calculation instruction, using the reimbursement unit price information and the scale information acquired by the scale acquiring unit; and a damage amount output unit that outputs the damage amount acquired by the damage amount acquiring unit.

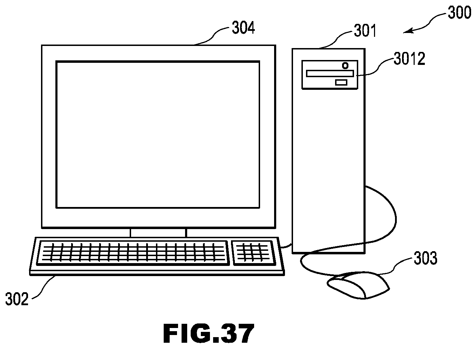

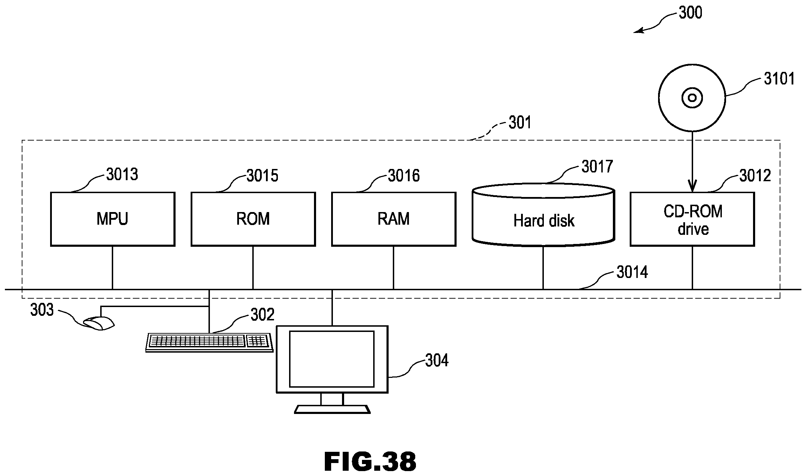

FIG. 37 shows the external appearance of a computer that executes the program described in this specification to realize the asset value output apparatus 1 and the like in the foregoing various embodiments. The foregoing embodiments may be realized using computer hardware and a computer program executed thereon. FIG. 37 is a schematic view of a computer system 300. FIG. 38 is a block diagram of the system 300. FIGS. 37 and 38 show the external appearance and the like of a computer that realizes the engagement system.

In FIG. 37, the computer system 300 includes a computer 301 including a CD-ROM drive, a keyboard 302, a mouse 303, and a monitor 304.

In FIG. 38, the computer 301 includes, in addition to the CD-ROM drive 3012, an MPU 3013, a bus 3014 connected to the CD-ROM drive 3012 and the like, a ROM 3015 in which a program such as a boot up program is stored, a RAM 3016 that is connected to the MPU 3013 and is a memory in which a command of an application program is temporarily stored and a temporary storage area is provided, and a hard disk 3017 in which an application program, a system program, and data are stored. Although not shown, the computer 301 may further include a network card that provides connection to a LAN.

The program for causing the computer system 300 to execute the functions of the asset value output apparatus 1 and the like in the foregoing embodiments may be stored in a CD-ROM 3101 that is inserted into the CD-ROM drive 3012, and be transmitted to the hard disk 3017. Alternatively, the program may be transmitted via a network (not shown) to the computer 301 and stored in the hard disk 3017. At the time of execution, the program is loaded into the RAM 3016. The program may be loaded from the CD-ROM 3101, or directly from a network.

The program does not necessarily have to include, for example, an operating system (OS) or a third party program to cause the computer 301 to execute the functions of the asset value output apparatus 1 and the like in the foregoing embodiments. The program may only include a command portion to call an appropriate function (module) in a controlled mode and obtain desired results. The manner in which the computer system 300 operates is well known, and thus a detailed description thereof has been omitted.

It should be noted that, in the program, in a step of transmitting information, a step of receiving information, or the like, processing that is performed by hardware, for example, processing performed by a modem or an interface card in the transmitting step (processing that can be performed only by hardware) is not included.

Furthermore, the computer that executes the program may be a single computer, or may be multiple computers. That is to say, centralized processing may be performed, or distributed processing may be performed.

Furthermore, in the foregoing embodiments, it will be appreciated that at least two communication parts in one apparatus may be physically realized by one medium.

In the foregoing embodiments, each process may be realized as centralized processing using a single apparatus, or may be realized as distributed processing using multiple apparatuses.

The present invention is not limited to the embodiment set forth herein. Various modifications are possible within the scope of the present invention.

Industrial Applicability

As described above, the asset value output apparatus according to the present invention has the effect of making it easy to acquire an asset value of an aquatic organism group including at least two culture targets, and thus this apparatus is useful as an asset value output apparatus and the like.

**Claims**

1. An asset value output apparatus comprising:

    an aquatic organism group information accepting unit that accepts aquatic organism group information containing one or at least two pieces of information out of food information regarding food given to an aquatic organism group including at least two culture targets, and size information regarding a size of the culture targets;
    an asset value acquiring unit that acquires an asset value of the aquatic organism group, using the aquatic organism group information; and
    an asset value output unit that outputs the asset value.

2. The asset value output apparatus according to claim 1,
    wherein the asset value acquiring unit acquires a larger asset value in accordance with an increase in the amount of food indicated by the food information, the food information being information regarding the amount of food, or acquires a larger asset value in accordance with an increase in the size indicated by the size information.

3. The asset value output apparatus according to claim 1 or 2,
    wherein the aquatic organism group information contains the size information,
    the asset value output apparatus further comprises an image analysis unit that analyzes an image acquired from an aquatic organism group, thereby acquiring size information regarding a size of culture targets, and
    the aquatic organism group information accepted by the aquatic organism group information accepting unit contains the size information acquired by the image analysis unit.

4. The asset value output apparatus according to claim 3, wherein the image analysis unit includes a size information acquiring part that detects at least two culture targets from one or at least two images obtained by capturing images of an aquatic organism group using a camera or one or at least two images acquired using sonar through irradiation on an aquatic organism group, acquires sizes of the at least two culture targets, and acquires size information that is a representative value of the at least two sizes.

5. The asset value output apparatus according to claim 1 or 2, further comprising:

an image analysis unit that analyzes an image obtained by capturing an image of an aquatic organism group using a camera or one or at least two images acquired using sonar through irradiation on an aquatic organism group, thereby acquiring type information indicating the type of culture targets, wherein the aquatic organism group information accepted by the aquatic organism group information accepting unit contains the type information acquired by the image analysis unit.

6. The asset value output apparatus according to any one of claims 1 to 5, wherein the aquatic organism group information contains the food information and the size information, and the asset value acquiring unit

includes: a cost approach part that acquires a larger first asset value in accordance with an increase in the amount of food indicated by the food information, the food information being information regarding the amount of food; and a market approach part that acquires a larger second asset value in accordance with an increase in the size indicated by the size information, and acquires at least two asset values, and

the asset value output unit outputs at least two asset values including the first asset value and the second asset value, or a representative value of the at least two asset values.

7. The asset value output apparatus according to claim 6, wherein the asset value output unit outputs a largest, smallest, or average asset value, of the at least two asset values.

8. The asset value output apparatus according to any one of claims 1 to 7, wherein the aquatic organism group information accepting unit accepts aquatic organism group information of each of at least two enclosures, the asset value acquiring unit acquires an asset value of an aquatic organism group of each of at least two enclosures, and the asset value output unit outputs the asset value of each of at least two enclosures.

9. An insurance information output apparatus comprising:

an insurance information acquiring unit that acquires insurance information regarding insurance, using the asset value output by the asset value output apparatus according to any one of claims 1 to 8; and an insurance information output unit that outputs the insurance information.

10. The insurance information output apparatus according to claim 9, further comprising:

an aquaculturist information storage unit in which aquaculturist information regarding an aquaculturist of an aquatic organism group is stored, wherein the insurance information acquiring unit acquires insurance information using the asset value and the aquaculturist information.

11. The insurance information output apparatus according to claim 10, wherein the insurance information acquiring unit includes:

a rank acquiring part that acquires an aquaculturist rank, using the aquaculturist information; and an insurance information acquiring part that acquires insurance information using the asset value and the rank.

**12.** The insurance information output apparatus according to claim 9 or 10, further comprising:

> a risk factor information storage unit in which one or more pieces of risk factor information are stored, the risk factor information being a factor that increases or decreases a risk that a state in which insurance money is paid out for an aquatic organism group arises,
> wherein the insurance information acquiring unit acquires insurance information, also using the one or more pieces of risk factor information.

**13.** The insurance information output apparatus according to claim 11, wherein the one or more pieces of risk factor information contain one or more pieces of information out of nature information regarding nature in a culture farm, an attribute value of an aquatic organism group, surrounding environment information regarding a surrounding environment, operation information regarding an operation by an aquaculturist, and facilities information regarding facilities for use in culturing.

**14.** A finance related information output apparatus comprising:

> an asset value storage unit in which an asset value of an aquatic organism group is stored in association with an aquaculturist identifier for identifying an aquaculturist or an enclosure identifier for identifying an enclosure;
> a finance related information acquiring unit that acquires finance related information regarding finance, using the asset value stored in the asset value storage unit; and
> a finance related information output unit that outputs the finance related information.

**15.** The finance related information output apparatus according to claim 14, further comprising:

> an aquaculturist information storage unit in which aquaculturist information regarding an aquaculturist of an aquatic organism group is stored,
> wherein the finance related information acquiring unit acquires finance related information, using the asset value and the aquaculturist information.

**16.** The finance related information output apparatus according to claim 14 or 15, further comprising:

> a risk factor information storage unit in which one or more pieces of risk factor information are stored, the risk factor information being a factor that increases or decreases a risk that a state in which insurance money is paid out for an aquatic organism group arises,
> wherein the finance related information acquiring unit acquires insurance information, also using the one or more pieces of risk factor information.

**17.** A damage amount output apparatus comprising:

> an aquaculturist information storage unit in which one or more pieces of aquaculturist information containing an aquaculturist identifier for identifying an aquaculturist or an enclosure identifier for identifying an enclosure, and scale information for specifying a scale of an enclosure are stored, the aquaculturist information being information regarding an aquaculturist of an aquatic organism group;
> a reimbursement unit price storage unit in which reimbursement unit price information for specifying a damage amount per unit amount of an enclosure is stored;
> an instruction accepting unit that accepts a damage amount calculation instruction containing an aquaculturist identifier or an enclosure identifier;
> a scale acquiring unit that acquires scale information paired with the aquaculturist identifier or the enclosure identifier contained in the damage amount calculation instruction, from the aquaculturist information storage unit;
> a damage amount acquiring unit that acquires a damage amount of the aquaculturist identified with the aquaculturist identifier or the enclosure identified with the enclosure identifier contained in the damage amount calculation instruction, using the reimbursement unit price information and the scale information acquired by the scale acquiring unit; and
> a damage amount output unit that outputs the damage amount acquired by the damage amount acquiring unit.

**18.** The damage amount output apparatus according to claim 17,
wherein one or more pieces of unit price management information containing a factor condition that is a condition regarding risk factor information, and reimbursement unit price information are stored in the reimbursement unit price storage unit,
the damage amount output apparatus further comprises:

a risk factor accepting unit that accepts one or more pieces of risk factor information; and
a reimbursement unit price acquiring unit that acquires reimbursement unit price information paired with a factor condition that matches the one or more pieces of risk factor information accepted by the risk factor accepting unit, and

the reimbursement unit price information in the reimbursement unit price storage unit is the reimbursement unit price information acquired by the reimbursement unit price acquiring unit.

19. The damage amount output apparatus according to claim 17 or 18, further comprising:

an enclosure image storage unit in which one or more enclosure images obtained by capturing images of an enclosure are stored; and
a presence determining unit that determines whether or not there is an enclosure, using one or more enclosure images,
wherein the damage amount output apparatus performs processing that differs according to a determination result of the presence determining unit.

20. The damage amount output apparatus according to claim 17 or 18, further comprising:

an operation determining unit that determines whether or not an operation on an enclosure is performed by an aquaculturist,
wherein the damage amount output apparatus performs processing that differs according to a determination result of the presence determining unit.

21. The damage amount output apparatus according to claim 20, wherein the operation determining unit determines whether or not an operation on an enclosure is performed by an aquaculturist, using an image obtained by capturing an image of the enclosure.

22. The damage amount output apparatus according to claim 20, further comprising:

a positional information receiving unit that receives one or more pieces of positional information corresponding to an aquaculturist,
wherein the operation determining unit determines whether or not an operation on an enclosure is performed by an aquaculturist, using the one or more pieces of positional information.

23. The damage amount output apparatus according to any one of claims 17 to 20, further comprising:

a damage occurrence determining unit that determines whether or not a damage has occurred in an enclosure,
wherein the damage amount output unit outputs the damage amount only in a case in which the damage occurrence determining unit determines that a damage has occurred.

24. The damage amount output apparatus according to claim 23, wherein the damage occurrence determining unit determines whether or not a damage has occurred in an enclosure, using one or more images obtained by capturing images of the enclosure.

25. The damage amount output apparatus according to claim 23, further comprising:

a weather information accepting unit that accepts weather information regarding weather,
wherein the damage occurrence determining unit determines whether or not a damage has occurred in an enclosure, using the weather information.

26. An information processing method realized using an aquatic organism group information accepting unit, an asset value acquiring unit, and an asset value output unit, comprising:

an aquatic organism group information accepting step of the aquatic organism group information accepting unit accepting aquatic organism group information containing one or at least two pieces of information out of food information regarding food given to an aquatic organism group including at least two culture targets, and size information regarding a size of the culture targets;
an asset value acquiring step of the asset value acquiring unit acquiring an asset value of the aquatic organism group, using the aquatic organism group information; and
an asset value output step of the asset value output unit outputting the asset value.

27. An information processing method realized using an insurance information acquiring unit and an insurance information output unit, comprising:

an insurance information acquiring step of the insurance information acquiring unit acquiring insurance information regarding insurance, using the asset value output by the asset value output apparatus according to any one of claims 1 to 8; and
an insurance information output step of the insurance information output unit outputting the insurance information.

28. An information processing method realized using an asset value storage unit in which an asset value of an aquatic organism group is stored in association with an aquaculturist identifier for identifying an aquaculturist or an enclosure identifier for identifying an enclosure, a finance related information acquiring unit, and a finance related information output unit, comprising:

a finance related information acquiring unit of the finance related information acquiring unit acquiring finance related information regarding finance, using the asset value stored in the asset value storage unit; and
a finance related information output unit of the finance related information output unit outputting the finance related information.

29. An information processing method realized using: an aquaculturist information storage unit in which one or more pieces of aquaculturist information containing an aquaculturist identifier for identifying an aquaculturist or an enclosure identifier for identifying an enclosure, and scale information for specifying a scale of an enclosure are stored, the aquaculturist information being information regarding an aquaculturist of an aquatic organism group; a reimbursement unit price storage unit in which reimbursement unit price information for specifying a damage amount per unit amount of an enclosure is stored; an instruction accepting unit; a scale acquiring unit; a damage amount acquiring unit; and a damage amount output unit, comprising:

an instruction accepting step of the instruction accepting unit accepting a damage amount calculation instruction containing an aquaculturist identifier or an enclosure identifier;
a scale acquiring step of the scale acquiring unit acquiring scale information paired with the aquaculturist identifier or the enclosure identifier contained in the damage amount calculation instruction, from the aquaculturist information storage unit;
a damage amount acquiring step of the damage amount acquiring unit acquiring a damage amount of the aquaculturist identified with the aquaculturist identifier or the enclosure identified with the enclosure identifier contained in the damage amount calculation instruction, using the reimbursement unit price information and the scale information acquired by the scale acquiring unit; and
a damage amount output step of the damage amount output unit outputting the damage amount acquired by the damage amount acquiring unit.

30. A program for causing a computer to function as:

an aquatic organism group information accepting unit that accepts aquatic organism group information containing one or at least two pieces of information out of food information regarding food given to an aquatic organism group including at least two culture targets, and size information regarding a size of the culture targets;
an asset value acquiring unit that acquires an asset value of the aquatic organism group, using the aquatic organism group information; and
an asset value output unit that outputs the asset value.

31. A program for causing a computer to function as:

an insurance information acquiring unit that acquires insurance information regarding insurance, using the asset value output by the asset value output apparatus according to any one of claims 1 to 8; and

an insurance information output unit that outputs the insurance information.

32. A program for causing a computer capable of accessing an asset value storage unit in which an asset value of an aquatic organism group is stored in association with an aquaculturist identifier for identifying an aquaculturist or an enclosure identifier for identifying an enclosure, to function as:

> a finance related information acquiring unit that acquires finance related information regarding finance, using the asset value stored in the asset value storage unit; and
> a finance related information output unit that outputs the finance related information.

33. A program for causing a computer capable of accessing: an aquaculturist information storage unit in which one or more pieces of aquaculturist information containing an aquaculturist identifier for identifying an aquaculturist or an enclosure identifier for identifying an enclosure, and scale information for specifying a scale of an enclosure are stored, the aquaculturist information being information regarding an aquaculturist of an aquatic organism group; and a reimbursement unit price storage unit in which reimbursement unit price information for specifying a damage amount per unit amount of an enclosure is stored, to function as:

> an instruction accepting unit that accepts a damage amount calculation instruction containing an aquaculturist identifier or an enclosure identifier;
> a scale acquiring unit that acquires scale information paired with the aquaculturist identifier or the enclosure identifier contained in the damage amount calculation instruction, from the aquaculturist information storage unit;
> a damage amount acquiring unit that acquires a damage amount of the aquaculturist identified with the aquaculturist identifier or the enclosure identified with the enclosure identifier contained in the damage amount calculation instruction, using the reimbursement unit price information and the scale information acquired by the scale acquiring unit; and
> a damage amount output unit that outputs the damage amount acquired by the damage amount acquiring unit.

**FIG.1**

**FIG.2**

**FIG.3**

**FIG.4**

Start

① →

S501 ~ **Asset value output instruction accepted?** N →

S509 ~ **Image, etc. received?** N →

S511 ~ **Food information, etc. received?** N →

S502 ~ ↓Y
Acquire aquaculturist identifier

S510 ~ ↓Y
Accumulate images

S512 ~ ↓Y
Accumulate food information

S503 ~ ↓
i←1

①

①

S504 ~ **Is there i$^{th}$ enclosure identifier?** N →

S507 ~ ↓
Acquire asset value of aquaculturist

S505 ~ ↓Y
Acquire enclosure asset value

S508 ~ ↓
Output asset value

S506 ~ ↓
i←i+1

①

## FIG.5

```
         ╭─────────────────────╮
         │  Enclosure asset value  │
         │  acquiring processing   │
         ╰─────────────────────╯
S601 ╲            ↓
      ┌────────────────────┐
      │  Acquire enclosure  │
      │     identifier      │
      └────────────────────┘
S602 ╲            ↓
      ┌────────────────────┐
      │ Acquire one or more │
      │       images        │
      └────────────────────┘
S603 ╲            ↓
      ┌────────────────────┐
      ││  Acquire size     ││
      ││information, etc.  ││
      └────────────────────┘
S604 ╲            ↓
      ┌────────────────────┐
      │    Acquire type     │
      │    information      │
      └────────────────────┘
S605 ╲            ↓
      ┌────────────────────┐
      │   Acquire weight    │
      └────────────────────┘
S606 ╲            ↓
      ┌────────────────────┐
      │Acquire food information│
      └────────────────────┘
S607 ╲            ↓
      ┌────────────────────┐
      │  Acquire first asset │
      │    value through     │
      │    cost approach     │
      └────────────────────┘
S608 ╲            ↓
      ┌────────────────────┐
      │ Acquire second asset │
      │    value through     │
      │   market approach    │
      └────────────────────┘
S609 ╲            ↓
      ┌────────────────────┐
      │  Acquire asset value │
      │    of enclosure      │
      └────────────────────┘
                  ↓
         ╭─────────────────────╮
         │       Return        │
         ╰─────────────────────╯
```

# FIG.6

```
        ┌─────────────────────────┐
        │   Size information, etc. │
        │   acquiring processing   │
        └─────────────────────────┘
S701 ↘            │
    ┌─────────────────────────┐
    │     Recognize object     │
    └─────────────────────────┘
S702 ↘            │
    ┌─────────────────────────┐
    │          i←1             │
    └─────────────────────────┘
                  │
S703 ↘           ▼
        ╱─────────────────╲          N
       ╱  Is there iᵗʰ object? ╲──────────────┐
       ╲                   ╱     S707 ↘       ▼
        ╲─────────────────╱    ┌──────────────────────┐
                  │ Y          │ Acquire representative│
S704 ↘           ▼            │  value of each type   │
        ╱─────────────────╲    │       of size         │
       ╱  Condition matched? ╲  N └──────────────────────┘
       ╲                   ╱────┐  S708 ↘       │
        ╲─────────────────╱    │      ┌──────────────────┐
                  │ Y          │      │  Acquire number   │
S705 ↘           ▼            │      └──────────────────┘
    ┌─────────────────────┐   │                 │
    │   Acquire size      │   │                 ▼
    │   information       │   │        ┌──────────────────┐
    └─────────────────────┘   │        │      Return       │
S706 ↘           │ ◄──────────┘        └──────────────────┘
    ┌─────────────────────┐
    │       i←i+1          │
    └─────────────────────┘
                  │
                  └──────────────┘
```

**FIG.7**

**FIG.8**

| Aquaculturist identifier | Enclosure identifier | Type information | Feed price | Number of young fish | Positional information | Number of dead fish | ... |
|---|---|---|---|---|---|---|---|
| b01 | c01 | k01 | 500 | 350 | $(x_{11}, y_{11})$ $(x_{12}, y_{12})$ | 0 | ... |
| | c02 | k02 | 600 | 500 | $(x_{21}, y_{21})$ $(x_{22}, y_{22})$ | 5 | ... |
| b02 | c03 | k03 | 400 | 700 | $(x_{31}, y_{31})$ $(x_{32}, y_{32})$ | 20 | ... |
| | c04 | | 400 | 600 | $(x_{41}, y_{41})$ $(x_{42}, y_{42})$ | 38 | ... |
| b03 | c05 | k01 | 550 | 450 | $(x_{51}, y_{51})$ $(x_{52}, y_{52})$ | 60 | ... |
| ⋮ | ⋮ | ⋮ | ⋮ | ⋮ | ⋮ | ⋮ | ⋮ |

## FIG.9

| ID | Type information | Feed cost proportion |
|---|---|---|
| 1 | k01 | 0.8 |
| 2 | k02 | 0.6 |
| 3 | k03 | 0.7 |
| ⋮ | ⋮ | ⋮ |

**FIG.10**

| ID | Type information | Market price per unit weight |
|----|------------------|-----------------------------|
| 1 | k01 | 100 |
| 2 | k02 | 110 |
| 3 | k03 | 90 |
| ⋮ | ⋮ | ⋮ |

# FIG.11

| ID | Aquaculturist identifier | Enclosure identifier | Time information | Supplied food amount information | Eaten food amount information | Remaining amount information | Feeding time (min) | ... |
|---|---|---|---|---|---|---|---|---|
| ⋮ | ⋮ | ⋮ | ⋮ | ⋮ | ⋮ | ⋮ | ⋮ | ⋮ |
| 29 | b01 | c01 | 2018/6/19 8:00 | 100 | 90 | 2500 | 20 | ... |
| ⋮ | ⋮ | ⋮ | ⋮ | ⋮ | ⋮ | ⋮ | ⋮ | ⋮ |
| 57 | b01 | c02 | 2018/6/19 8:00 | 120 | 110 | 1800 | 30 | ... |
| ⋮ | ⋮ | ⋮ | ⋮ | ⋮ | ⋮ | ⋮ | ⋮ | ⋮ |
| 112 | b01 | c02 | 2018/6/19 12:00 | 100 | 90 | 7250 | 30 | ... |
| ⋮ | ⋮ | ⋮ | ⋮ | ⋮ | ⋮ | ⋮ | ⋮ | ⋮ |
| 125 | b01 | c01 | 2018/6/19 12:00 | 80 | 70 | 120 | 20 | ... |
| ⋮ | ⋮ | ⋮ | ⋮ | ⋮ | ⋮ | ⋮ | ⋮ | ⋮ |

# FIG.12

| Aquaculturist identifier | Enclosure identifier | Size information | | | | Weight | Total amount of food supplied | Total amount of food eaten | Number of fish | ... |
|---|---|---|---|---|---|---|---|---|---|---|
| | | Fork length | Total length | Body height | Body width | | | | | |
| b01 | c01 | $L_{11}$ | $L_{21}$ | $H_{11}$ | $D_{11}$ | $W_{11}$ | $TF_{11}$ | $TI_{11}$ | 350 | ... |
| | c02 | $L_{12}$ | $L_{22}$ | $H_{12}$ | $D_{12}$ | $W_{12}$ | $TF_{12}$ | $TI_{12}$ | 495 | ... |
| b02 | c03 | $L_{13}$ | $L_{23}$ | $H_{13}$ | $D_{13}$ | $W_{13}$ | $TF_{13}$ | $TI_{13}$ | 680 | ... |
| | c04 | $L_{14}$ | $L_{24}$ | $H_{14}$ | $D_{14}$ | $W_{14}$ | $TF_{14}$ | $TI_{14}$ | 562 | ... |
| b03 | c05 | $L_{15}$ | $L_{25}$ | $H_{15}$ | $D_{15}$ | $W_{15}$ | $TF_{15}$ | $TI_{15}$ | 390 | ... |
| ⋮ | ⋮ | ⋮ | ⋮ | ⋮ | ⋮ | ⋮ | ⋮ | ⋮ | ⋮ | ⋮ |

**FIG.13**

The asset value of fish with the aquaculturist identifier "b01" is "25,800,000 yen".

Breakdown

(1) The asset value of fish in the enclosure with the enclosure identifier "c01" is "10,000,000 yen".

(2) The asset value of fish in the enclosure with the enclosure identifier "c02" is "15,800,000 yen".

**FIG.14**

**FIG.15**

**FIG.16**

Start

S1701 — Insurance information output instruction accepted ? — N → S1708 — Information accepted? — N

S1702 — Y — Acquire enclosure identifier

S1709 — Y — Accumulate information

S1703 — Acquire asset value

①

S1704 — Acquire aquaculturist rank

S1705 — Acquire risk rank

S1706 — Acquire insurance information

S1707 — Output insurance information

**FIG.17**

| Aquaculturist identifier | Aquaculturist rank | Enclosure identifier | Asset value | Risk rank | Sales | Average yield | Number of accidents | Total damage | System introduction rate | System usage inforamation | | ... |
| | | | | | | | | | | Number of times that monitoring was performed | Number of times that app was started | |
|---|---|---|---|---|---|---|---|---|---|---|---|---|
| b01 | 4 | c01 | V1 | 3 | S1 | Y1 | 1 | 15,000,000 yen | R1 | 51 | 108 | ... |
| | | c02 | V2 | 1 | | | | | | | | |
| b02 | 3 | c03 | V3 | 2 | S2 | Y2 | 0 | 0 | R2 | 21 | 27 | ... |
| | | c04 | V4 | 4 | | | | | | | | |
| ⋮ | ⋮ | ⋮ | ⋮ | ⋮ | ⋮ | ⋮ | ⋮ | ⋮ | ⋮ | ⋮ | ⋮ | ⋮ |

**FIG.18**

| Aquaculturist identifier | Enclosure identifier | Nature information | | | Surroundings information | | | Operation information | | Facilities information | | |
|---|---|---|---|---|---|---|---|---|---|---|---|---|
| | | Hours of daylight | Rainfall amount | ··· | Seawater temperature | Transparency | ··· | Number of enclosure operations (times/day) | ··· | System introduction rate | ··· | ··· |
| b01 | c01 | 13:12 | r1 | ··· | st1 | tr1 | ··· | 10 | ··· | R1 | ··· | ··· |
| | c02 | 13:08 | r2 | ··· | st2 | tr2 | ··· | 6 | ··· | | | |
| b02 | c03 | 11:32 | r3 | ··· | st3 | tr3 | ··· | 3 | ··· | R2 | ··· | ··· |
| | c04 | 11:30 | r4 | ··· | st4 | tr4 | ··· | 4 | ··· | | | |
| ⋮ | ⋮ | ⋮ | ⋮ | ⋮ | ⋮ | ⋮ | ⋮ | ⋮ | ⋮ | ⋮ | ⋮ | ⋮ |

**FIG.19**

| ID | Asset value | Insurance information | | |
|---|---|---|---|---|
| | | Insurance rate | Insurance amount | Insurance fee |
| 1 | $x_1 <= V < x_2$ | $a_1$ | $b_1$ | $c_1$ |
| 2 | $x_2 <= V < x_3$ | $a_2$ | $b_2$ | $c_2$ |
| 3 | $x_3 <= V < x_4$ | $a_3$ | $b_3$ | $c_3$ |
| ⋮ | ⋮ | ⋮ | ⋮ | ⋮ |

# FIG.20

| Aquaculturist rank | Correction information | | |
|---|---|---|---|
| | Insurance rate | Insurance amount | Insurance fee |
| 1 | -8% | -10% | +5% |
| 2 | -4% | -5% | +3% |
| 3 | +-0% | +-0% | +-0% |
| 4 | +4% | +5% | -3% |
| 5 | +8% | +10% | -5% |

**FIG.21**

| Risk rank | Correction information | | |
| --- | --- | --- | --- |
| | Insurance rate | Insurance amount | Insurance fee |
| 1 | +10% | +20% | -5% |
| 2 | +5% | +10% | -3% |
| 3 | +-0% | +-0% | +-0% |
| 4 | -5% | -10% | +3% |
| 5 | -10% | -20% | +5% |

**FIG.22**

**FIG.23**

6 ∿ Finance related information output apparatus

61 ∿

Storage unit

511 ∿
Aquaculturist information
storage unit

512 ∿
Factor information
storage unit

611
Asset value storage unit

62 ∿
Accepting unit

63
Processing unit

631
Finance related information
acquiring unit

64 ∿
Output unit

641 ∿
Finance related
informtaion output unit

531
Rank acquiring part

532
Insurance information
acquiring part

6311
Loan information
acquiring part

6312
Investment information
acquiring part

**FIG.24**

Start

S2501 — Finance related information output instruction accepted?

N →

S2508 — Information accepted?

N

Y ↓

S2502 — Acquire enclosure identifier

S2509 — Accumulate information

①

S2503 — Acquire asset value

S2504 — Acquire aquaculturist rank

S2505 — Acquire risk rank

S2506 — Acquire finance related information

S2507 — Output finance related information

**FIG.25**

| ID | Asset value | Loan amount | Investment amount |
|---|---|---|---|
| 1 | $x_1 <= V < x_2$ | $d_1$ | $e_1$ |
| 2 | $x_2 <= V < x_3$ | $d_2$ | $e_2$ |
| 3 | $x_3 <= V < x_4$ | $d_3$ | $e_3$ |
| ⋮ | ⋮ | ⋮ | ⋮ |

# FIG.26

| Aquaculturist rank | Correction information | |
| :---: | :---: | :---: |
| | Loan amount | Investment amount |
| 1 | -10% | -20% |
| 2 | -5% | -10% |
| 3 | +-0% | +-0% |
| 4 | +5% | +10% |
| 5 | +10% | +20% |

# FIG.27

| Risk rank | Correction information | |
|:---:|:---:|:---:|
| | Loan amount | Investment amount |
| 1 | +10% | +20% |
| 2 | +5% | +10% |
| 3 | +-0% | +-0% |
| 4 | -5% | -10% |
| 5 | -10% | -20% |

# FIG.28

7 — Damage amount output apparatus

71 — Storage unit

511 — Aquaculturist information storage unit

711 — Reimbursement unit price storage unit

712 — Enclosure image storage unit

72 — Accepting unit

721 — Risk factor accepting unit

722 — Instruction accepting unit

723 — Positional information receiving unit

724 — Environmental information accepting unit

73 — Processing unit

731 — Presence determining unit

732 — Operation determining unit

733 — Damage occurrence determining unit

734 — Scale acquiring unit

735 — Reimbursement unit price acquiring unit

736 — Damage amount acquiring unit

74 — Output unit

741 — Presence determination result output unit

742 — Operation determination result output unit

743 — Damage occurrence determination result output unit

744 — Damage amount output unit

**FIG.29**

```
                    ┌──────────────┐
                    │    Start     │
                    └──────────────┘
   ①                        │
S3001                                      S3017
   ╱╲                                        ╱╲
  ╱  ╲  Damage                              ╱  ╲  Positional
 ╱    ╲ amount calculation   N             ╱    ╲ information etc.   N
 ╲    ╱ instruction accepted ──→          ╲    ╱ received?          ──→
  ╲  ╱  ?                                   ╲  ╱
   ╲╱                                        ╲╱
    │ Y                                        │ Y
S3002                                      S3018
┌──────────────┐                        ┌──────────────────┐
│Acquire enclosure│                     │Accumulate positional│
│  identifier    │                      │ information etc.  │
└──────────────┘                        └──────────────────┘
    │                                          │
S3003                                          ①
┌──────────────┐
│Enclosure presence│
│  determination │
│   processing   │
└──────────────┘
    │
S3004
   ╱╲
  ╱  ╲  Is there         N
 ╱    ╲ enclosure?      ──→         S3011
 ╲    ╱                              ┌──────────────┐
  ╲  ╱                               │Acquire error │
   ╲╱                                │   message    │
    │ Y                              └──────────────┘
S3005                                      │
┌──────────────┐                     S3012
│Operation execution│                 ┌──────────────┐
│  determination │                    │ Output error │
│   processing   │                    │   message    │
└──────────────┘                      └──────────────┘
    │                                      │
S3006                                      ①
   ╱╲
  ╱  ╲  Operation        N
 ╱    ╲ performed?      ──→         S3013
 ╲    ╱                              ┌──────────────┐
  ╲  ╱                               │Acquire error │
   ╲╱                                │   message    │
    │ Y                              └──────────────┘
S3007                                      │
┌──────────────┐                     S3014
│Damage occurrence│                   ┌──────────────┐
│  determination │                    │ Output error │
│   processing   │                    │   message    │
└──────────────┘                      └──────────────┘
    │                                      │
S3008                                      ①
   ╱╲
  ╱  ╲  Any damage       N
 ╱    ╲ occurred?       ──→         S3015
 ╲    ╱                              ┌──────────────┐
  ╲  ╱                               │Acquire error │
   ╲╱                                │   message    │
    │ Y                              └──────────────┘
S3009                                      │
┌──────────────┐                     S3016
│Acquire damage │                     ┌──────────────┐
│   amount      │                     │ Output error │
└──────────────┘                      │   message    │
    │                                 └──────────────┘
S3010                                      │
┌──────────────┐                           ①
│Output damage  │
│ amount, etc.  │
└──────────────┘
    │
    ①
```

# FIG.30

**FIG.31**

```
        ╭─────────────────────────╮
        │   Enclosure presence    │
        │ determination processing│
        ╰─────────────────────────╯
                    │
 S3201 ╮            ▼
        ┌──────────────────────┐
        │  Acquire one or more │
        │   enclosure images   │
        │ paired with enclosure│
        │      identifier      │
        └──────────────────────┘
 S3202 ╮            │
        ┌──────────────────────┐
        │         i←1          │
        └──────────────────────┘
                    │
        ┌──────────▶│
        │           ▼
 S3203 ╮          ◇◇◇◇◇◇
        │       ◇          ◇
        │     ◇  Is there i-th ◇   N
        │    ◇   enclosure    ◇───────┐
        │     ◇    image?    ◇        │ S3206 ╮
        │       ◇          ◇          ▼
        │          ◇◇◇◇◇◇      ┌────────────────────┐
 S3204 ╮     │Y                 │ Acquire determination│
        │     ▼                 │      result        │
        │  ┌──────────────┐     └────────────────────┘
        │  │Determine     │              │
        │  │enclosure     │              ▼
        │  │presence      │     ╭────────────────────╮
        │  └──────────────┘     │       Return       │
 S3205 ╮     │                  ╰────────────────────╯
        │     ▼
        │  ┌──────────────┐
        │  │    i←i+1     │
        │  └──────────────┘
        │     │
        └─────┘
```

**FIG.32**

**FIG.33**

Damage occurrence
determination processing

S3401
Acquire positional
information paired with
enclosure identifier

S3402
i←1

①

S3403
Is there i$^{th}$
environmental
information?

N → S3409
Determination
result "damage
occurred"?

S3404  Y
Acquire i$^{th}$
environmental
information in
predetermined period
in region corresponding
to positional information

S3405
Proper range?  Y

S3406  N
Determination result ←
damage occurred

S3407
Temporarily store risk
level and identifier of
i$^{th}$ environmental
information in
association with
each other

S3408
i←i+1

①

S3410  Y
Determination result ←
damage occurred

S3411
Determination result ←
damage occurred

N →

Return

FIG.34

Damage amount
acquiring processing

S3501 — Acquire reimbursement
unit price information
corresponding to
highest risk level

S3502 — Acquire scale
information paired with
enclosure identifier

S3503 — Calculate damage
amount

Return

**FIG.35**

| | Factor condition | | | Scale information | | | | | | |
|---|---|---|---|---|---|---|---|---|---|---|
| | | | | ··· | ··· | ··· | ··· | ··· | ··· | ··· |
| | Water temperature | Rainfall amount | ··· | ~10 | ~50 | ~100 | ~500 | ~1000 | ~5000 | ~100000 | ←Y2(m3) |
| | | | | ~50 | ~100 | ~500 | ~1000 | ~2000 | ~5000 | ~100000 | ←Y1(number of fish) |
| High risk | −0.1~ | ··· | ··· | ¥1,000 | ··· | ··· | ··· | ··· | ··· | ··· |
| | 0−5 | ··· | ··· | ¥800 | ··· | ··· | ··· | ··· | ··· | ··· |
| | 6−10 | ··· | ··· | ¥600 | ··· | ··· | ··· | ··· | ··· | ··· |
| | 11−15 | ··· | ··· | ¥200 | ··· | ··· | ··· | ··· | ··· | ··· |
| Proper value | 16−20 | ··· | ··· | · | ··· | ··· | ··· | ··· | ··· | ··· |
| | 20−25 | ··· | ··· | ¥200 | ··· | ··· | ··· | ··· | ··· | ··· |
| | 25−30 | ··· | ··· | ¥600 | ··· | ··· | ··· | ··· | ··· | ··· |
| High risk | 30~ | ··· | ··· | ¥800 | ··· | ··· | ··· | ··· | ··· | ··· |

**FIG.36**

EP 3 825 948 A1

**FIG.37**

FIG.38

**EP 3 825 948 A1**

## INTERNATIONAL SEARCH REPORT

International application No.

PCT/JP2019/028040

### A. CLASSIFICATION OF SUBJECT MATTER
Int.Cl. G06Q40/08(2012.01)i, A01K61/90(2017.01)i

According to International Patent Classification (IPC) or to both national classification and IPC

### B. FIELDS SEARCHED

Minimum documentation searched (classification system followed by classification symbols)
Int.Cl. G06Q10/00-99/00, A01K61/90

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>Y<br><br>A | 杉浦信也，養殖業における動産融資と事業性評価，養殖ビジネス 2017 年 12 月号，株式会社緑書房［オンライン］, December 2017 [retrieval date 09 October 2019], Internet: <https://www.ndk-abl.org/ducuments/12.20.pdf>, pp. 8-10, non-official translation (SUGIURA, Shinya, "Movable property financing and business evaluation in the aquaculture industry", Aqua Culture Business 2017 December, MIDORI SHOBO CO., LTD. [online]) | 1,8,14–15,26,28,30,32<br>27,9-13,16,27,31<br>17-25,29,33 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 October 2019 (09.10.2019) | 21 October 2019 (21.10.2019) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

91

**EP 3 825 948 A1**

**INTERNATIONAL SEARCH REPORT**

International application No.

PCT/JP2019/028040

C (Continuation).  DOCUMENTS CONSIDERED TO BE RELEVANT

| Category* | Citation of document, with indication, where appropriate, of the relevant passages | Relevant to claim No. |
|---|---|---|
| Y | 株式会社水土舎，平成 23 年度漁業金融円滑化調査検討等委託事業調査報告書，［オンライン］, March 2012 [retrieval date 09 October 2019], Internet: <http://www.maff.go.jp/j/budget/yosan_kansi/sikkou/tokutei_keihi/seika_h23/suisan_ippan/pdf/60100343_02.pdf>, pp. 53-55, non-official translation (SUIDOSHA KK, 2011 consigned project survey report, such as study on Fishery finance facilitation survey, [online]) | 2,6-7 |
| Y | 養殖魚、AI で計測，月刊 e・コロンブス，第 44 巻，東方通信社， 29 May 2018, p. 46, non-official translation ("Cultured fish, Measured with AI", Monthly e・Columbus, vol. 44, TOHO PRESS) | 3-4 |
| Y | JP 2003-250382 A (MATSUSHITA ELECTRIC WORKS, LTD.) 09 September 2003, paragraphs [0061], [0076], fig. 7 (Family: none) | 5 |
| Y | JP 2005-338115 A (SEIKO EPSON CORP.) 08 December 2005, paragraph [0014], fig. 3 (Family: none) | 5 |
| Y | JP 2006-72908 A (HITACHI, LTD.) 16 March 2006, paragraph [0019] (Family: none) | 9-13,16,27,31 |
| Y | JP 2002-149965 A (TOSHIBA CORP. et al.) 24 May 2002, paragraphs [0078]-[0091] (Family: none) | 9-13,16,27,31 |
| Y | JP 3-72201 A (BILCHINGR, H. F.) 27 March 1991, page 3, upper left column, line 17 to upper right column, line 1 (Family: none) | 9-13,16,27,31 |
| A | WO 2018/131480 A1 (NEC CORP.) 19 July 2018, entire text, all drawings (Family: none) | 17-25,29,33 |
| A | WO 2016/178268 A1 (HITACHI, LTD.) 10 November 2016, entire text, all drawings & US 2017/0287082 A1 | 17-25,29,33 |

Form PCT/ISA/210 (continuation of second sheet) (January 2015)

**REFERENCES CITED IN THE DESCRIPTION**

**Patent documents cited in the description**

- JP 2009122884 A